(19) Europäisches Patentamt
European Patent Office
Office européen des brevets

(11) **EP 3 522 537 A1**

(12) **EUROPEAN PATENT APPLICATION**
published in accordance with Art. 153(4) EPC

(43) Date of publication:
**07.08.2019 Bulletin 2019/32**

(51) Int Cl.:
**H04N 19/593** *(2014.01)*     **H04N 19/523** *(2014.01)*

(21) Application number: **17848609.8**

(22) Date of filing: **29.08.2017**

(86) International application number:
**PCT/JP2017/030859**

(87) International publication number:
**WO 2018/047668 (15.03.2018 Gazette 2018/11)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **12.09.2016  JP 2016177337**

(71) Applicant: **Sony Corporation
Tokyo 108-0075 (JP)**

(72) Inventor: **KONDO Kenji
Tokyo 108-0075 (JP)**

(74) Representative: **D Young & Co LLP
120 Holborn
London EC1N 2DY (GB)**

(54) **IMAGE PROCESSING DEVICE AND IMAGE PROCESSING METHOD**

(57)    The present disclosure relates to an image processing apparatus and an image processing method that make it possible to sufficiently enhance the accuracy of an intra BC prediction process.

An intra BC prediction section affine transforms a block decoded already in an image on the basis of motion vectors in a screen image of a plurality of vertices of a current block of the image to perform an affine transform intra BC prediction process for generating a prediction image of the current block. The present disclosure can be applied, for example, to an image encoding apparatus, an image decoding apparatus and so forth in which the technology of HEVC or the technology proposed by JVET is incorporated.

# FIG.15

**Description**

[Technical Field]

The present disclosure relates to an image processing apparatus and an image processing method, and particularly to an image processing apparatus and an image processing method that make it possible to sufficiently enhance the accuracy of an intra BC prediction process.

[Background Art]

An encoding apparatus that performs encoding by HEVC (High Efficiency Video Coding) performs an intra prediction process or an inter prediction process for a current block that is a block of an encoding target to generate a prediction block that is a prediction image of the current block. Then, the encoding apparatus orthogonally transforms prediction residues that are differences between the prediction block and the current block and quantizes the prediction residues to generate an encoded stream.

The encoded stream generated in this manner is dequantized and inverse orthogonally transformed by a decoding apparatus. Then, prediction residues obtained as a result of the inverse orthogonal transform are added to the prediction block to generate a decoded image of the current block.

In HEVC (High Efficiency Video Coding) version 1, as prediction modes of an intra prediction process, intra prediction modes called DC intra prediction, Planar intra prediction and Angular intra prediction are adopted.

Further, in HEVC-SCC (Screen Content Coding), as one of intra prediction processes, also an intra BC (Intra block copy) prediction process of referring to a region encoded already in a screen image as in an inter prediction process to generate a prediction block can be used.

However, in an intra BC prediction process of HEVC-SCC, only a parallel displacement is performed for a region encoded already in a screen image to generate a prediction block. Accordingly, the accuracy of a prediction block cannot be enhanced sufficiently.

Therefore, it has been invented to perform, in an intra BC prediction process, not only a parallel displacement but also rotation for a region encoded already in a screen image to generate a prediction block (for example, refer to NPL 1). In this case, not only a motion vector representative of a direction and a magnitude of a parallel displacement but also a rotation angle are included into an encoded stream. According to the technology disclosed in NPL 1, although not only a parallel displacement in a screen image but also a movement in a rotation direction can be compensated for, a variation in shape such as enlargement, reduction or skew cannot be compensated for. Accordingly, the accuracy of a prediction block cannot be enhanced sufficiently.

Meanwhile, by JVET (Joint Video Exploration Team) that explores next generation video encoding of ITU-T (International Telecommunication Union Telecommunication Standardization Sector), it has been proposed to perform an inter prediction process using affine transform (for example, refer to NPL 2). This makes it possible to compensate, upon inter prediction processing, for a parallel displacement and a movement in a rotation direction as well as a variation of a shape such as enlargement, reduction or skew between screen images to generate a prediction block.

[Citation List]

[Patent Literature]

[NPL 1]
Z. Zhang, V. Sze, "Rotate Intra Block Copy for Still Image Coding," IEEE International Conference on Image Processing (ICIP), September 2015
[NPL 2]
Feng Zou, "Improved affine motion prediction (JVET-C0062)," JVET of ITU-T SG16 WP3 and ISO/IEC JTC1/SC29/WG11, 26 May-1 June 2016

[Summary]

[Technical Problem]

However, it has not been invented to perform an intra BC prediction process using affine transform. Accordingly, upon intra BC prediction processing, it is impossible to compensate for a variation of a shape such as enlargement, reduction or skew in a screen image to generate a prediction block. Therefore, the accuracy of an intra BC prediction process cannot be enhanced sufficiently.

The present disclosure has been made in view of such a situation as described above and makes it possible to sufficiently enhance the accuracy of an intra BC prediction process.

[Solution to Problem]

An image processing apparatus of one aspect of the present disclosure is an image processing apparatus including an intra BC prediction section configured to affine transform a block decoded already in an image based on motion vectors in a screen image of a plurality of vertices of a current block of the image to perform an affine transform intra BC prediction process for generating a prediction image of the current block.

An image processing method of the one aspect of the present disclosure corresponds to the image processing apparatus of the one aspect of the present disclosure.

In the one aspect of the present disclosure, a block decoded already in an image is affine transformed based on motion vectors in a screen image of a plurality of vertices of a current block of the image to perform an affine transform intra BC prediction process for generating a prediction image of the current block.

It is to be noted that the image processing apparatus of the one aspect of the present disclosure can be implemented by causing a computer to execute a program.

Further, in order to implement the image processing apparatus of the one aspect of the present disclosure, the program for being executed by a computer can be provided by transmission through a transmission medium or by recording the program on a recording medium.

[Advantageous Effects of Invention]

According to the one aspect of the present disclosure, an intra BC prediction process can be performed. Further, according to the one aspect of the present disclosure, the accuracy of the intra BC prediction process can be enhanced sufficiently.

It is to be noted that the advantageous effects described here are not necessarily restrictive and may be some advantageous effects described in the present disclosure.

[Brief Description of Drawings]

FIG. 1 is a view illustrating formation of a CU.
FIG. 2 is a block diagram depicting a configuration example of a first embodiment of an image encoding apparatus.
FIG. 3 is a block diagram depicting a configuration example of a prediction section of FIG. 2.
FIG. 4 is a view illustrating a motion vector of fractional pixel accuracy of one point in a screen image.
FIG. 5 is a flow chart illustrating an image encoding process of the image encoding apparatus of FIG. 2.
FIG. 6 is a flow chart illustrating a setting process of SPS.IntraBCWithSubPelflag.
FIG. 7 is a flow chart illustrating details of a prediction process of FIG. 5.
FIG. 8 is a flow chart illustrating details of an intra BC prediction cost calculation process of FIG. 7.
FIG. 9 is a flow chart illustrating details of an optimum intra prediction determination process of FIG. 7.
FIG. 10 is a block diagram depicting a configuration example of a first embodiment of an image decoding apparatus.
FIG. 11 is a block diagram depicting a configuration example of a prediction section of FIG. 10.
FIG. 12 is a flow chart illustrating an image decoding process of the image decoding apparatus of FIG. 10.
FIG. 13 is a flow chart illustrating details of an intra prediction image generation process of FIG. 12.
FIG. 14 is a block diagram depicting a configuration example of a prediction section in a second embodiment of the image encoding apparatus.
FIG. 15 is a view illustrating motion vectors of fractional pixel accuracy of three vertices in a screen image.
FIG. 16 is a view illustrating compensation by an affine transform intra BC prediction process.
FIG. 17 is a view illustrating a method of affine transform.
FIG. 18 is a flow chart illustrating a setting process of SPS.IntraBCWithAffineflag in the second embodiment.
FIG. 19 is a flow chart illustrating an intra BC prediction cost calculation process in the second embodiment.
FIG. 20 is a flow chart illustrating an optimum intra prediction determination process in the second embodiment.
FIG. 21 is a block diagram depicting a configuration example of a prediction section in the second embodiment of the image decoding apparatus.
FIG. 22 is a flow chart illustrating an intra prediction image generation process in the second embodiment.

FIG. 23 is a flow chart illustrating a setting process of SPS.IntraBCWithSubPelflag and SPS.IntraBCWithAffineflag.

FIG. 24 is a view depicting an example of a relationship between a size of a PU and changeover between valid and invalid of an affine transform intra BC prediction process.

FIG. 25 is a block diagram depicting a configuration example of hardware of a computer.

FIG. 26 is a block diagram depicting an example of a schematic configuration of a television apparatus.

FIG. 27 is a block diagram depicting an example of a schematic configuration of a portable telephone set.

FIG. 28 is a block diagram depicting an example of a schematic configuration of a recording and reproduction apparatus.

FIG. 29 is a block diagram depicting an example of a schematic configuration of an imaging apparatus.

FIG. 30 is a block diagram depicting an example of a schematic configuration of a video set.

FIG. 31 is a block diagram depicting an example of a schematic configuration of a video processor.

FIG. 32 is a block diagram depicting another example of a schematic configuration of a video processor.

FIG. 33 is a block diagram depicting an example of a schematic configuration of a network system.

[Description of Embodiments]

In the following, a mode for carrying out the present disclosure (hereinafter referred to as embodiment) is described. It is to be noted that the description is given in the following order.

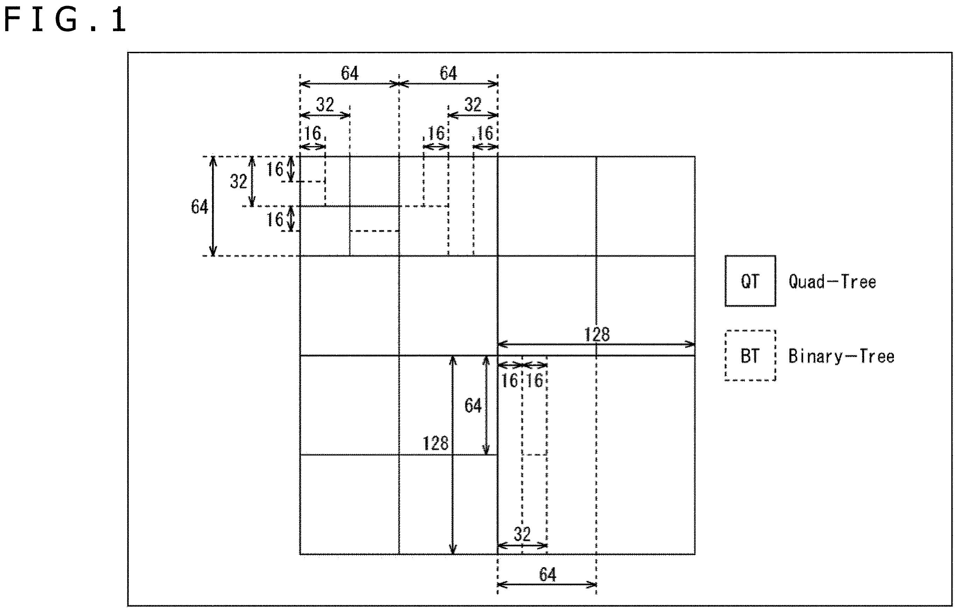

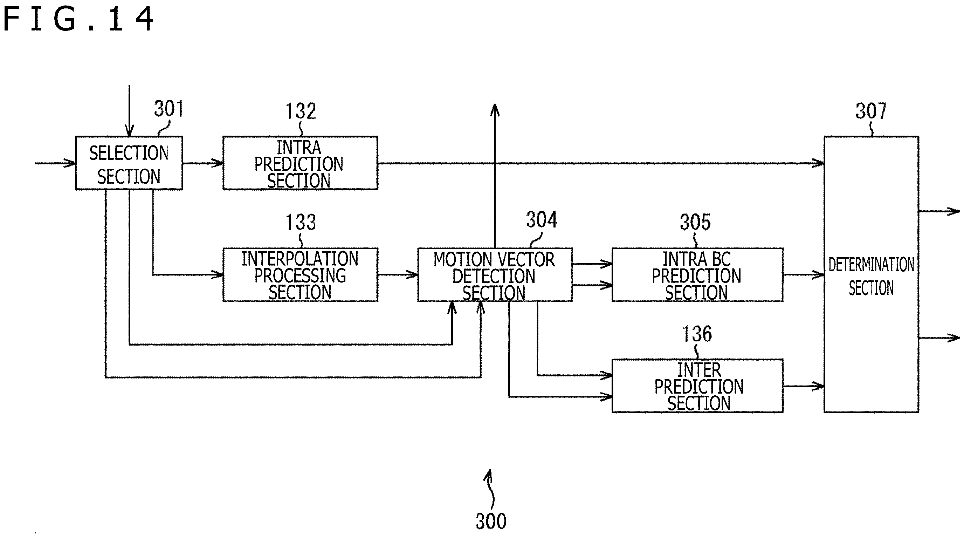

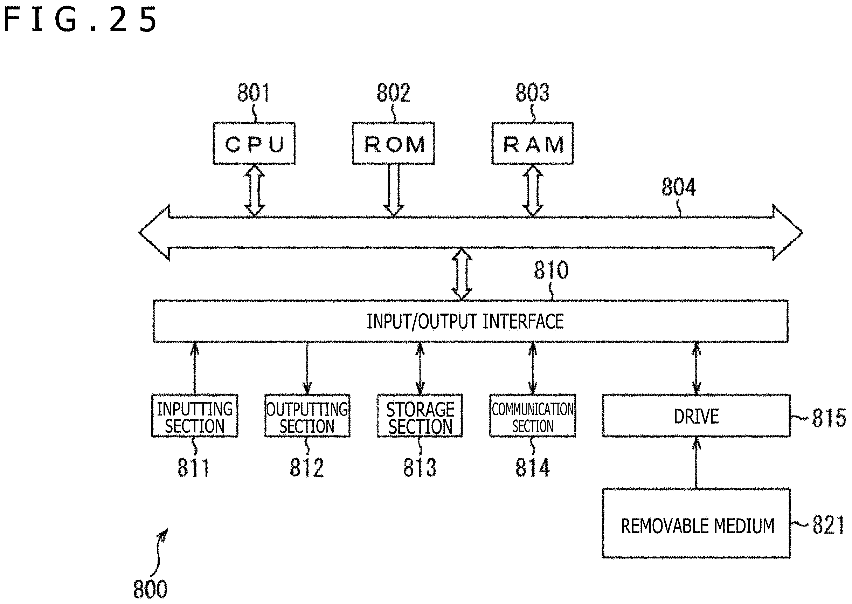

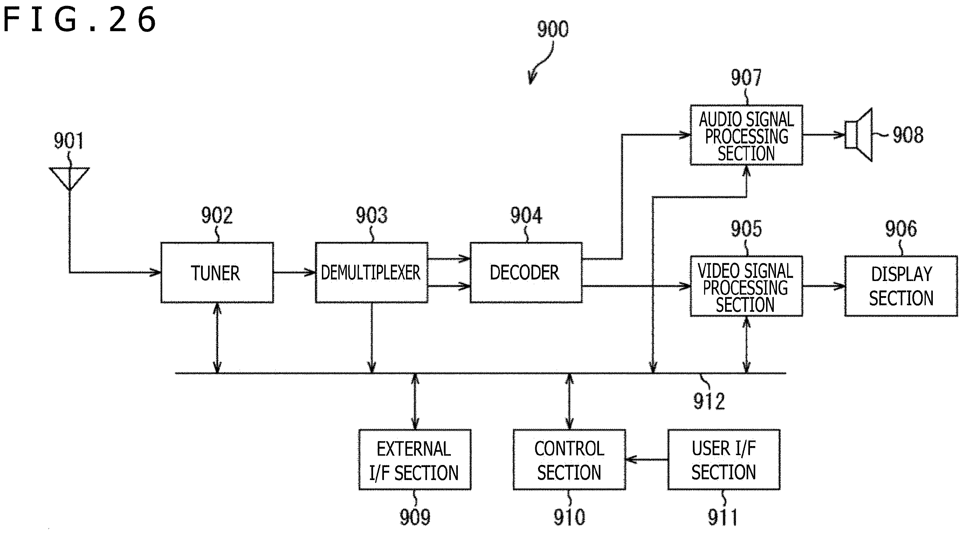

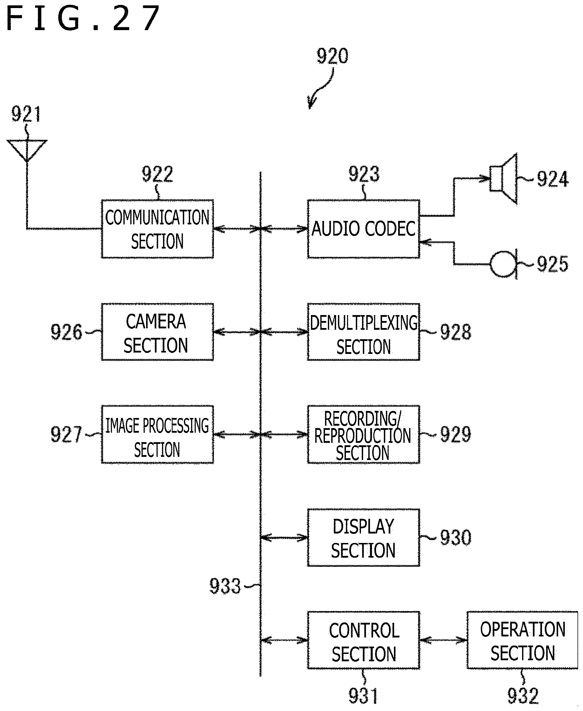

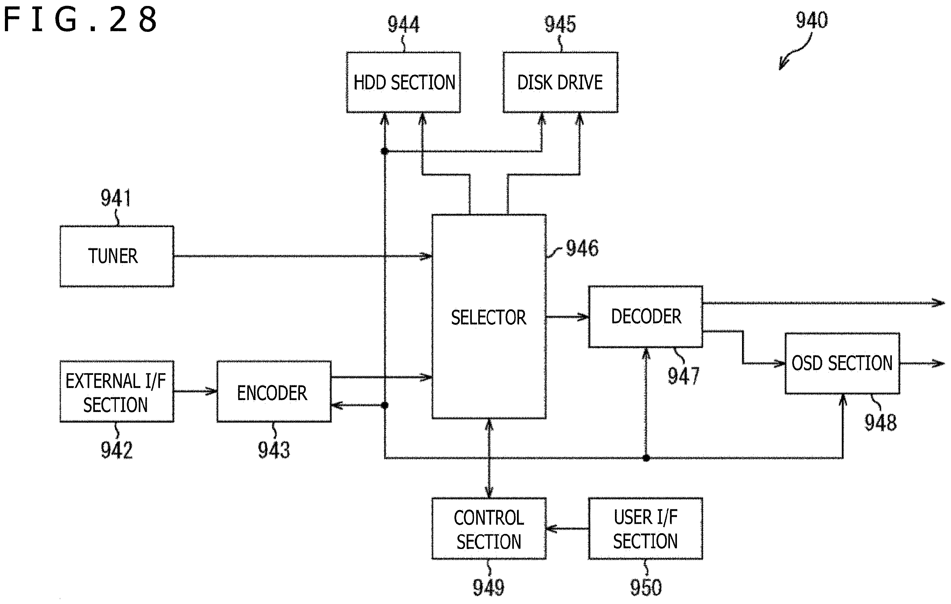

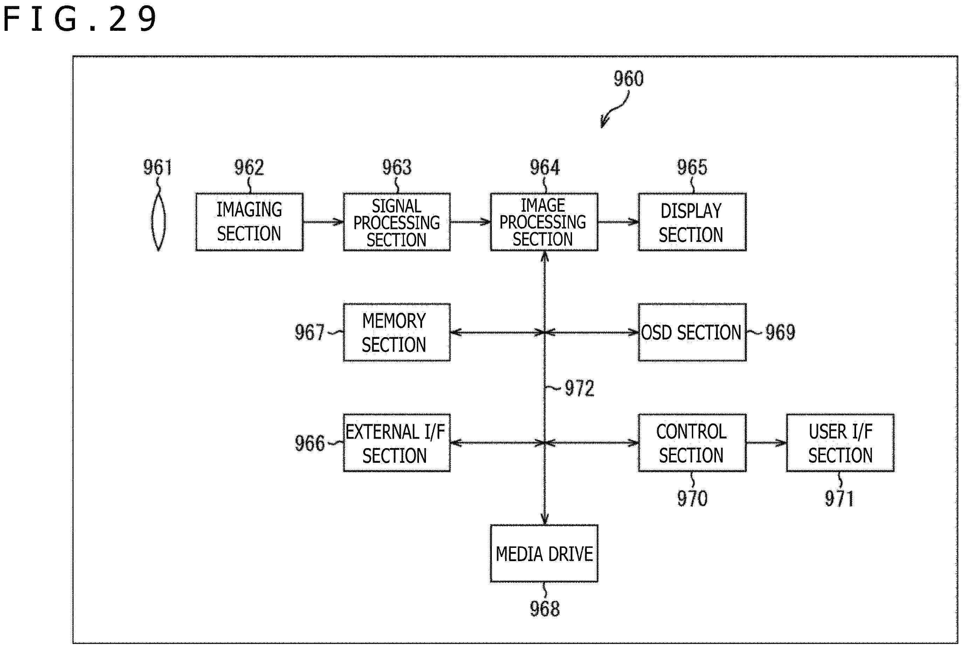

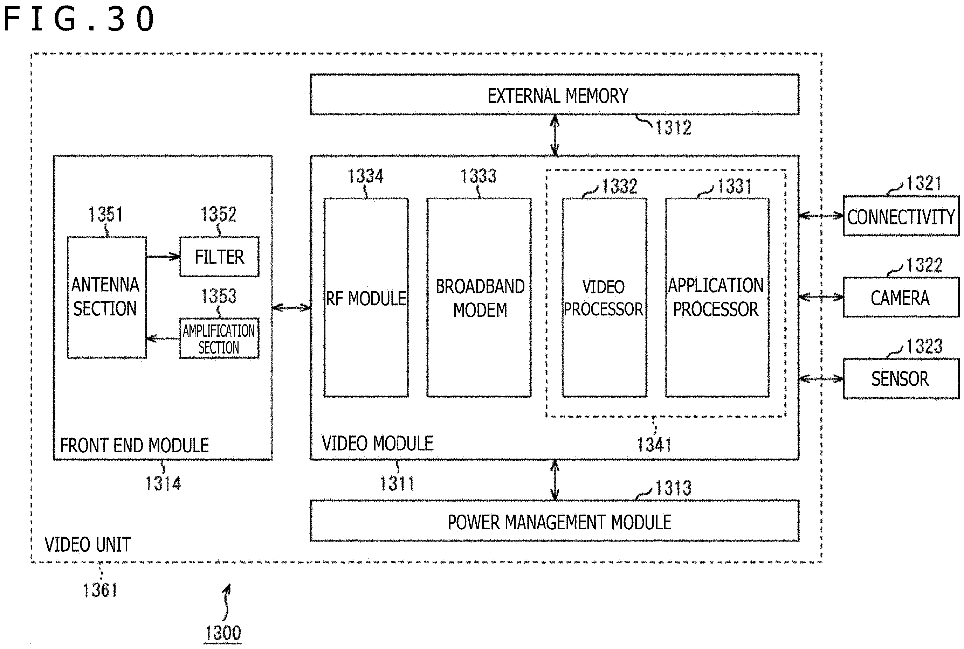

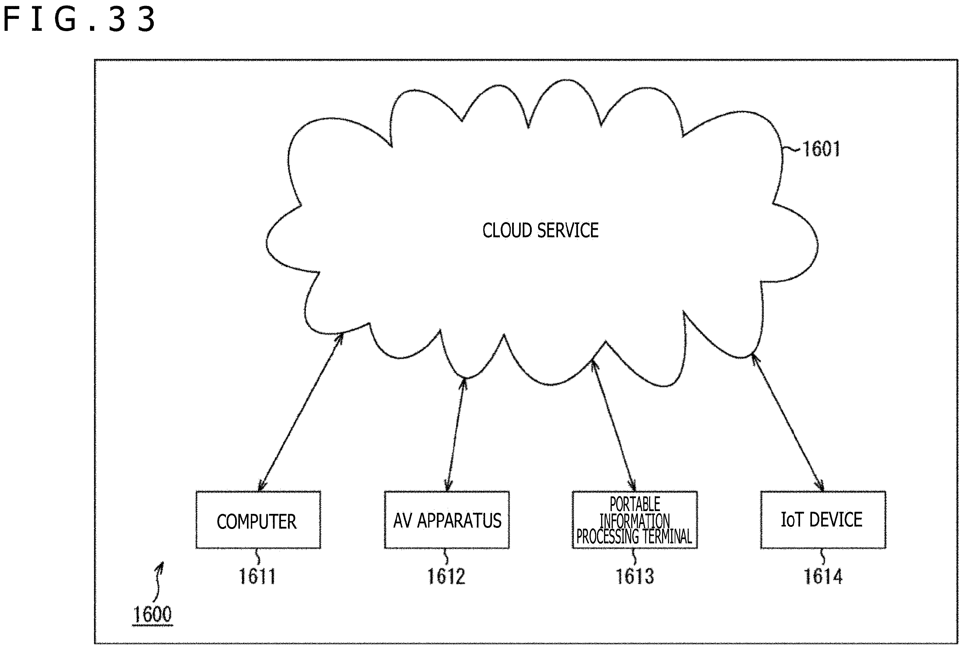

1. First Embodiment: Encoding Apparatus and Decoding Apparatus (FIGS. 1 to 13)
2. Second Embodiment: Encoding Apparatus and Decoding Apparatus (FIGS. 14 to 24)
3. Third Embodiment: Computer (FIG. 25)
4. Fourth Embodiment: Television Apparatus (FIG. 26)
5. Fifth Embodiment: Portable Telephone Set (FIG. 27)
6. Sixth Embodiment: Recording and Reproduction Apparatus (FIG. 28)
7. Seventh Embodiment: Imaging Apparatus (FIG. 29)
8. Eighth Embodiment: Video Set (FIGS. 30 to 32)
9. Ninth Embodiment: Network System (FIG. 33)

<First Embodiment>

(Description of Formation of CU)

In old-fashioned image encoding methods such as MPEG2 (Moving Picture Experts Group 2 (ISO/IEC 13818-2)) and MPEG-4 Part 10 (Advanced Video Coding, hereinafter referred to as AVC), an encoding process is executed in a processing unit called macro block. A macro block is a block having a uniform size of $16 \times 16$ pixels. In contrast, in HEVC, an encoding process is executed in a processing unit (encoding unit) called CU (Coding Unit). A CU is a block that is formed by recursively dividing an LCU (Largest Coding Unit) that is the largest encoding unit and has a variable size. A selectable maximum size of a CPU is $64 \times 64$ pixels. A selectable minimum size of a CU is $8 \times 8$ pixels. A CU of the minimum size is called SCU (Smallest Coding Unit). It is to be noted that the maximum size of a CU is not limited to $64 \times 64$ pixels but may be a greater block size such as $128 \times 128$ pixels, $256 \times 256$ pixels or the like.

As a result of adoption of a CU having such a variable size as described above, in HEVC, it is possible to adaptively adjust the picture quality and the encoding efficiency in response to the substance of an image. A prediction process for prediction encoding is executed in a processing unit called PU (Prediction Unit). A PU is formed by dividing a CU by one of several division patterns. Further, a PU is configured from a processing unit called PB (Prediction Block) for each luminance (Y) and each color difference (Cb, Cr) . Furthermore, an orthogonal transform process is executed in a processing unit called TU (Transform unit). A TU is formed by dividing a CU or a PU to a certain depth. Further, a TU is configured from a processing unit (transform block) called TB (Transform Block) for each luminance (Y) and each color difference (Cb, Cr).

In the following description, "block" is sometimes used as a partial region or a processing unit of an image (picture) (not a block of a processing section). The "block" in this case indicates an arbitrary partial region within a picture and is not limited in terms of the size, shape, property and so forth. In short, the "block" in this case includes an arbitrary region (processing unit) such as, for example, a TB, a TU, a PB, a PU, an SCU, a CU, an LCU (CTB), a sub block, a macro block, a tile, a slice or the like.

FIG. 1 is a view illustrating formation of a CU in a first embodiment.

Formation of a CU in the first embodiment is performed by a technology called QTBT (Quad tree plus binary tree) described in JVET-C0024, "EE2.1: Quadtree plus binary tree structure integration with JEM tools."

In particular, although, in HEVC, one block can be divided only into 4 (= $2 \times 2$) sub blocks, in the first embodiment, one block can be divided not only into 4 (= 2 × 2) sub blocks but also into 2 (= 1 × 2, 2 × 1) sub blocks. In particular, in the first embodiment, formation of a CU is performed by recursively repeating division of one block into four or two sub blocks, and as a result, a tree structure as a quad-tree (Quad-Tree) structure or a binary tree (Binary-Tree) structure is formed. It is to be noted that, in the first embodiment, a PU and a TU are same as a CU.

(Configuration Example of Image Encoding Apparatus)

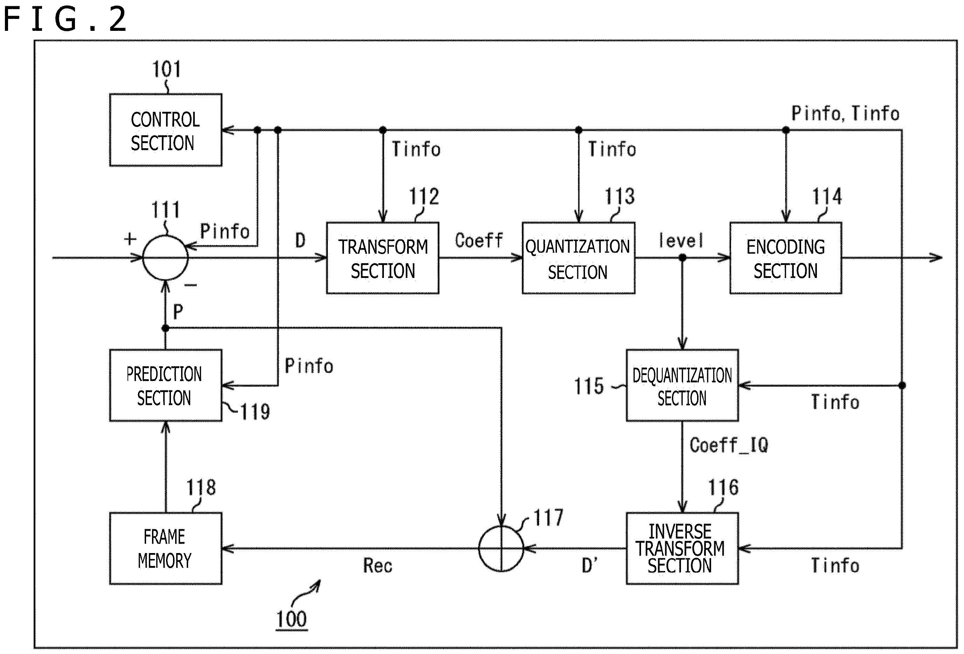

FIG. 2 is a block diagram depicting a configuration example of the first embodiment of an image encoding apparatus as the image processing apparatus to which the present disclosure is applied. The image encoding apparatus 100 of FIG. 2 is an apparatus that encodes a prediction residue between an image and a prediction image of the image as in AVC or HEVC. For example, the image encoding apparatus 100 has the technology of HEVC or the technology proposed by JVET incorporated therein.

It is to be noted that FIG. 2 depicts main ones of processing sections, data flows and so forth, and those depicted in FIG. 2 are not necessarily all of them. In short, in the image encoding apparatus 100, processing sections not depicted as blocks in FIG. 2 may exist or processes or flows of data not depicted by arrow marks or the like in FIG. 2 may exist.

The image encoding apparatus 100 of FIG. 2 includes a control section 101, an arithmetic operation section 111, a transform section 112, a quantization section 113, an encoding section 114, a dequantization section 115, an inverse transform section 116, another arithmetic operation section 117, a frame memory 118 and a prediction section 119. The image encoding apparatus 100 performs encoding for a picture, which is a moving image of a frame unit inputted thereto, for each CU.

In particular, the control section 101 of the image encoding apparatus 100 sets fixed values among encoding parameters (header information Hinfo, prediction information Pinfo, transform information Tinfo and so forth) on the basis of an input from the outside and so forth. The control section 101 supplies fixed values of the header information Hinfo, for example, to the associated components, supplies fixed values of the prediction information Pinfo, for example, to the prediction section 119, and supplies fixed values of the transform information Tinfo, for example, to the transform section 112, quantization section 113, dequantization section 115 and inverse transform section 116.

Further, the control section 101 (setting section) acquires optimum values of variable values among the encoding parameters from the transform section 112, quantization section 113 and prediction section 119 and sets encoding parameters including the optimum values and the fixed values. The control section 101 supplies the set encoding parameters to the encoding section 114, supplies the optimum values of the variable values of the prediction information Pinfo to the arithmetic operation section 111, and supplies the optimum values of the variable values of the transform information Tinfo to the dequantization section 115 and the inverse transform section 116.

The header information Hinfo includes information such as, for example, a video parameter set (VPS (Video Parameter Set)), a sequence parameter set (SPS (Sequence Parameter Set)), a picture parameter set (PPS (Picture Parameter Set)), a slider header (SH) and so forth. For example, the SPS of the header information Hinfo includes SPS.IntraBCWithSubPelflag that is a fixed value indicative of whether an intra BC prediction process using a motion vector of fractional pixel accuracy is to be validated, SPS.IntraBCflag that is a fixed value indicative of whether an intra BC prediction process is to be validated and so forth. Naturally, the substance of the header information Hinfo is arbitrary, and any information other than the examples described above may be included in the header information Hinfo.

The prediction information Pinfo includes, for example, split flag that is variable information that indicates whether or not there exists division in a horizontal direction or a vertical direction in each of division hierarchies upon formation of a PU (CU), and so forth. Further, the prediction information Pinfo includes variable mode information pred_mode_flag indicating, for each PU, whether the prediction process for the PU is a process of the intra prediction processing type (intra prediction process, intra BC prediction process) or an inter prediction process.

Further, in the case where the mode information pred_mode_flag indicates a process of the intra prediction processing type, the prediction information Pinfo includes variable PU.IntraBCflag indicative of whether the prediction process for the PU is the intra BC prediction process. In the case where PU.IntraBCflag indicates the intra BC prediction process, the prediction information Pinfo includes a variable motion vector that is used in the intra BC prediction process. On the other hand, in the case where PU.IntraBCflag indicates the intra BC prediction process and SPS.IntraBCWith-SubPelflag indicates that the intra BC prediction process using a motion vector of fractional pixel accuracy is to be validated, the prediction information Pinfo includes variable PU.IntraBCWithSubPelflag (fractional pixel accuracy information) indicative of whether the accuracy of a motion vector to be used in the intra BC prediction process is fractional pixel accuracy.

On the other hand, in the case where PU.IntraBCflag does not indicate the intra BC prediction process, the prediction information Pinfo includes variable information indicative of intra prediction modes called DC intra prediction, Planar intra prediction and Angular intra prediction.

Further, in the case where the mode information pred_mode_flag indicates the inter prediction process, the prediction information Pinfo includes a variable motion vector that is used in the inter prediction process and so forth.

Naturally, the substance of the prediction information Pinfo is arbitrary, and any information other than the examples described above may be included in the prediction information Pinfo.

The transform information Tinfo includes a TB size TBSize that is variable information indicative of a size of a TB and so forth. Naturally, the substance of the transform information Tinfo is arbitrary, and any information other than the example described above may be included in this transform information Tinfo.

The arithmetic operation section 111 successively sets, on the basis of the optimum value of split flag of the prediction information Pinfo, pictures of a moving image of a frame unit inputted thereto as a picture of an encoding target and sets a CU (PU, TU) of an encoding target to the picture of the encoding target. The arithmetic operation section 111 subtracts a prediction image P (prediction block) of a PU of an encoding target supplied from the prediction section 119 from an image I (current block) of the PU to calculate a prediction residue D and supplies the prediction residue D to the transform section 112.

The transform section 112 determines values that become candidates for the variable value of the transform information Tinfo on the basis of the fixed values of encoding parameters supplied from the control section 101. For each of values that become candidates for the variable value of the transform information Tinfo, the transform section 112 performs a transform process for the prediction residue D supplied from the arithmetic operation section 111 on the basis of the value and the fixed values to derive a transform coefficient Coeff. For each of values that become candidates for the variable value of the transform information Tinfo, the transform section 112 calculates an RD (Rate Distortion) cost of the CU of the encoding target on the basis of the transform coefficient Coeff and so forth. Then, the transform section 112 determines a value that becomes a candidate for the variable value of the transform information Tinfo, in regard to which the RD cost is lowest, as an optimum value of the variable value of the transform information Tinfo and supplies the optimum value to the control section 101. The transform section 112 supplies the transform coefficient Coeff corresponding to the optimum value of the variable value of the transform information Tinfo to the quantization section 113.

The quantization section 113 determines values that becomes candidates for the variable value of the transform information Tinfo on the basis of the fixed values of the encoding parameters supplied from the control section 101. For each of values that become candidates for the variable value of the transform information Tinfo, the quantization section 113 scales (quantizes) the transform coefficient Coeff supplied from the transform section 112 on the basis of the value and the fixed values to derive a quantization transform coefficient level level. For each of values that become candidates for the variable value of the transform information Tinfo, the quantization section 113 calculates an RD cost of the CU of the encoding target on the basis of the quantization transform coefficient level level and so forth. Then, the quantization section 113 determines a value that becomes a candidate for the variable value of the transform information Tinfo, in regard to which the RD cost is lowest, as an optimum value of the variable value of the transform information Tinfo and supplies the optimum value to the control section 101. The quantization section 113 supplies the quantization transform coefficient level level corresponding to the optimum value of the variable value of the transform information Tinfo to the encoding section 114 and the dequantization section 115.

The encoding section 114 encodes the quantization transform coefficient level level and so forth supplied from the quantization section 113 by a predetermined method. For example, the encoding section 114 converts encoding parameters (header information Hinfo, prediction information Pinfo, transform information Tinfo and so forth) supplied from the control section 101 and the quantization transform coefficient levels level supplied from the quantization section 113 into syntax values of individual syntax elements in accordance with a definition of a syntax table. Then, the encoding section 114 encodes (for example, arithmetically encodes) the syntax values and generates bit strings obtained as a result of the encoding. The encoding section 114 multiplexes, for example, the bit strings (encoded data) of the encoded syntax elements and outputs a result of the multiplexing as an encoded stream.

The dequantization section 115 scales (dequantizes) the values of the quantization transform coefficient levels level supplied from the quantization section 113 on the basis of the fixed values and the optimum values of the variable values of the encoding parameters supplied from the control section 101 to derive transform coefficients Coeff_IQ after the dequantization. The dequantization section 115 supplies the transform coefficients Coeff_IQ to the inverse transform section 116. The dequantization performed by the dequantization section 115 is a reverse process to the quantization performed by the quantization section 113.

The inverse transform section 116 performs inverse transform for the transform coefficients Coeff_IQ supplied from the dequantization section 115 on the basis of the fixed values and the optimum values of the variable values of the encoding parameters supplied from the control section 101 to derive prediction residues D'. The inverse transform section 116 supplies the prediction residues D' to the arithmetic operation section 117. The inverse transform performed by the inverse transform section 116 is an inverse process to the transform performed by the transform section 112.

The arithmetic operation section 117 adds the prediction residues D' supplied from the inverse transform section 116 and a prediction image P supplied from the prediction section 119 and corresponding to the prediction residues D' to derive a local decoded image Rec. The arithmetic operation section 117 supplies the local decoded image Rec to the frame memory 118.

The frame memory 118 reconstructs a decoded image of a picture unit using the local decoded image Rec supplied from the arithmetic operation section 117 and stores the decoded image into a buffer in the frame memory 118. The frame memory 118 reads out a decoded image designated by the prediction section 119 as a reference image from the buffer and supplies the reference image to the prediction section 119. Further, the frame memory 118 may store the header information Hinfo, prediction information Pinfo, transform information Tinfo and so forth relating to generation of a decoded image into a buffer in the frame memory 118.

The prediction section 119 determines values that become candidates for the variable value of the prediction information Pinfo on the basis of the fixed values of the encoding parameters supplied from the control section 101. The prediction section 119 acquires, for each of the values that become candidates for the variable value of the prediction information Pinfo, a decoded image stored in the frame memory 118 as a reference image on the basis of the value and the fixed values and performs an intra BC prediction process, an intra prediction process or an inter prediction process using the reference image. A prediction image P is generated thereby.

It is to be noted that, in the case where the intra BC prediction process or the intra prediction process is performed, the reference image is a decoded image locally decoded from a picture including the image I. Further, in the case where the inter prediction process is performed, the reference image is a picture decoded before the picture including the image I (decoded preceding image) and is a decoded image decoded from the entire screen image.

The prediction section 119 calculates, for each of the values that become candidates for the variable value of the prediction information Pinfo, the RD cost of the CU of an encoding target on the basis of the prediction image P and so forth. Then, the prediction section 119 determines a value that becomes a candidate for the variable value of the prediction information Pinfo, in regard to which the RD cost is lowest, as an optimum value of the variable value of the prediction information Pinfo and supplies the optimum value to the control section 101. The prediction section 119 supplies the prediction image P corresponding to the optimum value of the variable value of the prediction information Pinfo to the arithmetic operation section 111 and the arithmetic operation section 117.

(Configuration Example of Prediction Section of Image Encoding Apparatus)

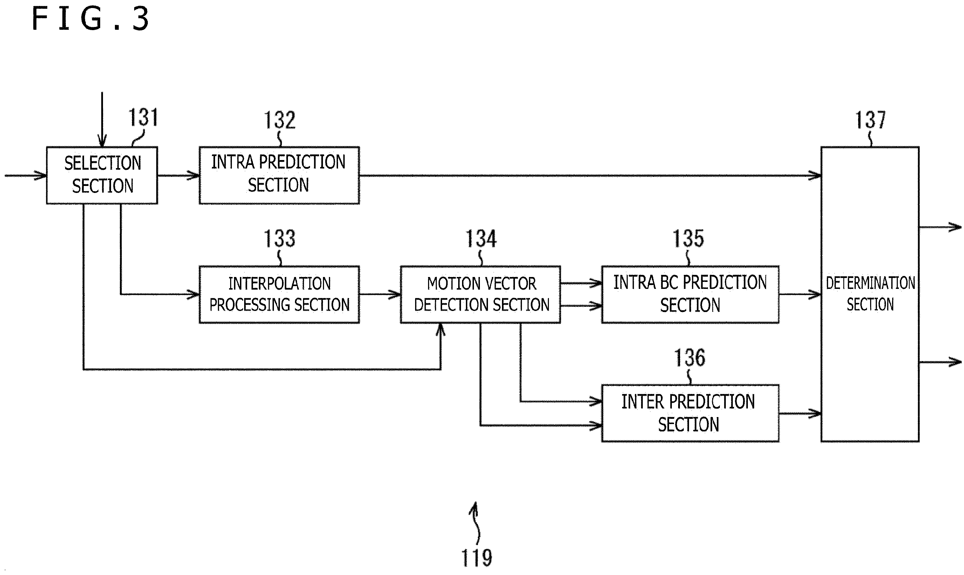

FIG. 3 is a block diagram depicting a configuration example of the prediction section 119 of FIG. 2.

The prediction section 119 of FIG. 3 includes a selection section 131, an intra prediction section 132, an interpolation processing section 133, a motion vector detection section 134, an intra BC prediction section 135, an inter prediction section 136 and a determination section 137.

The selection section 131 of the prediction section 119 determines, on the fixed values of the encoding parameters supplied from the control section 101, split flag of prediction information Pinfo, mode information pred_mode_flag, PU.IntraBCWithSubPelflag, PU.IntraBCflag, information indicative of the intra prediction mode and values that become candidates for the motion vector and so forth. The selection section 131 supplies the determined values to the associated components.

Further, the selection section 131 acquires, for each of the values that become candidates for the mode information pred_mode_flag and PU.IntraBCflag, a decoded image stored in the frame memory 118 as a reference image on the basis of the value. The selection section 131 supplies, for each of the values that become candidates for the mode information pred_mode_flag, PU.IntraBCWithSubPelflag and PU.IntraBCflag, the reference image and the values that become candidates for split flag on the basis of the value to the intra prediction section 132, interpolation processing section 133 or motion vector detection section 134.

In particular, in the case where the value that becomes a candidate for the mode information pred_mode_flag indicates a process of the intra prediction processing type and the value that becomes a candidate for PU.IntraBCflag indicates not the intra BC prediction process, the selection section 131 supplies the reference image to the intra prediction section 132.

On the other hand, in the case where the value that becomes a candidate for the mode information pred_mode_flag indicates a process of the intra prediction processing type and PU.IntraBCflag indicates the intra BC prediction process while the value that becomes a candidate for PU.IntraBCWithSubPelflag indicates that the accuracy of a motion vector to be used for the intra BC prediction process is fractional pixel accuracy or in the case where the value that becomes a candidate for the mode information pred_mode_flag indicates the inter prediction process, the selection section 131 supplies the reference image to the interpolation processing section 133.

Furthermore, in the case where the value that becomes a candidate for the mode information pred_mode_flag indicates a process of the intra prediction processing type and the value that becomes a candidate for PU.IntraBCflag indicates the intra BC prediction process while the value that becomes a candidate for PU.IntraBCWithSubPelflag indicates that the accuracy of a motion vector to be used for the intra BC prediction process is not fractional pixel accuracy, the selection section 131 supplies the reference image to the motion vector detection section 134.

The intra prediction section 132 sets a PU (CU) of an encoding target to a picture of an encoding target on the basis of each of values that become candidates for split flag. The intra prediction section 132 performs, for each of the values that become candidates for the information indicative of the intra prediction mode, an intra prediction process for the PU of the encoding target using the reference image supplied from the selection section 131 on the basis of the value. The intra prediction process is a process for generating a block of a PU size decoded already, which exists in a direction indicated by the intra prediction mode for the PU in a picture same as that of the PU, as a prediction image P. The intra prediction section 132 supplies the prediction image P of the PU of the encoding target to the determination section 137 for each of the values that become candidates for split flag and for the information indicative of the intra prediction mode.

The interpolation processing section 133 performs an interpolation process for generating pixel values of fractional pixels by multiplying pixels around each fractional pixel in the reference image supplied from the selection section 131 by filter coefficients. The fractional pixel is a pixel whose pixel size is a minute multiple (for example, 1/8, 1/4, 1/2 or the like) of the original size of the pixel. The interpolation processing section 133 supplies the pixel values of the fractional pixels of the reference image generated by the interpolation process to the motion vector detection section 134.

The motion vector detection section 134 sets a PU (CU) of an encoding target to a picture of an encoding target on the basis of the values that become candidates for split flag. The motion vector detection section 134 detects, on the basis of pixel values of fractional pixels of a reference image supplied from the interpolation processing section 133, a motion vector of one point of the PU of the encoding target (for example, the central point) in a screen image or between screen images in fractional pixel accuracy.

In particular, the motion vector detection section 134 performs, for each of the values that become candidates for a motion vector of fractional accuracy, an intra BC prediction process or an inter prediction process for the PU of the encoding target using a reference image on the basis of the value to generate a prediction image P. The motion vector detection section 134 calculates, for each of the values that become candidates for a motion vector of fractional accuracy, the RD cost of the CU of the encoding target on the basis of the prediction image P ad so forth. The motion vector detection section 134 outputs a value that becomes a candidate for a motion vector of fractional accuracy, in regard to which the RD cost is lowest, as a motion vector of fractional accuracy of one point of the PU of the encoding target in a screen image or between screen images.

It is to be noted that the motion vector detection section 134 may detect not the RD cost but a value that becomes a candidate for a motion vector of fractional accuracy, in regard to which the SAD (Sum of Absolute Difference) or the SATD (Sum of Absolution Transformed Difference) between the prediction image P and the image I of the PU of the encoding target is lowest, as a motion vector of fractional accuracy of one point of the PU of the encoding target in one screen image or between screen images.

Further, the motion vector detection section 134 detects, on the basis of the pixel values of the pixels of the reference image supplied from the selection section 131, a motion vector of integral pixel accuracy of one point of the PU of the encoding target in a screen image similarly to the motion vector of fractional pixel accuracy of one point of the PU of the encoding target in a screen image.

The motion vector detection section 134 supplies the motion vector of fractional pixel accuracy of one point of the PU of the encoding target in a screen image and the reference image supplied from the interpolation processing section 133 or the motion vector of integral pixel accuracy of one point of the PU of the encoding target in a screen image and the reference image supplied from the selection section 131 to the intra BC prediction section 135. Further, the motion vector detection section 134 supplies the motion vector of fractional pixel accuracy of one point of the PU of the encoding target between screen images and the reference image supplied from the interpolation processing section 133 to the inter prediction section 136.

The intra BC prediction section 135 performs an intra BC prediction process for the PU of the encoding target using the reference image on the basis of the motion vector of fractional pixel accuracy or integral pixel accuracy of one point of the PU of the encoding target in a screen image. The intra BC prediction process is a process for parallelly displacing a block of a PU size decoded already, which exists at a position spaced by the motion vector from the PU, in a picture same as that of the PU to generate a prediction image P. The intra BC prediction section 135 supplies the prediction image P of the PU of the encoding target to the determination section 137.

The inter prediction section 136 performs an inter prediction process for the PU of the encoding target using the reference image on the basis of the motion vector of fractional pixel accuracy of one point of the PU of the encoding target in a screen image. The inter prediction process is a process for parallelly displacing a block of a PU size decoded already, which exists at a position spaced by the motion vector from the PU, within a picture decoded preceding to the picture that includes the PU to generate a prediction image P. The intra BC prediction section 135 supplies the prediction image P of the PU of the encoding target to the determination section 137.

The determination section 137 calculates, for each of values that become candidates for split flag, the mode information pred_mode_flag, PU.IntraBCWithSubPelflag, PU.IntraBCflag, information indicative of the intra prediction mode and so forth, the RD cost of the CU of the encoding target on the basis of the prediction image P and so forth supplied from the intra prediction section 132, intra BC prediction section 135 or inter prediction section 136. Then, the determination section 137 determines a value that becomes a candidate for split flag, the mode information pred_mode_flag, PU.IntraBCWithSubPelflag, PU.IntraBCflag, information indicative of the intra prediction mode or the like, in regard to which the RD cost is lowest, as an optimum value and supplies the optimum value to the control section 101. The determination section 137 supplies the prediction image P corresponding to the optimum value to the arithmetic operation section 111 and the arithmetic operation section 117.

In the prediction section 119 of FIG. 3, the interpolation processing section 133 and the motion vector detection section 134 detect a motion vector of fractional pixel accuracy in a screen image to be used in the intra BC prediction process and detect a motion vector of fractional pixel accuracy between screen images to be used in the inter prediction process in such a manner as described above. In other words, the processing block that detects a motion vector of fractional pixel accuracy in a screen image to be used in the intra BC prediction process and the processing block that detects a motion vector of fractional pixel accuracy between screen images to be used in the inter prediction process are shared. Accordingly, the circuit scale of the image encoding apparatus 100 can be reduced in comparison with that in an alternative case in which they are not shared.

(Description of Motion vector of Fractional Pixel Accuracy of One Point in Screen Image)

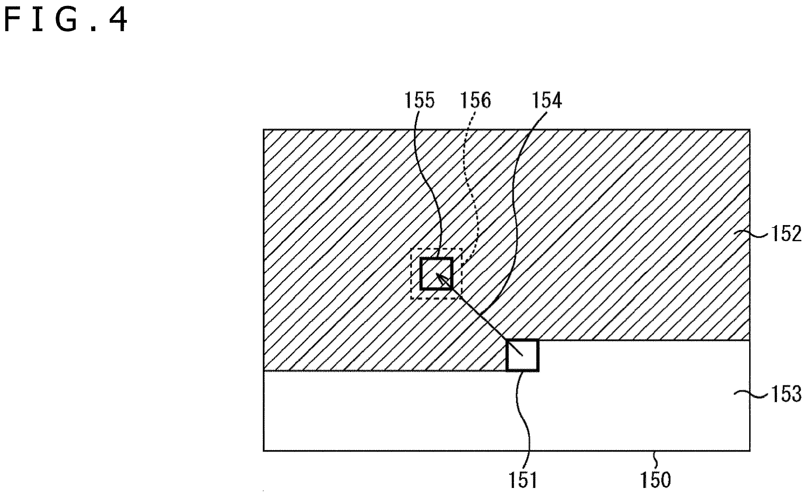

FIG. 4 is a view illustrating a motion vector of fractional pixel accuracy (Sub pel accuracy) in a screen image of one point of a PU of an encoding target detected by the motion vector detection section 134 of FIG. 3.

In the example of FIG. 4, the motion vector detection section 134 sets a PU 151 of an encoding target to a picture 150 on the basis of a value that becomes a candidate for split flag. In this case, when a motion vector of fractional pixel accuracy of one point of the PU 151 in a screen image as depicted in FIG. 4, although a region 152 on the upper side and the left side of the PU 151 is encoded already and decoded, a region 153 on the lower side and the right side of the PU 151 is not encoded as yet. In other words, the reference image is a decoded image locally decoded only in the region 152 thereof.

The interpolation processing section 133 performs an interpolation process for such a reference image as described above to generate pixel values of fractional pixels of the reference image. The motion vector detection section 134 detects, on the basis of the pixel values of the fractional pixels of the reference image, for example, a motion vector 154 of fractional pixel accuracy as a motion vector of fractional pixel accuracy of one point of the PU 151 in a screen image.

The intra BC prediction section 135 performs an intra BC prediction process on the basis of the motion vector 154 to parallelly displace the reference image of a block 155 of the PU size existing at a position spaced by the motion vector 154 from the PU 151 in the picture 150 to generate a prediction image P.

It is to be noted that, in the interpolation process of the interpolation processing section 133, for generation of the pixel values of the fractional pixels of the reference image of the block 155, for example, pixel values of the reference image of a block 156 formed from the pixels of the reference image including the block 155 are used.

(Description of Processing of Image Encoding Apparatus)

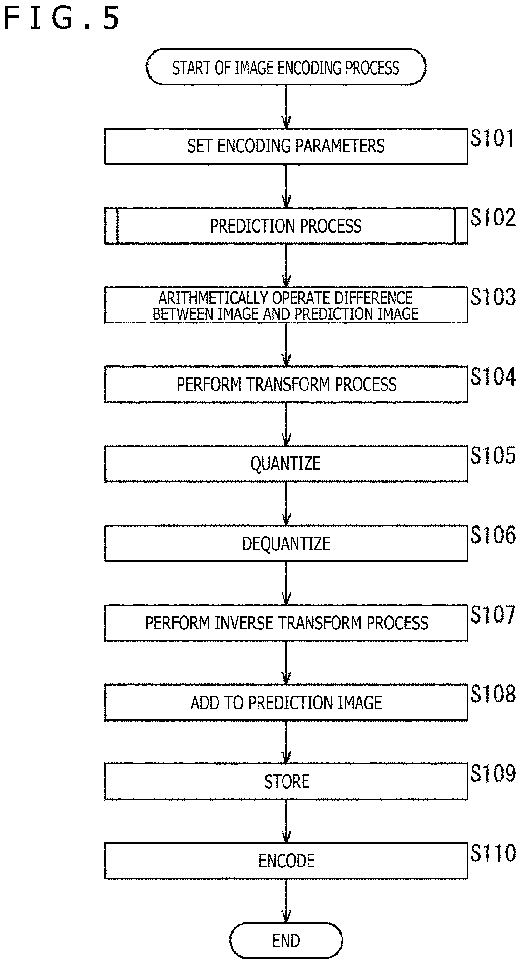

FIG. 5 is a flow chart illustrating an image encoding process of the image encoding apparatus 100 of FIG. 2.

At step S101 of FIG. 5, the control section 101 sets fixed values from among encoding parameters on the basis of an input from the outside or the like. The control section 101 supplies the fixed values of the header information Hinfo, for example, to the associated components, supplies the fixed values of the prediction information Pinfo, for example, to the prediction section 119 and supplies the fixed values of the transform information Tinfo, for example, to the transform section 112, quantization section 113, dequantization section 115 and inverse transform section 116.

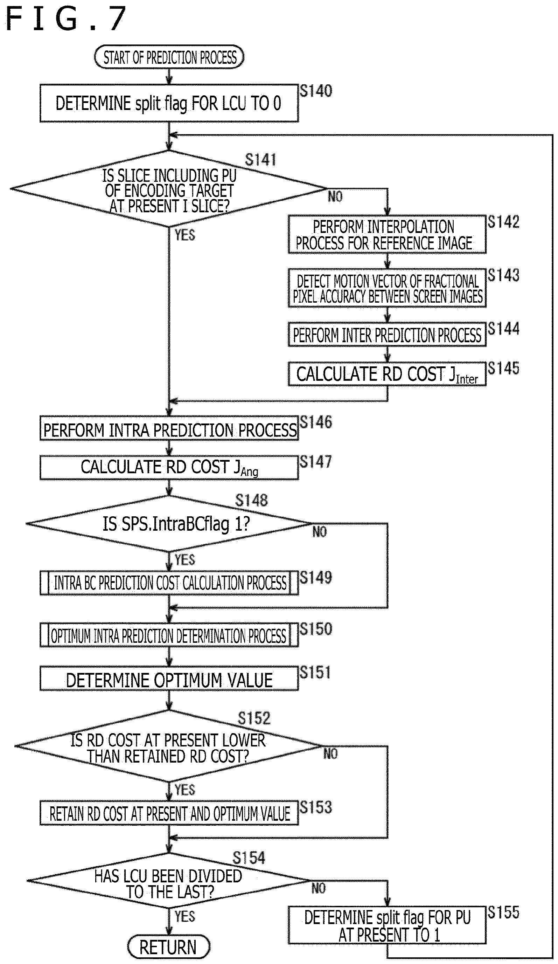

At step S102, the prediction section 119 performs a prediction process for optimizing the variable values of the prediction information Pinfo and generating a prediction image P corresponding to the optimum values of the variable values of the prediction information Pinfo. Details of this prediction process are hereinafter described with reference to FIG. 7. The prediction section 119 supplies the optimum values of the variable values of the prediction information Pinfo to the control section 101 and supplies the prediction image P corresponding to the optimum values of the variable values of the prediction information Pinfo to the arithmetic operation section 111 and the arithmetic operation section 117. The control section 101 supplies the optimum values of split flag and so forth from within the prediction information Pinfo to the arithmetic operation section 111.

At step S103, the arithmetic operation section 111 sets a CU (PU, TU) of an encoding target to a picture on the basis of the optimum value of split flag and arithmetically operates the difference between an image I of the PU of the encoding target and the prediction image P supplied from the prediction section 119 as a prediction residue D. The prediction residue D calculated in this manner is reduced in data amount in comparison with the original image I. Accordingly, in comparison with an alternative case in which the image I is encoded as it is, the data amount can be compressed.

At step S104, the transform section 112 performs a transform process for the prediction residue D supplied from the arithmetic operation section 111 on the basis of the values that become candidates for the variable values of the transform information Tinfo to derive transform coefficients Coeff. The transform section 112 performs optimization of the variable values of the transform information Tinfo and supplies the transform coefficients Coeff corresponding to the optimum values of the variable values of the transform information Tinfo to the quantization section 113 and besides supplies the optimum values of the variable values of the transform information Tinfo to the control section 101.

At step S105, the quantization section 113 quantizes the transform coefficients Coeff supplied from the transform section 112 on the basis of the values that become candidates for the variable values of the transform information Tinfo to derive quantization transform coefficient levels level. The transform section 112 performs optimization of the variable values of the transform information Tinfo and supplies the quantization transform coefficient levels level corresponding to the optimum values of the variable values of the transform information Tinfo to the dequantization section 115 and besides supplies the optimum values of the variable values of the transform information Tinfo to the control section 101. The control section 101 sets and supplies encoding parameters including the optimum values and the fixed values of the variable values of the prediction information Pinfo, transform information Tinfo and so forth to the encoding section 114, and supplies the optimum values of the variable values of the transform information Tinfo to the dequantization section 115 and the inverse transform section 116.

At step S106, the dequantization section 115 dequantizes the quantization transform coefficient levels level supplied from the quantization section 113 with a characteristic corresponding to the characteristic of the quantization at step S105 on the basis of the fixed values and the optimum values of the variable values of the encoding parameters. The dequantization section 115 supplies transform coefficients Coeff_IQ obtained as a result of the dequantization to the inverse transform section 116.

At step S107, the inverse transform section 116 performs, on the basis of the fixed values and the optimum values of the variable values of the encoding parameters, an inverse transform process for the transform coefficients Coeff_IQ supplied from the dequantization section 115 by a method corresponding to the transform method at step S104 to derive a prediction residue D'.

At step S108, the arithmetic operation section 117 adds the prediction residue D' derived by the process at step S107 to the prediction image P supplied from the prediction section 119 to generate a local decoded image Rec.

At step S109, the frame memory 118 reconstructs a decoded image of a picture unit using the local decoded image Rec obtained by the process at step S108 and stores the decoded image into the buffer in the frame memory 118.

At step S110, the encoding section 114 encodes the quantization transform coefficient levels level obtained by the process at step S105. For example, the encoding section 114 encodes the quantization transform coefficient levels level, which are information relating to the image, by arithmetic encoding or the like. Further, at this time, the encoding section 114 encodes the encoding parameters (header information Hinfo, prediction information Pinfo, transform information Tinfo) supplied from the control section 101. The encoding section 114 collectively outputs the encoded data generated by such encoding as an encoded stream to the outside of the image encoding apparatus 100. This encoded stream is transmitted to the decoding side, for example, through a transmission line or a recording medium.

When the process at step S110 ends, the image encoding process ends.

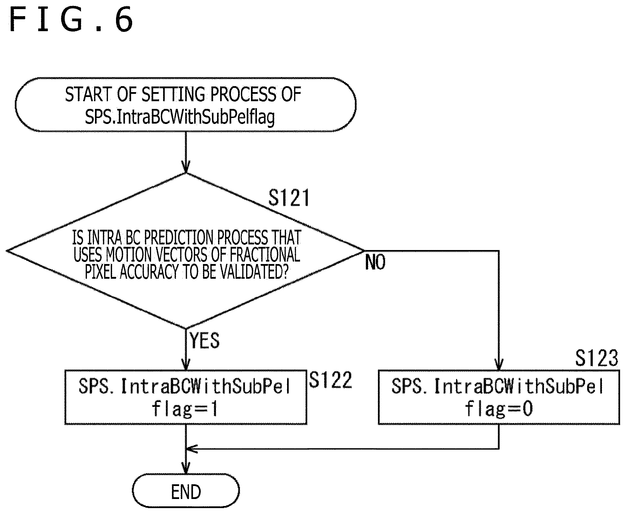

FIG. 6 is a flow chart illustrating the setting process of SPS.IntraBCWithSubPelflag from within the process at step S101 of FIG. 5.

At step S121 of FIG. 6, the control section 101 decides on the basis of an input from the outside or the like whether an intra BC prediction process in which a motion vector of fractional pixel accuracy is used is to be validated. In the case where it is decided at step S121 that an intra BC prediction process in which a motion vector of fractional pixel accuracy is used is to be validated, the processing advances to step S122.

At step S122, the control section 101 sets SPS.IntraBCWithSubPelflag to 1 that indicates that an intra BC prediction process in which a motion vector of fractional pixel accuracy is used is to be validated, and the processing ends.

On the other hand, in the case where it is decided at step S122 that an intra BC prediction process in which a motion vector of fractional pixel accuracy is used is not to be validated, the processing advances to step S123. At step S123, the control section 101 sets SPS.IntraBCWithSubPelflag to 0 that indicates that an intra BC prediction process in which a motion vector of fractional pixel accuracy is used is to be invalidated, and the processing ends.

FIG. 7 is a flow chart illustrating details of the prediction process at step S102 of FIG. 5.

At step S140 of FIG. 7, the selection section 131 (FIG. 3) of the prediction section 119 determines the value, which becomes a candidate for split flag for the LCU to 0. The selection section 131, intra prediction section 132, motion vector detection section 134 and so forth sets a PU of an encoding target at present to a picture of an encoding target on the basis of split flag.

At step S141, the selection section 131 decides on the basis of fixed values of encoding parameters supplied from the control section 101 whether a slice including the PU of an encoding target at present is an I slice.

In the case where it is decided at step S141 that the slice including the PU of the encoding target at present is not an I slice, namely, in the case where the slice including the PU of the encoding target at present is a P slice or a B slice, the selection section 131 determines a value that becomes a candidate for the mode information pred_mode_flag to a value indicative of the inter prediction process. Then, the selection section 131 supplies a reference image to the interpolation processing section 133.

At step S142, the interpolation processing section 133 performs an interpolation process for the reference image supplied from the selection section 131 and supplies pixel values of fractional pixels of the reference image obtained as a result of the interpolation process to the motion vector detection section 134.

At step S143, the motion vector detection section 134 detects, on the basis of the pixel values of the fractional pixels of the reference image supplied from the interpolation processing section 133, a motion vector of fractional pixel accuracy of one point of the PU of the encoding target between screen images. The motion vector detection section 134 supplies the motion vector of fractional pixel accuracy of one point of the image I between screen images and the pixel values of the fractional pixels of the reference image to the inter prediction section 136.

At step S144, the inter prediction section 136 performs an inter prediction process for the PU of the encoding target using the pixel values of the fractional pixels of the reference image on the basis of the motion vector of fractional pixel accuracy of one point of the PU of the encoding target between screen images. The intra BC prediction section 135 supplies a prediction image P obtained as a result of the inter prediction process to the determination section 137.

At step S145, the determination section 137 calculates, on the basis of the prediction image P supplied from the intra BC prediction section 135 and so forth, an RD cost $J_{Inter}$ of the CU of the encoding target in the case where the mode information pred_mode_flag has the value indicative of the inter prediction process. Then, the determination section 137 determines an optimum value of the motion vector in the case where the mode information pred_mode_flag has the value indicative of the inter prediction process as a motion vector of fractional pixel accuracy between screen images of one point of the PU of the encoding target detected by the motion vector detection section 134.

In the case where it is decided at step S141 that the slice including the PU of an encoding target at present is an I slice or after the processing at step S145, the selection section 131 determines the value that becomes a candidate for the mode information pred_mode_flag to a value indicative of a process of the intra prediction processing type. Further, the selection section 131 determines a value that becomes a candidate for PU.IntraBCflag to a value that does not indicate the intra BC prediction process and determines a value that becomes a candidate for information indicative of the intra prediction mode to the value indicative of the intra prediction mode that becomes all candidates. Then, the selection section 131 supplies the reference image to the intra prediction section 132 and advances the processing to step S146.

at step S146, the intra prediction section 132 performs, for each of the values that become candidates for the information indicative of the intra prediction mode, an intra prediction process for the PU of the encoding target using the reference image on the basis of the value. The intra prediction section 132 supplies the prediction image P for each of the values that become candidates for the information indicative of the intra prediction mode, which is generated as a result of the intra prediction process, to the determination section 137.

At step S147, the determination section 137 calculates, on the basis of the prediction image P supplied from the intra prediction section 132 and so forth, an RD cost $J_{Ang}$ of the PUI of the encoding target for each of the values that become candidates for the information indicative of the intra prediction mode in the case where the mode information pred_mode_flag has the value indicative of a process of the intra prediction processing type and PU.IntraBCflag has a value that does not indicate the intra BC prediction process. Then, the processing advances to step S148.

At step S148, the selection section 131 decides whether SPS.IntraBCflag supplied from the control section 101 is 1 that indicates that the intra BC prediction process is to be validated. In the case where it is decided at step S148 that SPS.IntraBCflag is 1, the selection section 131 determines the value that becomes a candidate for the mode information pred_mode_flag to a value indicative of a process of the intra prediction processing type. Further, the selection section 131 sets PU.IntraBCflag to a value indicative of the intra BC prediction process and sets PU.IntraBCWithSub-Pelflag to a value that indicates that the accuracy of the motion vector to be used in the intra BC prediction process is not fractional pixel accuracy. Then, the selection section 131 supplies the reference image to the motion vector detection section 134 and advances the processing to step S149.

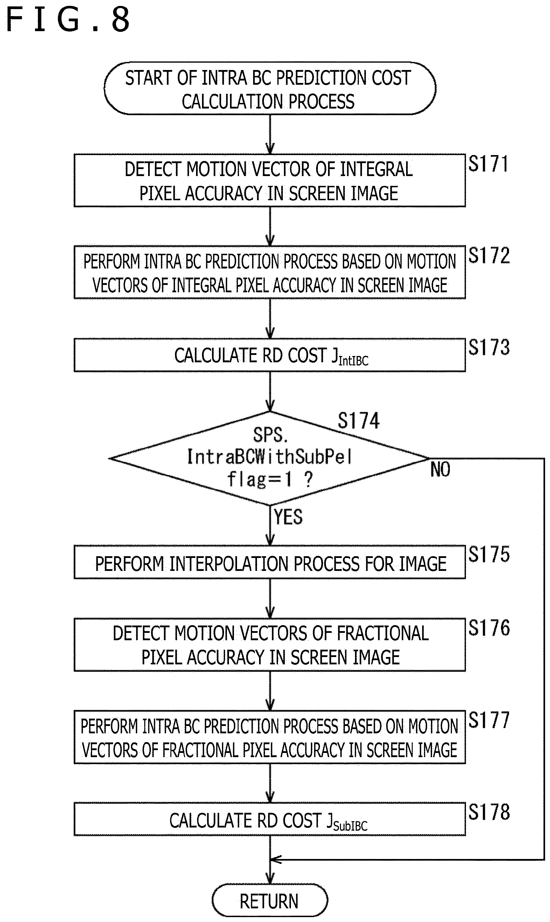

At step S149, the prediction section 119 performs the intra BC prediction process and performs an intra prediction cost calculation process for calculating the RD cost of the CU of the encoding target on the basis of a prediction image P generated as a result of the intra BC prediction process and so forth. Details of the intra BC prediction cost calculation process are hereinafter described with reference to FIG. 8. After the process at step S149, the processing advances to step S150.

On the other hand, in the case where it is decided at step S148 that SPS.IntraBCflag is not 1, the intra BC prediction cost calculation process is not performed, and the processing advances to step S150.

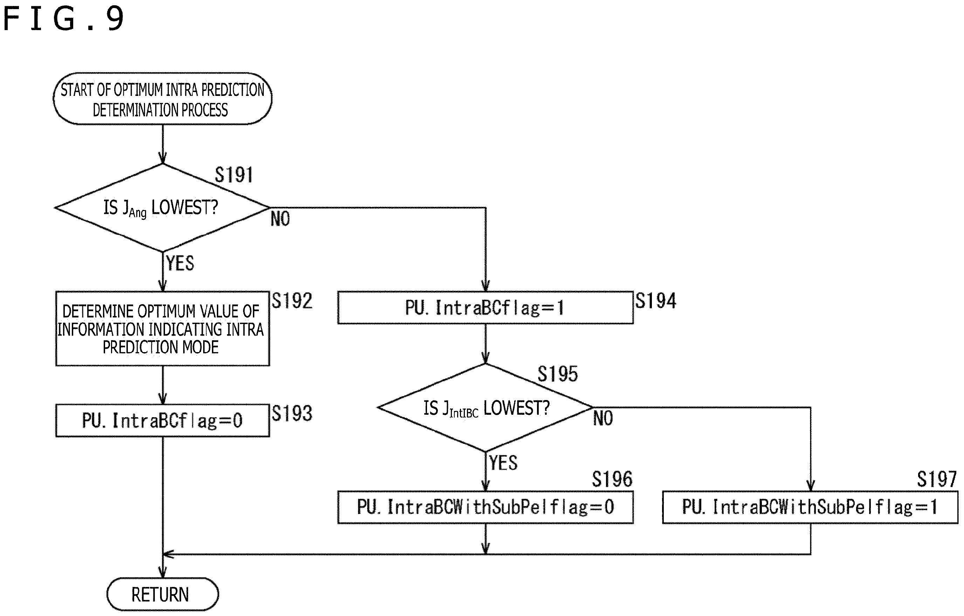

At step S150, the determination section 137 performs an optimum intra prediction determination process for determining an optimum value of a variable value of the prediction information Pinfo in the case where the mode information pred_mode_flag has a value indicative of a process of the intra prediction processing type. Details of this optimum intra prediction determination process are hereinafter described with reference to FIG. 9.

At step S151, the determination section 137 determines one of the optimum value of the variable value of the prediction information Pinfo in the case where the mode information pred_mode_flag has a value indicative of the inter prediction process and the optimum value of the variable value of the prediction information Pinfo in the case where the mode information pred_mode_flag has a value indicative of the intra prediction process, in regard to which the RD cost is in the minimum, split flag, the mode information pred_mode_flag that is in the minimum or the like as a final optimum value of the variable value of the prediction information Pinfo.

At step S152, the determination section 137 decides whether or not the RD cost corresponding to the final optimum value of the variable value of the prediction information Pinfo at present determined at the immediately preceding step S151 is lower than the RD cost retained therein. In the case where it is decided at step S152 that the RD cost at present is lower than the retained RD cost, the determination section 137 retains the RD cost at present and the final optimum value of the variable value of the prediction information Pinfo as well as the corresponding prediction image P and advances the processing to step S154.

On the other hand, in the case where it is decided at step S152 that the RD cost at present is not lower than the retained RD cost, the processing advances to step S154.

At step S154, the selection section 131 decides whether or not the LCU has been divided to the last. In the case where it is decided at step S154 that the LCU has not been divided to the last, the processing advances to step S155.

At step S155, the selection section 131 determines the value that becomes a candidate for split flag in at least one of the horizontal direction or the vertical direction for the PU of the encoding target at present to 1. The selection section 131, intra prediction section 132, motion vector detection section 134 and so forth newly determine a PU of an encoding target at present for the picture on the basis of split flag. Then, the processing returns to step S141, and the processes at steps S141 to S155 are repeated until it is decided at step S154 that the LCU has been divided to the last.

In the case where it is decided at step S154 that the LCU has been divided to the last, the determination section 137 supplies the final optimum value of the variable value of the prediction information Pinfo retained therein to the control section 101 and supplies the prediction image P to the arithmetic operation section 111 and the arithmetic operation section 117. Then, the processing returns to step S102 of FIG. 5 and then advances to step S103.

FIG. 8 is a flow chart illustrating details of the intra BC prediction cost calculation process at step S149 of FIG. 7.

At step S171 of FIG. 8, the motion vector detection section 134 detects a motion vector of integral pixel accuracy of one point of the PU of the encoding target in the screen image on the basis of the reference image supplied from the selection section 131. The motion vector detection section 134 supplies the motion vector of integral pixel accuracy of one point of the PU of the encoding target in the screen image and the reference image to the intra BC prediction section 135.

At step S172, the intra BC prediction section 135 performs an intra BC prediction process for the PU of the encoding target using the reference image on the basis of the motion vector of integral pixel accuracy of one point of the PU of the encoding target in the screen image supplied from the motion vector detection section 134. The intra BC prediction section 135 supplies a prediction image P generated as a result of the intra BC prediction process to the determination section 137.

At step S173, the determination section 137 calculates, on the basis of the prediction image P supplied from the intra BC prediction section 135 and so forth, an RD cost $J_{IntIBC}$ of the CU of the encoding target in the case where the mode information pred_mode_flag has a value indicative of a process of the intra prediction processing type; PU.IntraBCflag has a value indicative of the intra BC prediction process; and PU.IntraBCWithSubPelflag has a value indicating that the accuracy of the motion vector to be used in the intra BC prediction process is not fractional pixel accuracy.

At step S174, the selection section 131 decides whether SPS.IntraBCWithSubPelflag supplied from the control section 101 is 1 that indicates that the intra BC prediction process using the motion vector of fractional pixel accuracy is to be validated.

In the case where it is decided at step S174 that SPS.IntraBCWithSubPelflag is 1, the selection section 131 determines a value that becomes a candidate for the mode information pred_mode_flag to a value indicative of a process of the intra prediction processing type. Further, the selection section 131 determines PU.IntraBCflag to the value indicative of the intra BC prediction process and determines PU.IntraBCWithSubPelflag to a value indicating that the accuracy of the motion vector to be used in the intra BC prediction process is fractional pixel accuracy. Then, the selection section 131 supplies the reference image to the interpolation processing section 133 and advances the processing to step S175.

At step S175, the interpolation processing section 133 performs an interpolation process for the reference image and supplies pixel values of fractional pixels of the reference image generated as a result of the interpolation process to the motion vector detection section 134.

At step S176, the motion vector detection section 134 detects, on the basis of the pixel values of the fractional pixels of the reference image supplied from the interpolation processing section 133, a motion vector of fractional pixel accuracy of one point of the PU of the encoding target in a screen image. The motion vector detection section 134 supplies the motion vector of fractional pixel accuracy of one point of the PU of the encoding target in the screen image and the reference image to the intra BC prediction section 135.

At step S177, the intra BC prediction section 135 performs an intra BC prediction process for the PU of the encoding target using the reference image on the basis of the motion vector of fractional pixel accuracy of one point of the PU of the encoding target in a screen image supplied from the motion vector detection section 134. The intra BC prediction section 135 supplies a prediction image P generated as a result of the intra BC prediction process to the determination section 137.

At step S178, the determination section 137 calculates, on the basis of the prediction image P supplied from the intra BC prediction section 135 and so forth, an RD cost $J_{SubIBC}$ of the CU of the encoding target in the case where the mode information pred_mode_flag has a value indicative of a process of the intra prediction processing type; PU.IntraBCflag has a value indicative of the intra BC prediction process; and PU.IntraBCWithSubPelflag has a value indicating that the accuracy of the motion vector to be used in the intra BC prediction process is fractional pixel accuracy. Then, the processing returns to step S149 of FIG. 7 and advances to step S150.

FIG. 9 is a flow chart illustrating details of the optimum intra prediction determination process at step S149 of FIG. 7.

At step S191 of FIG. 9, the determination section 137 decides whether the RD cost $J_{Ang}$ is lowest among the RD cost $J_{Ang}$, RD cost $J_{IntIBC}$ and RD cost $J_{SubIBC}$ of each of the values that become candidates for information indicative of the intra prediction mode. In the case where it is decided at step S191 that the RD cost $J_{Ang}$ is lowest, the processing advances to step S192.

At step S192, the determination section 137 determines a value that becomes a candidate for the information indicative of the intra prediction mode corresponding to the lowest RD cost $J_{Ang}$ as an optimum value of the information indicative of the intra prediction mode in the case where the mode information pred_mode_flag has a value indicative of a process of the intra prediction processing type.

At step S193, the determination section 137 sets the optimum value of PU.IntraBCflag in the case where the mode information pred_mode_flag has a value indicative of a process of the intra prediction processing type to 0 that does not indicate the intra BC prediction process. Then, the processing returns to step S150 of FIG. 7 and advances to step S151.

On the other hand, in the case where it is decided at step S191 that the RD cost $J_{Ang}$ is not lowest, the processing advances to step S194. At step S194, the determination section 137 determines the optimum value of PU.IntraBCflag in the case where the mode information pred_mode_flag has a value indicative of a process of the intra prediction processing type to 1 that indicates the intra BC prediction process.

At step S195, the determination section 137 decides whether the RD cost $J_{IntIBC}$ is lowest among the RD cost $J_{Ang}$, RD cost $J_{IntIBC}$ and RD cost $J_{SubIBC}$ of each of the values that become candidates for the information indicative of the intra prediction mode. In the case where it is decided at step S195 that the RD cost $J_{IntIBC}$ is lowest, the processing advances to step S196.

At step S196, the determination section 137 determines PU.IntraBCWithSubPelflag in the case where the mode information pred_mode_flag has a value indicative of a process of the intra prediction processing type to 0 that indicates that the accuracy of the motion vector to be used in the intra BC prediction process is not fractional pixel accuracy. Then, the processing returns to step S150 of FIG. 7 and advances to step S151.

On the other hand, in the case where it is decided at step S195 that the RD cost $J_{IntIBC}$ is not lowest, namely, in the case where the RD cost $J_{SubIBC}$ is lowest, the processing advances to step S197. At step S197, the determination section 137 determines PU.IntraBCWithSubPelflag in the case where the mode information pred_mode_flag has a value indicative of a process of the intra prediction processing type to 1 that indicates that the accuracy of the motion vector to be used in the intra BC prediction process is fractional pixel accuracy. Then, the processing returns to step S150 of FIG. 7 and advances to step S151.

The image encoding apparatus 100 can perform an intra BC prediction process using a motion vector of fractional pixel accuracy in a screen image in such a manner as described above. Accordingly, the accuracy of a prediction image P to be generated by an intra BC prediction process can be enhanced. In contrast, since the intra BC prediction process of HEVC-SCC is performed using a motion vector of integral pixel accuracy in a screen image, the accuracy of a prediction image cannot be enhanced sufficiently.

(Configuration Example of Image Decoding Apparatus)

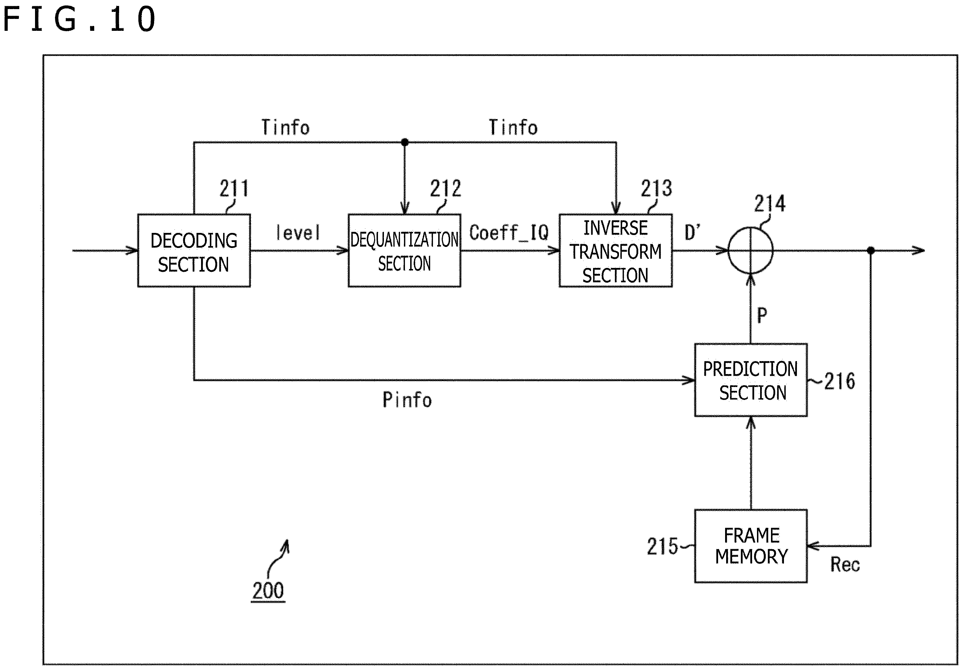

FIG. 10 is a block diagram depicting a configuration example of a first embodiment of an image decoding apparatus as an image processing apparatus to which the present technology is applied and which decodes an encoded stream generated by the image encoding apparatus 100 of FIG. 2. The image decoding apparatus 200 depicted in FIG. 10 decodes an encoded stream generated by the image encoding apparatus 100 by a decoding method corresponding to the encoding method by the image encoding apparatus 100. For example, the image decoding apparatus 200 incorporates the technology proposed by HEVC or the technology proposed by JVET therein.

It is to be noted that FIG. 10 depicts main ones of processing sections, data flows and so forth, and those depicted in FIG. 10 are not necessarily all of them. In short, in the image decoding apparatus 200, processing sections not depicted as blocks in FIG. 10 may exist or processes or flows of data not depicted by arrow marks or the like in FIG. 10 may exist.

The image decoding apparatus 200 of FIG. 10 includes a decoding section 211, a dequantization section 212, an inverse transform section 213, an arithmetic operation section 214, a frame memory 215 and a prediction section 216. The image encoding apparatus 100 performs decoding of an encoded stream generated by the image encoding apparatus 100 for each CU.

In particular, the decoding section 211 of the image decoding apparatus 200 decodes an encoded stream generated by the image encoding apparatus 100 by a predetermined decoding method corresponding to the encoding method by the encoding section 114. For example, the decoding section 211 decodes encoding parameters (header information Hinfo, prediction information Pinfo, transform information Tinfo and so forth) and quantization transform coefficient levels level from a bit string of the encoded stream in accordance with a definition of a syntax table. The decoding section 211 divides an LUC on the basis of split flag included in the encoding parameters and sets a CU corresponding to each of the quantization transform coefficient levels level successively as a CU (PU, TU) of a decoding target.

The decoding section 211 supplies the encoding parameters to the associated blocks. For example, the decoding section 211 supplies the prediction information Pinfo to the prediction section 216, supplies the transform information Tinfo to the dequantization section 212 and the inverse transform section 213, and supplies the header information Hinfo to the associated blocks. Further, the decoding section 211 supplies the quantization transform coefficient levels level to the dequantization section 212.

The dequantization section 212 scales (dequantizes) the values of the quantization transform coefficient levels level supplied from the decoding section 211 on the basis of the transform information Tinfo supplied from the decoding section 211 to derive transform coefficients Coeff_IQ. This dequantization is an inverse process to the quantization performed by the quantization section 113 (FIG. 2) of the image encoding apparatus 100. It is to be noted that the dequantization section 115 (FIG. 2) performs dequantization similar to that by the dequantization section 212. The dequantization section 212 supplies the obtained transform coefficients Coeff_IQ to the inverse transform section 213.

The inverse transform section 213 inversely transforms the transform coefficients Coeff_IQ supplied from the dequantization section 212 on the basis of the transform information Tinfo supplied from the decoding section 211 and so forth to derive prediction residues D'. This inverse transform is an inverse process to the transform process performed by the transform section 112 (FIG. 2) of the image encoding apparatus 100. It is to be noted that the inverse transform section 116 performs inverse transform similar to that by the inverse transform section 213. The inverse transform section 213 supplies the obtained prediction residues D' to the arithmetic operation section 214.

The arithmetic operation section 214 adds the prediction residues D' supplied from the inverse transform section 213 and a prediction image P corresponding to the prediction residues D' to derive a local decoded image Rec. The arithmetic operation section 214 uses the obtained local decoded image Rec to reconstruct a decoded image for each picture unit and outputs the obtained decoded image to the outside of the image decoding apparatus 200. Further, the arithmetic operation section 214 supplies the local decoded image Rec also to the frame memory 215.

The frame memory 215 uses the local decoded image Rec supplied from the arithmetic operation section 214 to reconstruct a decoded unit for a picture unit and stores the decoded image into a buffer in the frame memory 215. The frame memory 215 reads out a decoded image designated by the prediction section 216 as a reference image from the buffer and stores the reference image into the prediction section 216. Further, the frame memory 215 may store the header information Hinfo, prediction information Pinfo, transform information Tinfo and so forth relating to the generation of the decoded image into a buffer in the frame memory 215.

The prediction section 216 acquires a decoded image stored in the frame memory 215 as a reference image on the basis of the prediction information Pinfo and so forth supplied from the decoding section 211 and performs an intra BC prediction process, an intra prediction process of a predetermined intra prediction mode or an inter prediction process using the reference image. The prediction section 216 supplies a prediction image P generated as result of the process by the prediction section 216 to the arithmetic operation section 214.

(Configuration Example of Prediction Section of Image Decoding Apparatus)

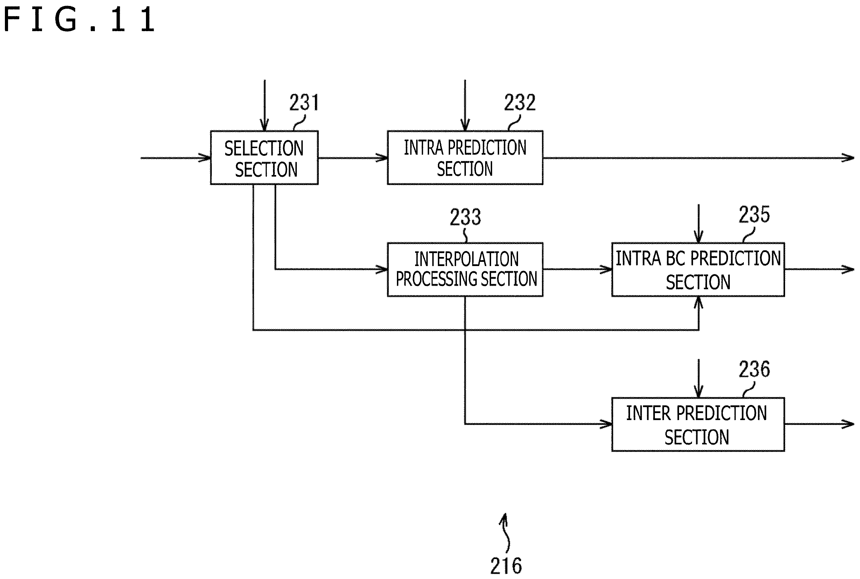

FIG. 11 is a block diagram depicting a configuration example of the prediction section 216 of FIG. 10.

The prediction section 216 of FIG. 11 includes a selection section 231, an intra prediction section 232, an interpolation processing section 233, an intra BC prediction section 235 and an inter prediction section 236.

The selection section 231 of the prediction section 216 reads out a reference image from the frame memory 215 on the basis of the prediction information Pinfo supplied from the decoding section 211 of FIG. 10 and supplies the reference image to the intra prediction section 232, interpolation processing section 233 or intra BC prediction section 235.

In particular, in the case where the mode information pred_mode_flag within the prediction information Pinfo indicates a process of the intra prediction processing type, the selection section 231 reads out a decoded image that is locally decoded and includes the PU of the decoding target stored in the frame memory 215 as a reference image. Then, in the case where PU.IntraBCflag does not indicate the intra BC prediction process, the selection section 231 supplies the read out reference image to the intra prediction section 232.

On the other hand, in the case where PU.IntraBCflag indicates the intra BC prediction process, when PU.IntraBCWithSubPelflag is 1 that indicates that the accuracy of the motion vector to be used in the intra BC prediction process is fractional pixel accuracy, the selection section 231 supplies the reference image to the interpolation processing section 233. On the other hand, in the case where PU.IntraBCWithSubPelflag is 0 that not indicate fractional pixel accuracy, the selection section 231 supplies the reference image to the intra BC prediction section 235.

Further, in the case where the mode information pred_mode_flag indicates the inter prediction process, the selection section 231 reads out a decoded image, stored in the frame memory 215, of a picture that has been decoded prior to the picture including the PU of the decoding target as a reference image. Then, the selection section 231 supplies the read out reference image to the interpolation processing section 233.

The intra prediction section 232 performs an intra prediction process for the PU of the decoding target using the reference image supplied from the selection section 231 in the intra prediction mode indicated by the prediction information Pinfo. The intra prediction section 232 supplies a prediction image P generated as a result of the intra prediction process to the arithmetic operation section 214.

The interpolation processing section 233 performs an interpolation process for the reference image supplied from the selection section 231 similarly to the interpolation processing section 133 of FIG. 3. The interpolation processing section 233 supplies pixel values of fractional pixels of the reference image generated by the interpolation process to the intra BC prediction section 235 and the inter prediction section 236.

The intra BC prediction section 235 performs, on the basis of the motion vector of fractional pixel accuracy in a screen image of one point of the PU of the decoding target in the prediction information Pinfo supplied from the decoding section 211, an intra BC prediction process for the PU of the decoding target using the reference image supplied from the interpolation processing section 233. The intra BC prediction section 235 supplies a prediction image P generated as a result of the intra BC prediction process to the arithmetic operation section 214.

Further, the intra BC prediction section 235 performs, on the basis of the motion vector of integral pixel accuracy in a screen image of one point of the PU of the decoding target in the prediction information Pinfo, an intra BC prediction process for the PU of the decoding target using the reference image supplied from the selection section 231. The intra BC prediction section 235 supplies a prediction image P generated as a result of the intra BC prediction process to the arithmetic operation section 214.

The inter prediction section 236 performs, on the basis of the motion vector of fractional pixel accuracy between screen images of one point of the PU of the decoding target supplied from the decoding section 211, an inter prediction process for the PU of the decoding target using the reference image supplied from the interpolation processing section 233. The intra BC prediction section 235 supplies a prediction image P generated as a result of the inter BC prediction process to the arithmetic operation section 214.

(Description of Processing of Image Decoding Apparatus)

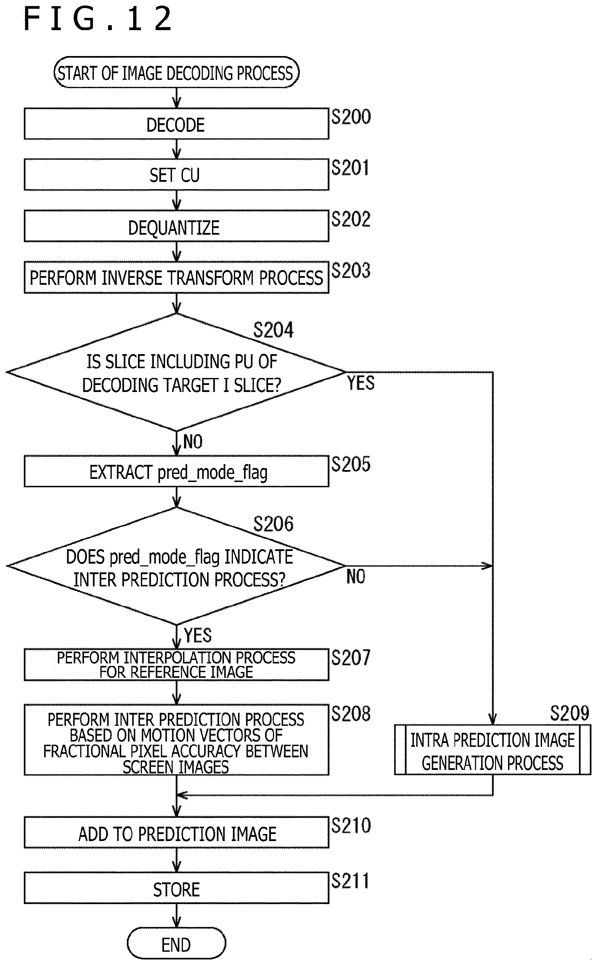

FIG. 12 is a flow chart illustrating an image decoding process of the image decoding apparatus 200 of FIG. 10.

At step S200, the decoding section 211 decodes an encoded stream supplied to the image decoding apparatus 200 to obtain encoding parameters and quantization transform coefficient levels level. The decoding section 211 supplies the encoding parameters to the associated blocks. Further, the decoding section 211 supplies the quantization transform coefficient levels level to the dequantization section 212. At step S201, the decoding section 211 divides an LCU on the basis of split flag included in the encoding parameters and sets CUs corresponding to the quantization transform coefficient levels level to CUs (PUs, TUs) of a decoding target. Processes at steps S202 to S210 hereinafter described are performed for each of the CUs (PUs, TUs) of the decoding target.

At step S202, the dequantization section 212 dequantizes the quantization transform coefficient levels level obtained by the process at step S201 to derive transform coefficients Coeff_IQ. This dequantization is an inverse process to the quantization performed at step S105 (FIG. 5) of the image encoding process and is a process similar to the dequantization performed at step S106 (FIG. 5) of the image encoding process.

At step S203, the inverse transform section 213 performs an inverse transform process for the transform coefficients Coeff_IQ obtained by the process at step S202 to derive prediction residues D'. This inverse transform process is an inverse process to the transform process performed at step S104 (FIG. 5) of the image encoding process and is a process similar to the inverse transform process performed at step S107 (FIG. 5) of the image encoding process.

At step S204, the selection section 231 (FIG. 11) of the prediction section 216 decides whether a slice including the PU of the decoding target is an I slice on the basis of the encoding parameters supplied from the decoding section 211. In the case where it is decided at step S204 that the slice is not an I slice, namely, in the case where the slice including the PU of the decoding target is a P slice or a B slice, the processing advances to step S205.

At step S205, the selection section 231 extracts mode information pred_mode_flag from the encoding parameters. At step S206, the selection section 231 decides whether the mode information pred_mode_flag indicates the inter prediction process.

In the case where it is decided at step S206 that the mode information pred_mode_flag indicates the inter prediction process, the selection section 231 reads out, on the basis of the prediction information Pinfo, a decoded image of a picture decoded preceding to a picture that includes the PU of the decoding target as a reference image from the frame memory 215. Then, the selection section 231 supplies the read out reference image to the interpolation processing section 233 and advances the processing to step S207.

At step S207, the interpolation processing section 233 performs an interpolation process for the reference image supplied from the selection section 231. The interpolation processing section 233 supplies pixel values of fractional pixels of the reference image generated by the interpolation process to the inter prediction section 236.

At step S208, the inter prediction section 236 performs an intra prediction process for the PU of the decoding target using the reference image on the basis of the motion vector of fractional pixel accuracy between screen images of one point of the PU of the decoding target in the prediction information Pinfo. The inter prediction section 236 supplies a prediction image P generated as a result of the intra prediction process to the arithmetic operation section 214 and advances the processing to step S210.

On the other hand, in the case where it is decided at step S204 that the slice is an I slice, or in the case where it is decided at step S206 that the mode information pred_mode_flag does not indicate the inter prediction process, the processing advances to step S209.

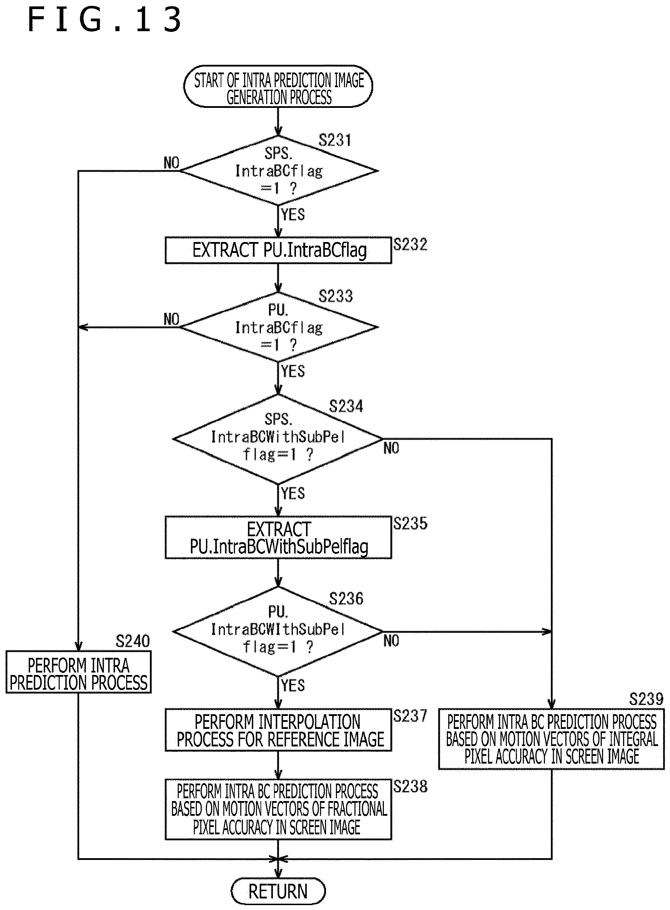

At step S209, the prediction section 216 performs an intra prediction image generation process by performing an intra prediction process or an intra BC prediction process to generate a prediction image P. Details of this intra prediction image generation process are hereinafter described with reference to FIG. 13. After the process at step S209, the processing advances to step S210.

At step S210, the arithmetic operation section 214 adds the prediction residues D' supplied from the inverse transform section 213 to the prediction image P supplied from the prediction section 216 to derive a local decoded image Rec. The arithmetic operation section 214 reconstructs a decoded image for each picture unit using the obtained local decoded images and outputs the obtained decoded image to the outside of the image decoding apparatus 200. Further, the arithmetic operation section 214 supplies the local decoded images Rec also to the frame memory 215.

At step S211, the frame memory 215 reconstructs a decoded image for each picture unit using the local decoded images Rec supplied from the arithmetic operation section 214 and stores the decoded images into a buffer in the frame memory 215. Then, the processing ends.

FIG. 13 is a flow chart illustrating details of the intra prediction image generation process at step S209 of FIG. 12.

At step S231 of FIG. 13, the selection section 231 decides whether SPS.IntraBCflag included in the encoding parameters supplied from the decoding section 211 is 1 that indicates that the intra BC prediction process is to be validated.

In the case where it is decided at step S231 that SPS.IntraBCflag is 1, the processing advances to step S232. At step S232, the selection section 231 extracts PU.IntraBCflag from the prediction information Pinfo. At step S233, the selection section 231 decides whether PU.IntraBCflag is 1 that indicates the intra BC prediction process.

In the case where it is decided at step S233 that PU.IntraBCflag is 1, the processing advances to step S234. At step S234, the selection section 231 decides whether SPS.IntraBCWithSubPelflag included in the encoding parameters is 1 that indicates that the intra BC prediction process using the motion vector of fractional pixel accuracy is to be validated.

In the case where it is decided at step S234 that SPS.IntraBCWithSubPelflag is 1, the processing advances to step S235. At step S235, the selection section 231 extracts PU.IntraBCWithSubPelflag from the prediction information Pinfo.

At step S236, the selection section 231 decides whether PU.IntraBCWithSubPelflag is 1 that indicates that the accuracy of the motion vector to be used in the intra BC prediction process is 1 that indicates fractional pixel accuracy.

In the case where it is decided at step S236 that PU.IntraBCWithSubPelflag is 1, the selection section 231 supplies the reference image to the interpolation processing section 233 and advances the processing to step S237. At step S237, the interpolation processing section 233 performs an interpolation process for the reference image to generate pixel values for the fractional pixels of the reference image and supplies the pixel values to the intra BC prediction section 235.

At step S238, the intra BC prediction section 235 performs, on the basis of the motion vector of fractional pixel accuracy in a screen image of one point of the PU of the decoding target in the prediction information Pinfo, an intra BC prediction process for the PU of the decoding target using the pixel values of the fractional pixels of the reference image. The intra BC prediction section 235 supplies a prediction image P generated as a result of the intra BC prediction process to the arithmetic operation section 214, and returns the processing to step S209 of FIG. 12 and advances the processing to step S210.

On the other hand, in the case where it is decided at step S234 that SPS.IntraBCWithSubPelflag is not 1, or in the case where it is decided at step S236 that PU.IntraBCWithSubPelflag is not 1, the selection section 231 supplies the reference image to the intra BC prediction section 235.

Then at step S239, the intra BC prediction section 235 performs an intra BC prediction process using the pixel values of the pixels of the reference image on the basis of the motion vector of integral pixel accuracy in the screen image of one point of the PU of the decoding target in the prediction information Pinfo. The intra BC prediction section 235 supplies a prediction image P generated as a result of the intra BC prediction process to the arithmetic operation section 214, and returns the processing to step S209 of FIG. 12 and advances the processing to step S210.

On the other hand, in the case where it is decided at step S231 that SPS.IntraBCflag is not 1 or in the case where it is decided at step S233 that PU.IntraBCflag is not 1, the selection section 231 supplies the reference image to the intra prediction section 232.

Then at step S240, the intra prediction section 232 performs an intra prediction process for the PU of the decoding target using the reference image supplied from the selection section 231 in the intra prediction mode indicated by the prediction information Pinfo. The intra BC prediction section 235 supplies a prediction image P generated as a result of the intra prediction process to the arithmetic operation section 214, and returns the processing to step S209 of FIG. 12 and advances the processing to step S210.

The image decoding apparatus 200 can perform an intra BC prediction process using a motion vector of fractional pixel accuracy in a screen image in such a manner as described above. Accordingly, the accuracy of the prediction image P to be generated by the intra BC prediction process can be enhanced.

<Second Embodiment>

(Configuration Example of Prediction Section of Image Encoding Apparatus)

The configuration of a second embodiment of an image encoding apparatus as an image processing apparatus to which the present disclosure is applied is same as the configuration of the image encoding apparatus 100 of FIG. 2 except the configuration of the prediction section 119 and the configuration of the encoding parameters. Accordingly, description of any other than the configuration and the processing of the prediction section and the configuration of the encoding parameters in the second embodiment of the image encoding apparatus is suitably omitted.

FIG. 14 is a block diagram depicting a configuration example of the prediction section in the second embodiment of the image encoding apparatus.

Of components depicted in FIG. 14, components same as those of FIG. 3 are denoted by the same reference signs. Overlapping description is suitably omitted.

The configuration of the prediction section 300 of FIG. 14 is different from the configuration of the prediction section 119 of FIG. 3 in that it includes a selection section 301, a motion vector detection section 304, an intra BC prediction section 305 and a determination section 307 in place of the selection section 131, motion vector detection section 134, intra BC prediction section 135 and determination section 137.

The prediction section 300 not only can generate, upon intra BC prediction process, a prediction image P by a parallel displacement using one motion vector but also can generate a prediction image P by affine transform using a plurality of (three in the second embodiment) motion vectors. In the following, in the case where an intra BC prediction process for generating a prediction image P by a parallel displacement using one motion vector and an intra BC prediction process for generating a prediction image P by affine transform using a plurality of motion vectors are to be specifically identified from each other, the former is referred to as parallel displacement intra BC prediction process while the latter is referred to as affine transform intra BC prediction process.

In the second embodiment, since also it is possible to perform an affine transform intra BC prediction process, SPS.IntraBCWithAffineflag that is a fixed value indicative of whether the affine transform intra BC prediction process is to be validated is newly included into the SPS of the header information Hinfo of the encoding parameters. Further, in the case where SPS.IntraBCWithAffineflag indicates to validate the affine transform intra BC prediction process, variable PU.IntraBCWithAffineflag indicative of whether the prediction process for a PU is the affine transform intra BC prediction process is newly included into the prediction information Pinfo. PU.IntraBCWithAffineflag (affine transform intra BC prediction process information) can be regarded as information indicating whether the affine transform intra BC prediction process is to be performed as the prediction process for a PU.

The selection section 301 of the prediction section 300 determines, on the basis of fixed values of encoding parameters supplied from the control section 101, values each of which becomes a candidate for split flag of prediction information Pinfo, mode information pred_mode_flag, PU.IntraBCWithSubPelflag, PU.IntraBCflag, PU.IntraBCWithAffineflag, information indicative of the intra prediction mode, a motion vector and so forth. The selection section 131 supplies the determined values to the associated components.

Further, the selection section 301 acquires, for each of the values that become candidates for the mode information pred_mode_flag and PU.IntraBCflag, a decoded image stored in the frame memory 118 as a reference image on the basis of the value. The selection section 301 supplies, for each of the values that become candidates for the mode information pred_mode_flag, PU.IntraBCWithSubPelflag and PU.IntraBCflag, to the intra prediction section 132, interpolation processing section 133 or motion vector detection section 304 on the basis of the value.

Furthermore, the selection section 301 notifies the motion vector detection section 304 of the number of motion vectors on the basis of the values that become candidates for the mode information pred_mode_flag, PU.IntraBCflag and PU.IntraBCWithAffineflag.

In particular, in the case where the value that becomes a candidate for the mode information pred_mode_flag is a value indicative of a process of the intra prediction processing type and the value that becomes a candidate for PU.IntraBCflag is a value indicative of the intra BC prediction process and besides the value that becomes a candidate for PU.IntraBCWithAffineflag is a value indicative of the affine transform intra BC prediction process, the selection section 301 notifies the motion vector detection section 304 of 3 as the number of motion vectors.

On the other hand, in the case where the value that becomes a candidate for the mode information pred_mode_flag is a value indicative of a process of the intra prediction processing type and the value that becomes a candidate for PU.IntraBCflag is a value indicative of the intra BC prediction process while the value that becomes a candidate for PU.IntraBCWithAffineflag is not a value indicative of the affine transform intra BC prediction process, the selection section 301 notifies the motion vector detection section 304 of 1 as the number of motion vectors.

Meanwhile, in the case where the value that becomes a candidate for the mode information pred_mode_flag is a value indicative of the inter prediction process, the selection section 301 notifies the motion vector detection section 304 of 1 as the number of motion vectors.

The motion vector detection section 304 sets a PU (CU) of an encoding target to a picture of an encoding target on the basis of values that become candidates for split flag. In the case where the number of motion vectors notified of from the selection section 301 is three, the motion vector detection section 304 detects, on the basis of the reference image supplied from the interpolation processing section 133 or the selection section 301, the motion vectors in a screen image of three vertices of the PU of the encoding target in fractional pixel accuracy or integral pixel accuracy similarly to the motion vector detection section 134 of FIG. 3.

Then, the motion vector detection section 304 uses the motion vectors to generate, for each of current division blocks of a size (for example, $1 \times 1$ pixel, $2 \times 2$ pixels) smaller than 4 (horizontal) $\times$ 4 (vertical) pixels configuring the PU of the encoding target, a motion vector in a screen image of one point (for example, the central point) of the current division block.

On the other hand, in the case where the number of motion vectors notified of from the selection section 301 is one, the motion vector detection section 304 detects, on the basis of the reference image supplied from the interpolation processing section 133 or the selection section 301, a motion vector of fractional pixel accuracy or integral pixel accuracy in a screen image or a motion vector of fractional pixel accuracy between screen images of one point of the PU of the encoding target similarly to the motion vector detection section 134.

The motion vector detection section 304 supplies a motion vector of fractional pixel accuracy in a screen image of one point of the PU of the encoding target or each current division block and the reference image supplied from the interpolation processing section 133 to the intra BC prediction section 305. Further, the motion vector detection section 304 supplies a motion vector of integral pixel accuracy in the screen image of one point of the PU of the encoding target or each current division block and the reference image supplied from the selection section 301 to the intra BC prediction section 305. Further, the motion vector detection section 304 supplies a motion vector of fractional pixel accuracy between screen images of one point of the PU of the encoding target and the reference image supplied from the interpolation processing section 133 to the inter prediction section 136.

The intra BC prediction section 305 performs a parallel displacement intra BC prediction process or an affine transform intra BC prediction process for the PU of the encoding target on the basis of a value that becomes a candidate for PU.IntraBCWithAffineflag. In particular, in the case where the value that becomes a candidate for PU.IntraBCWith-Affineflag is a value that does not indicate the affine transform intra BC prediction process, the intra BC prediction section 305 performs a parallel displacement intra BC prediction process for the PU of the encoding target using the reference image on the basis of the motion vector of fractional pixel accuracy or integral pixel accuracy in the screen image of one point of the PU of the encoding target.

On the other hand, in the case where the value that becomes a candidate for PU.IntraBCWithAffineflag is a value that indicates the affine transform intra BC prediction process, the intra BC prediction section 305 performs an affine transform intra BC prediction process for the PU of the encoding target using the reference image on the basis of the motion vector of fractional pixel accuracy or integral pixel accuracy of each current division block.

The affine transform intra BC prediction process is a process for generating a prediction image P by affine transforming a block decoded already in a picture same as that of the PU on the basis of the motion vectors in a screen image of the three vertices of the PU. This affine transform is performed, on the basis of a motion vector for each of the current division blocks, by parallelly displacing, for each current division block, a block of a PU size decoded already, which exists at a position spaced by the motion vector from the current division block in a picture same as that of the PU.

The intra BC prediction section 305 supplies a prediction image P generated as a result of the parallel displacement intra BC prediction process or the affine transform intra BC prediction process to the determination section 307.

The determination section 307 calculates, for each of values that become candidates for split flag, the mode information pred_mode_flag, PU.IntraBCWithSubPelflag, PU.IntraBCflag, PU.IntraBCWithAffineflag, the information indicative of the intra prediction mode and so forth, the RD cost of the CU of the encoding target on the basis of the prediction image P supplied from the intra prediction section 132, intra BC prediction section 305 or inter prediction section 136 or the like. Then, the determination section 307 determines a value that becomes a candidate for split flag, the mode information pred_mode_flag, PU.IntraBCWithSubPelflag, PU.IntraBCflag, PU.IntraBCWithAffineflag, the information indicative of the intra prediction mode and so forth, in regard to which the RD cost is lowest as an optimum value, and supplies the optimum value to the control section 101. The determination section 307 supplies a prediction image P corresponding to the optimum value to the arithmetic operation section 111 and the arithmetic operation section 117.

(Description of Motion Vectors of Fractional Pixel Accuracy of Three Vertices in Screen Image)

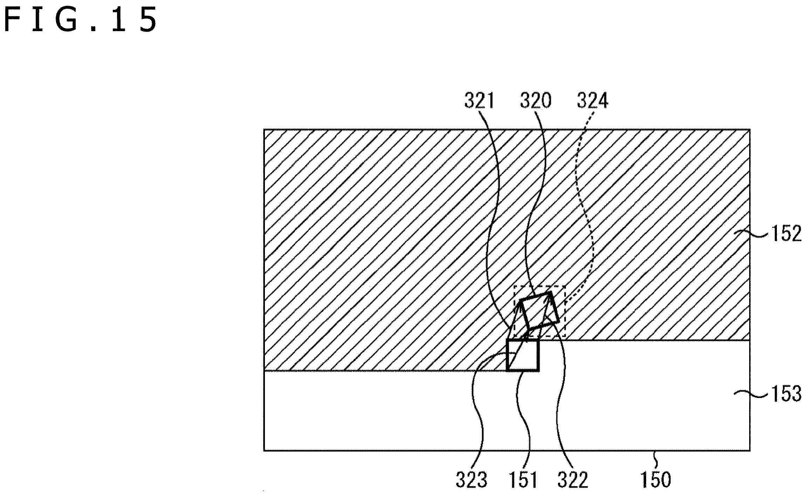

FIG. 15 is a view illustrating motion vectors of fractional pixel accuracy in a screen image of three vertices of a PU of an encoding target detected by the motion vector detection section 304 of FIG. 14.

It is to be noted that, in FIG. 15, components same as those of FIG. 4 are denoted by the same reference signs and description of them is omitted because this is repetitive.

In the case where a value that becomes a candidate for PU.IntraBCWithAffineflag is a value indicative of the affine transform intra BC prediction process, the selection section 301 notifies the motion vector detection section 304 of 3 as the number of motion vectors. The motion vector detection section 304 detects, on the basis of this notification, motion vectors 321 to 323 of fractional pixel accuracy in a screen image of three vertices (in the example of FIG. 15, the left upper, right upper and left lower vertices) of the PU 151 on the basis of the pixel values of fractional pixels of the reference image supplied from the interpolation processing section 133.

The intra BC prediction section 305 performs an affine transform intra BC prediction process on the basis of the motion vectors 321 to 323. Consequently, pixel values of fractional pixels of a block 320 in the region 152 having three vertices at positions individually spaced by the motion vectors 321 to 323 from the three vertices of the PU 151 are generated as a prediction image P.

It is to be noted that, in the interpolation process of the interpolation processing section 133, for example, pixel values of a reference image of a block 324 formed from pixels of the reference image including the block 320 are used for generation of pixel values of the fractional pixels of the block 320.

(Description of Compensation by Affine Transform Intra BC Prediction Process)

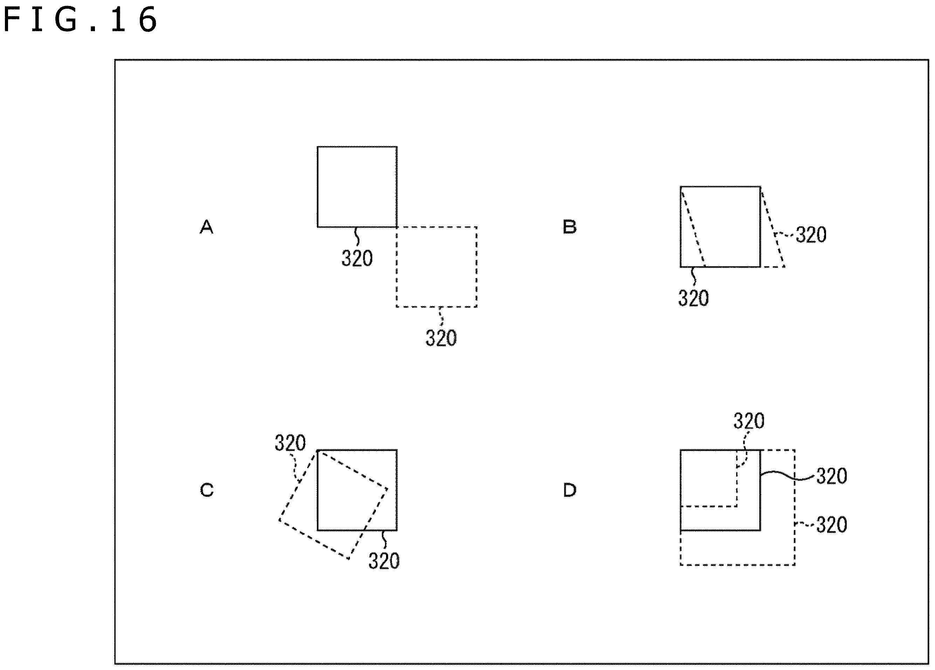

FIG. 16 is a view illustrating compensation by the affine transform intra BC prediction process.

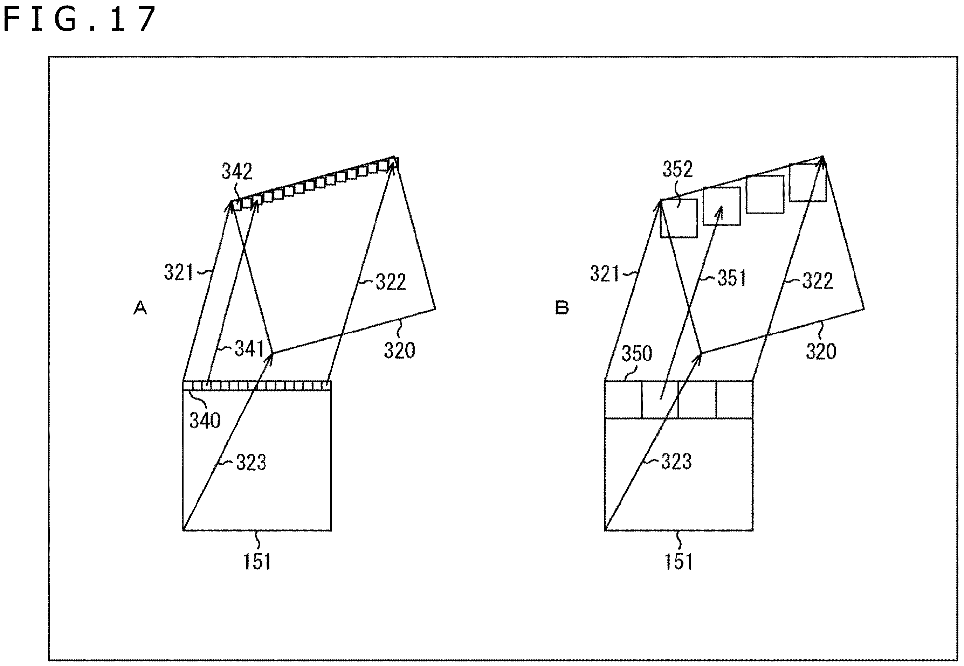

In the example of FIG. 16, an affine transform intra BC prediction process is performed for the PU 151 on the basis of the motion vectors 321 to 323 of FIG. 15. This similarly applies also to FIG. 17 hereinafter described.

In this case, in the affine transform intra BC prediction process, the block 320 can be parallelly displaced (Translation) as depicted in A of FIG. 16 by affine transforming the block 320 on the basis of the motion vectors 321 to 323. Further, it is possible to skew the block 320 as depicted in B of FIG. 16, to rotate the block 320 as depicted in C of FIG. 16 or to expand or reduce the block 320 as depicted in D of FIG. 16.

Accordingly, it is possible to generate a prediction image P in which a parallel displacement or a movement in a rotation direction in a screen image or a variation in shape such as expansion, reduction or skew is compensated for. It is to be noted that, in FIG. 16, the block 320 before affine transform is indicated by a solid line, and the block 320 after affine transform is indicated by a broken line.

In contrast, in the case where a parallel displacement intra BC prediction process is performed, only a motion vector of one point in a screen image is detected. In other words, the motion vectors 321 to 323 are made same. Accordingly, in the parallel displacement intra BC prediction process, only a parallel displacement can be compensated for in the prediction image P.

(Description of Method of Affine Transform)

FIG. 17 is a view illustrating a method of affine transform in the affine transform intra prediction process.

As depicted in A of FIG. 17, in the case where an affine transform intra BC prediction process is to be performed, the motion vector detection section 304 divides the PU 151 into current division blocks 340 of a size (in the example of FIG. 17, $1 \times 1$ pixel) smaller than $4 \times 4$ pixels. Then, the motion vector detection section 304 generates a motion vector 341 of one point (for example, the central point) of each current division block 340 using the motion vectors 321 to 323. The intra BC prediction section 305 parallelly displaces a block 342 of a size equal to that of the current division block 340 in the region 152 on the basis of the motion vector 341 of each current division block 340 to perform affine transform of the block 320.

In contrast, in the case where affine transform in the affine transform intra BC prediction process is to be performed, the PU 151 is divided into current division blocks 350 of 4 × 4 pixels as depicted in B of FIG. 17 similarly as in the inter prediction process in which the affine transform described in NPL 2 is used. Then, a motion vector 351 of one point of each current division block 350 is generated using the motion vectors 321 to 323. Then, a block 352 of a size equal to that of the current division block 350 in the region 152 is parallelly displaced on the basis of the motion vector 351 of each current division block 350 to perform affine transform of the block 320.

In this case, since the size of the current division block 350 is greater in comparison with that of the current division block 340, the error of the motion vector of each current division block 350 becomes great. Generally, since the motion vector between screen images that are close to each other in time is frequently small, in the inter prediction process, the influence of the error upon a prediction image is small. However, since the possibility that a motion vector in a screen image may great is high, the influence of this error upon a prediction image is great.

Accordingly, in affine transform in the affine transform intra BC prediction process, different from affine transform in the inter prediction process in which the affine transform described in NPL 2 is used, the size of the current division block is made smaller than 4 × 4 pixels. Consequently, the accuracy of the prediction image P can be enhanced.

(Description of Processing of Image Encoding Apparatus)

The image encoding method in the second embodiment of the image encoding apparatus is different from the image encoding process of FIG. 5 in the configuration of encoding parameters set at step S101 and the prediction process at step S102. Accordingly, in the following, a setting process and a prediction process of SPS.IntraBCWithAffineflag set newly as an encoding parameter in the process at step S101 is described.

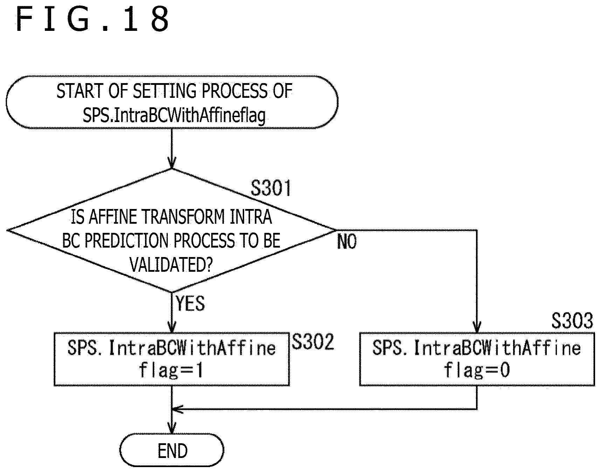

FIG. 18 is a flow chart illustrating a setting process of SPS.IntraBCWithAffineflag in the second embodiment of the image encoding apparatus.

At step S301 of FIG. 18, the control section 101 decides on the basis of an input from the outside and so forth whether the affine transform intra BC prediction process is to be validated. In the case where it is decided at step S301 that the affine transform intra BC prediction process is to be validated, the processing advances to step S302.

At step S302, the control section 101 sets SPS.IntraBCWithAffineflag to 1 that indicates that the affine transform intra BC prediction process is to be validated and ends the processing.

On the other hand, in the case where it is decided at step S302 that the affine transform intra BC prediction process is not to be validated, the processing advances to step S303. At step S303, the control section 101 sets SPS.IntraBCWithAffineflag to 0 that indicates that the affine transform intra BC prediction process is to be invalidated and ends the processing.

The prediction process in the second embodiment of the image encoding apparatus is different from the prediction process of FIG. 7 in the intra BC prediction cost calculation process and the optimum intra prediction determination process at step S149 of FIG. 7.

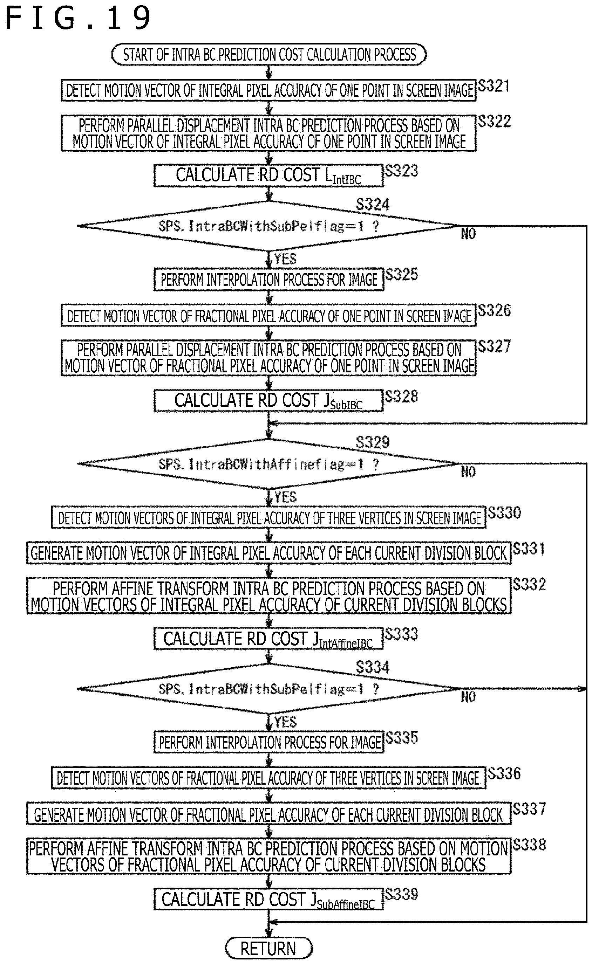

FIG. 19 is a flow chart illustrating the intra BC prediction cost calculation process in the second embodiment of the image encoding apparatus.

Processes at steps S321 to S328 of FIG. 19 are similar to the processes at steps S171 to S178 of FIG. 8.

At step S329, the selection section 301 decides whether SPS.IntraBCWithAffineflag supplied from the control section 101 is 1 that indicates that the affine transform intra prediction process is to be validated.

In the case where it is decided at step S329 that SPS.IntraBCWithAffineflag is 1, the selection section 301 determines the value that becomes a candidate for the mode information pred_mode_flag to the value indicative of a process of the intra production processing type. Further, the selection section 301 determines PU.IntraBCflag to a value indicative of the intra BC prediction process and determines PU.IntraBCWithSubPelflag to a value that indicates that the accuracy of motion vectors to be used in the intra BC prediction process is not fractional pixel accuracy. Furthermore, the selection section 301 determines PU.IntraBCWithAffineflag to a value indicative of the affine transform intra BC prediction process. Then, the selection section 301 supplies the reference image and 3 as the number of motion vectors to the motion vector detection section 304 and advances the processing to step S330.

At step S330, the motion vector detection section 304 detects motion vectors of integral pixel accuracy in a screen image of three vertices of the PU of the encoding target on the basis of the reference image and the number of motion vectors supplied from the selection section 301.

At step S331, the motion vector detection section 304 generates motion vectors of integral pixel accuracy of the current division blocks using the motion vectors of integral pixel accuracy in the screen image of the three vertices of the PU of the encoding target. The motion vector detection section 304 supplies the motion vectors of integral pixel accuracy of the current division blocks and the reference image supplied from the selection section 301 to the intra BC prediction section 305.

At step S332, the intra BC prediction section 305 performs, on the basis of the motion vectors of integral pixel accuracy of the current division blocks supplied from the motion vector detection section 304, an affine transform intra BC prediction process for the PU of the encoding target using the reference image. The intra BC prediction section 305 supplies a prediction image P generated as a result of the affine transform intra BC prediction process to the determination section 307.

At step S333, the determination section 307 calculates, on the basis of the prediction image P supplied from the intra BC prediction section 305 and so forth, the RD cost $J_{IntAffineIBC}$ of the CU of the encoding target in the case where the mode information pred_mode_flag has a value indicative of a process of the intra prediction processing type; PU.IntraBCflag has a value indicative of the intra BC prediction process; PU.IntraBCWithSubPelflag has a value that indicates that the accuracy of the motion vectors to be used in the intra BC prediction process is not fractional pixel accuracy; and PU.IntraBCWithAffineflag has a value indicative of the affine transform intra BC prediction process.

At step S334, the selection section 301 decides whether SPS.IntraBCWithSubPelflag supplied from the control section 101 is 1 that indicates that the intra BC prediction process using the motion vectors of fractional pixel accuracy is to be validated.

In the case where it is decided at step S334 that SPS.IntraBCWithSubPelflag is 1, the selection section 301 determines a value that becomes a candidate for the mode information pred_mode_flag to a value indicative of a process of the intra prediction processing type. Further, the selection section 301 determines PU.IntraBCflag to a value indicative of the intra BC prediction process and determines PU.IntraBCWithSubPelflag to a value that indicates that the accuracy of the motion vectors to be used in the intra BC prediction process is fractional pixel accuracy. Furthermore, the selection section 301 determines PU.IntraBCWithAffineflag to a value indicative of the affine transform intra BC prediction process. Then, the selection section 301 supplies the reference image and 3 as the number of motion vectors to the motion vector detection section 304 and advances the processing to step S335.

At step S335, the interpolation processing section 133 performs an interpolation process for the reference image supplied from the selection section 301 to generate pixel values of fractional pixels of the reference image. The interpolation processing section 133 supplies the pixel values of the fractional pixels of the reference image to the motion vector detection section 304.

At step S336, the motion vector detection section 304 detects, on the basis of the reference image supplied from the interpolation processing section 133 and the number of motion vectors supplied from the selection section 301, motion vectors of fractional pixel accuracy in the screen image of three vertices of the PU of the encoding target.

At step S337, the motion vector detection section 304 generates motion vectors of fractional pixel accuracy of the current division blocks using the motion vectors of fractional pixel accuracy in the screen image of the three vertices of the PU of the encoding target. The motion vector detection section 304 supplies the motion vectors of fractional pixel accuracy of the current division blocks and the reference image supplied from the interpolation processing section 133 to the intra BC prediction section 305.

At step S338, the intra BC prediction section 305 performs, on the basis of the motion vectors of fractional pixel accuracy of the current division blocks supplied from the motion vector detection section 304, an affine transform intra BC prediction process for the PU of the encoding target using the reference image. The intra BC prediction section 305 supplies a prediction image P generated as a result of the affine transform intra BC prediction process to the determination section 307.

At step S339, the determination section 307 calculates, on the basis of the prediction image P supplied from the intra BC prediction section 305 and so forth, the RD cost $J_{SubAffineIBC}$ of the CU of the encoding target in the case where the mode information pred_mode_flag has a value indicative of a process of the intra prediction processing type; PU.IntraBCflag has a value indicative of the intra BC prediction process; PU.IntraBCWithSubPelflag has a value indicating that the accuracy of the motion vectors to be used in the intra BC prediction process is fractional pixel accuracy; and PU.IntraBCWithAffineflag has a value indicative of the affine transform intra BC prediction process. Then, the intra BC prediction cost calculation process ends.

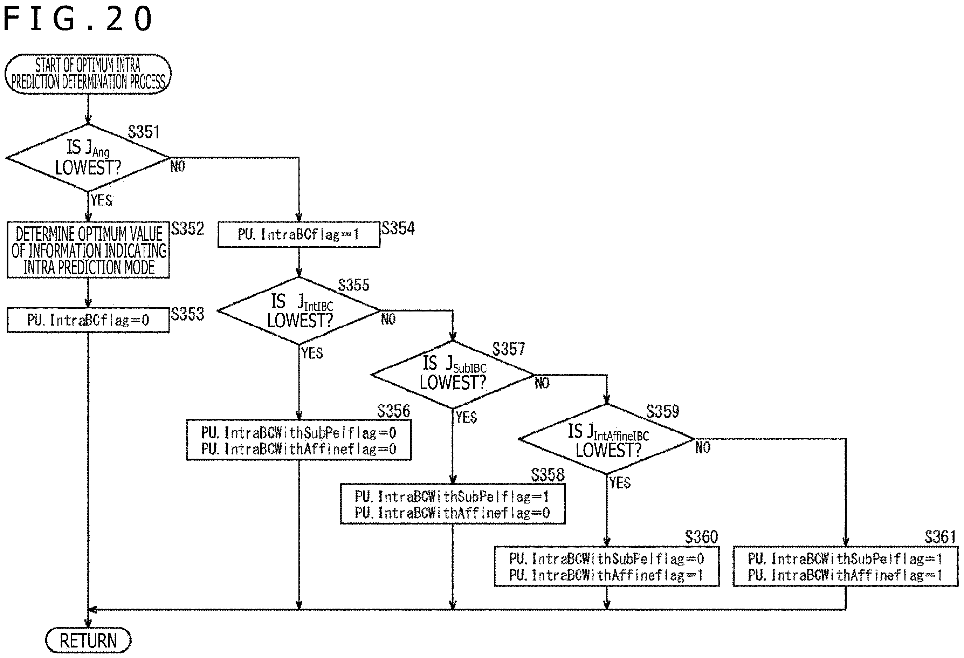

FIG. 20 is a flow chart illustrating the optimum intra prediction determination process in the second embodiment of the image encoding apparatus.

Processes at steps S351 to S355 of FIG. 20 are similar to the processes at steps S191 to S195 of FIG. 9, and therefore, description of them is omitted.

At step S356, the determination section 307 determines the optimum value of PU.IntraBCWithSubPelflag to 0 that indicates that the accuracy of motion vectors to be used in the intra BC prediction process is not fractional pixel accuracy. Further, the determination section 307 determines the optimum value of PU.IntraBCWithAffineflag to 0 that does not indicate the affine transform intra BC prediction process. Then, the optimum intra prediction determination process ends.

On the other hand, in the case where it is decided at step S355 that the RD cost $J_{IntIBC}$ is not lowest, the processing advances to step S357. At step S357, the determination section 307 decides whether the RD cost $J_{SubIBC}$ is lowest among the RD cost $J_{Ang}$, RD cost $J_{IntIBC}$, RD cost $J_{SubIBC}$, RD cost $J_{IntAffineIBC}$ and RD cost $J_{SubAffineIBC}$ of the values that become candidates for the information indicative of the intra prediction mode. In the case where it is decided at step S357 that the RD cost $J_{AffineIBC}$ is lowest, the processing advances to step S358.

At step S358, the determination section 307 determines the optimum value of PU.IntraBCWithSubPelflag to 1 that indicates that the accuracy of motion vectors to be used in the intra BC prediction process is fractional pixel accuracy. Further, the determination section 307 determines the optimum value of PU.IntraBCWithAffineflag to 0 that does not indicate the affine transform intra BC prediction process. Then, the optimum intra prediction determination process ends.

On the other hand, in the case where it is decided at step S357 that the RD cost $J_{SubIBC}$ is not lowest, the processing advances to step S359. At step S359, the determination section 307 decides whether the RD cost $J_{IntAffineIBC}$ is lowest among the RD cost $J_{Ang}$, RD cost $J_{IntIBC}$, RD COSt $J_{SubIBC}$, RD COSt $J_{IntAffineIBC}$ and RD cost $J_{SubAffineIBC}$ of the values that become candidates for the information that indicates the intra prediction mode. In the case where it is decided at step S359 that the RD cost $J_{IntAffineIBC}$ is lowest, the processing advances to step S360.

At step S360, the determination section 307 determines the optimum value of PU.IntraBCWithSubPelflag to 0 that indicates that the accuracy of motion vectors to be used in the intra BC prediction process is not fractional pixel accuracy. Further, the determination section 307 determines the optimum value of PU.IntraBCWithAffineflag to 1 that indicates the affine transform intra BC prediction process.

In the case where it is decided at step S359 that the RD cost $J_{IntAffineIBC}$ is not lowest, namely, in the case where the RD cost $J_{SubAffineIBC}$ is lowest, the processing advances to step S361.

At step S361, the determination section 307 determines the optimum value of PU.IntraBCWithSubPelflag to 1 that indicates that the accuracy of motion vectors to be used in the intra BC prediction process is fractional pixel accuracy. Further, the determination section 307 determines the optimum value of PU.IntraBCWithAffineflag to 1 indicative of the affine transform intra BC prediction process. Then, the optimum intra prediction determination process ends.

The second embodiment of the image encoding apparatus can perform an affine transform intra prediction process in such a manner as described above. Accordingly, it is possible to generate a prediction image P in which not only a parallel displacement in a screen image but also a movement in a rotation direction in the screen image or a variation in shape such as expansion, reduction or skew are compensated for. As a result, the accuracy of the intra BC prediction process can be enhanced.

(Configuration Example of Prediction Section of Image Decoding Apparatus)

The configuration of the second embodiment of the image decoding apparatus as an image processing apparatus to which the present technology is applied and which decodes an encoded stream generated by the second embodiment of the image encoding apparatus is same as the configuration of the image decoding apparatus 200 of FIG. 10 except the configuration of the prediction section 216 and except that the encoding parameters include SPS.IntraBCWithAffineflag and PU.IntraBCWithAffineflag. Accordingly, description of any other than the configuration and the processing of the prediction section in the second embodiment of the image decoding apparatus is suitably omitted.

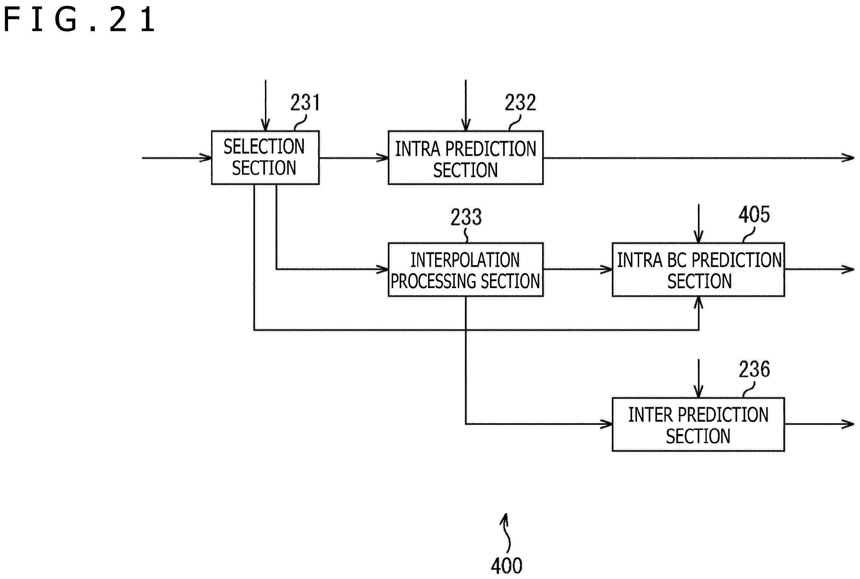

FIG. 21 is a block diagram depicting a configuration example of the prediction section in the second embodiment of the image decoding apparatus.

Of the components depicted in FIG. 21, components same as those of FIG. 11 are denoted by the same reference signs. Overlapping description is suitably omitted.

The configuration of the prediction section 400 of FIG. 21 is different from the configuration of the prediction section 216 of FIG. 11 in that an intra BC prediction section 405 is provided in place of the intra BC prediction section 235.

The intra BC prediction section 405 performs an affine transform intra BC prediction process for a PU of a decoding target in the case where PU.IntraBCWithAffineflag within the prediction information Pinfo supplied from the decoding section 211 is 1 indicative of the affine transform intra prediction process.

In particular, the intra BC prediction section 405 generates, on the basis of motion vectors of fractional pixel accuracy or integral pixel accuracy in a screen image of three vertices of a PU of a decoding target, motion vectors of fractional pixel accuracy or integral pixel accuracy of current division blocks similarly to the motion vector detection section 304 of FIG. 14. The intra BC prediction section 405 performs, on the basis of motion vectors of fractional pixel accuracy or integral pixel accuracy of current division blocks, an affine transform intra BC prediction process for a PU of a decoding target using a reference image supplied from the interpolation processing section 233 or the selection section 231. The intra BC prediction section 405 supplies a prediction image P generated as a result of the affine transform intra BC prediction process to the arithmetic operation section 214.

On the other hand, in the case where PU.IntraBCWithAffineflag is 0 that does not indicate the affine transform intra BC prediction process, the intra BC prediction section 405 performs parallel displacement intra BC prediction for a PU of a decoding target. In particular, the intra BC prediction section 405 performs, on the basis of a motion vector of fractional pixel accuracy or integral pixel accuracy in a screen image of one point of the PU of the decoding target, a parallel displacement intra BC prediction process for the PU of the decoding target using a reference image supplied from the interpolation processing section 233 or the selection section 231. The intra BC prediction section 405 supplies a prediction image P generated as a result of the parallel displacement intra BC prediction process to the arithmetic operation section 214.

(Description of Processing of Image Decoding Apparatus)

The image decoding process in the second embodiment of the image decoding apparatus is different from the image decoding process of FIG. 12 in that the encoding parameters to be decoded at step S200 include PS.IntraBCWithAffineflag and PU.IntraBCWithAffineflag and in the intra prediction image generation process at step S209.

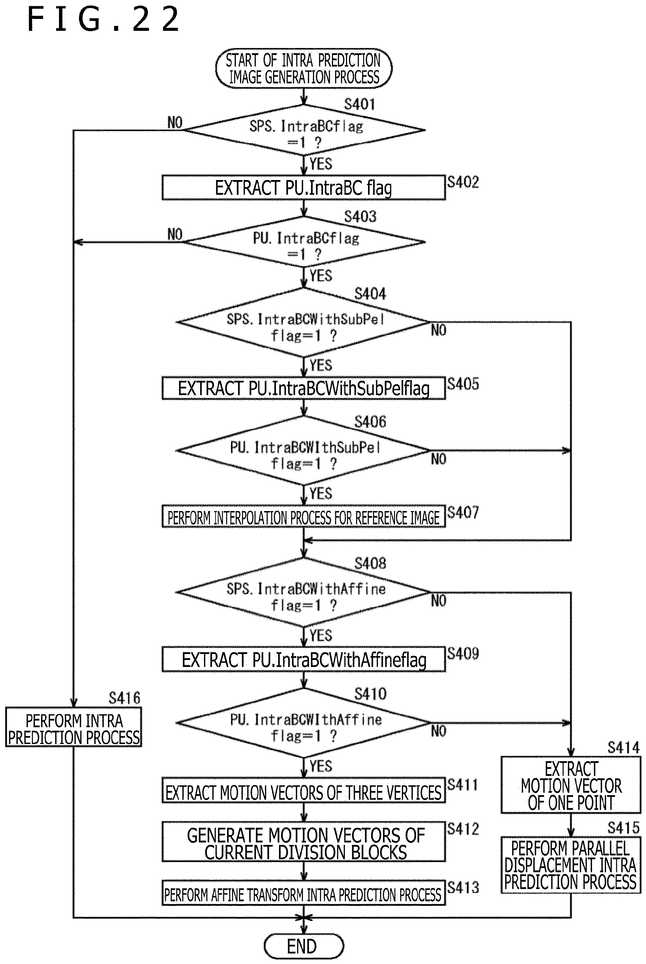

FIG. 22 is a flow chart illustrating the intra prediction image generation process in the second embodiment of the image decoding apparatus.
Processes at steps S401 to S407 of FIG. 22 are similar to the processes at steps S231 to S237 of FIG. 13.
After the process at step S407, the processing advances to step S408. Further, in the case where it is decided at step S404 that SPS.IntraBCWithSubPelflag is not 1 or in the case where it is decided at step S406 that PU.IntraBCWithSubPelflag is not 1, the selection section 231 supplies the reference image to the intra BC prediction section 405. Then, the processing advances to step S408.
At step S408, the intra BC prediction section 405 decides whether SPS.IntraBCWithAffineflag included in the encoding parameters is 1 that indicates that the affine transform intra BC prediction process is to be validated. In the case where it is decided at step S408 that SPS.IntraBCWithAffineflag is 1, the processing advances to step S409.
At step S409, the intra BC prediction section 405 extracts PU.IntraBCWithAffineflag from the prediction information Pinfo. At step S410, the intra BC prediction section 405 decides whether PU.IntraBCWithAffineflag is 1 indicative of the affine transform intra prediction process.
In the case where it is decided at step S410 that PU.IntraBCWithAffineflag is 1, the intra BC prediction section 405 extracts, at step S411, motion vectors of fractional pixel accuracy or integral pixel accuracy in the screen image of three vertices of the PU of the decoding target from the prediction information Pinfo.
At step S412, the intra BC prediction section 405 uses the motion vectors extracted at step S412 to generate motion vectors of fractional pixel accuracy or integral pixel accuracy of the current division blocks.
At step S413, the intra BC prediction section 405 performs, on the basis of the motion vectors of fractional pixel accuracy or integral pixel accuracy of the current division blocks generated at step S413, an affine transform intra prediction process using the reference image supplied from the interpolation processing section 233 or the selection section 231. The intra BC prediction section 405 supplies a prediction image P generated as a result of the affine transform intra BC prediction process to the arithmetic operation section 214 and ends the intra prediction image generation process.
On the other hand, in the case where it is decided at step S408 that SPS.IntraBCWithAffineflag is not 1 or in the case where it is decided at step S410 that PU.IntraBCWithAffineflag is not 1, the processing advances to step S414.
At step S414, the intra BC prediction section 405 extracts a motion vector of fractional accuracy or integral accuracy of one point of the PU of the decoding target from the prediction information Pinfo.
At step S415, the intra BC prediction section 405 performs, on the basis of the motion vector extracted at step S414, a parallel displacement intra prediction process for the PU of the decoding target using the reference image supplied from the interpolation processing section 233 or the selection section 231. The intra BC prediction section 405 supplies a prediction image P generated as a result of the parallel displacement intra BC prediction process to the arithmetic operation section 214 and ends the intra prediction image generation process.
On the other hand, in the case where it is decided at step S401 that SPS.IntraBCflag is not 1 or in the case where it is decided at step S403 that PU.IntraBCflag is not 1, the selection section 231 supplies the reference image to the intra prediction section 232. Then, the processing advances to step S416. Since the process at step S416 is similar to the process at step S240 of FIG. 13, description of the same is omitted.
The second embodiment of the image decoding apparatus can perform the affine transform intra prediction process in such a manner as described above. Accordingly, it is possible to generate a prediction image P in which not only a parallel displacement in a screen image but also a movement in a rotation direction in the screen image or a variation in shape such as expansion, reduction or skew are compensated for. As a result, the accuracy of the intra BC prediction process can be enhanced.
It is to be noted that the affine transform intra prediction process may be validated only in the case where the intra BC prediction process in which a motion vector of fractional pixel accuracy is used is validated.

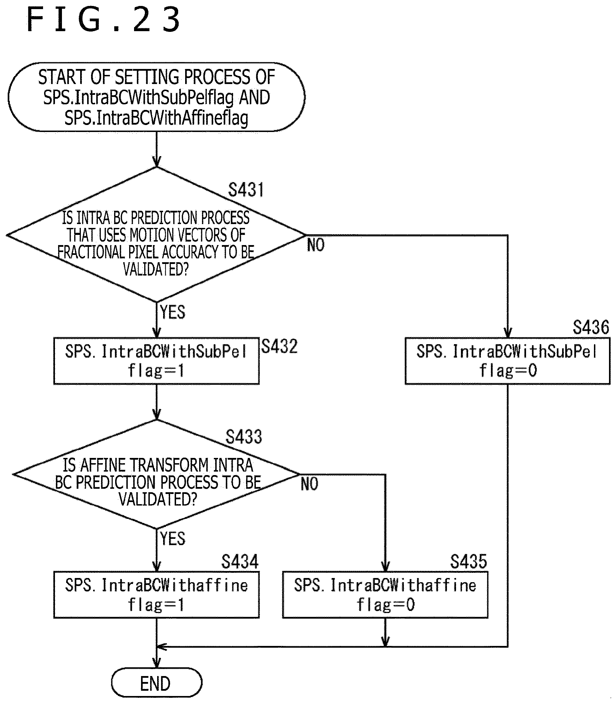

FIG. 23 is a flow chart illustrating a setting process of SPS.IntraBCWithSubPelflag and SPS.IntraBCWithAffineflag in this case.
Processes at steps S431 and S432 of FIG. 23 are similar to the processes at steps S121 and S122 of FIG. 6, and therefore, description of them is omitted.
After the process at step S432, the processing advances to step S433. Processes at steps S433 to S435 are similar to the processes at steps S301 to S303 of FIG. 18, and therefore, description of them is omitted.
Further, in the case where it is decided at step S431 that the intra BC prediction process in which a motion vector of fractional pixel accuracy is used is not to be validated, the processing advances to step S436. The process at step S436 is similar to the process at step S123 of FIG. 6, and therefore, description of the same is omitted.

As depicted in FIG. 23, in the case where the affine transform intra prediction process is validated only in the case where the intra BC prediction process in which a motion vector of fractional pixel accuracy is to be used is validated, SPS.IntraBCWithAffineflag is set only in the case where SPS.IntraBCWithSubPelflag is 1. Accordingly, the intra prediction image generation process in this case is different from the intra prediction image generation process of FIG. 22 in that, in the case where SPS.IntraBCWithSubPelflag is not 1 at step S404, the processing advances to step S414.

Further, while, in the foregoing description, the affine transform intra BC prediction process is validated in the case where SPS.IntraBCWithAffineflag is 1 irrespective of the size of the PU, even in the case where SPS.IntraBCWith-Affineflag is 1, the affine transform intra BC prediction process may be changed over between valid and invalid depending upon the size of the PU.

In this case, in the case where the affine transform intra BC prediction process is invalidated depending upon the size of the PU, even if SPS.IntraBCWithAffineflag is 1, PU.IntraBCWithAffineflag is not set to the encoding parameter. Then, the image decoding apparatus interprets PU.IntraBCWithAffineflag as 0.

(Description of Condition of Size of PU)

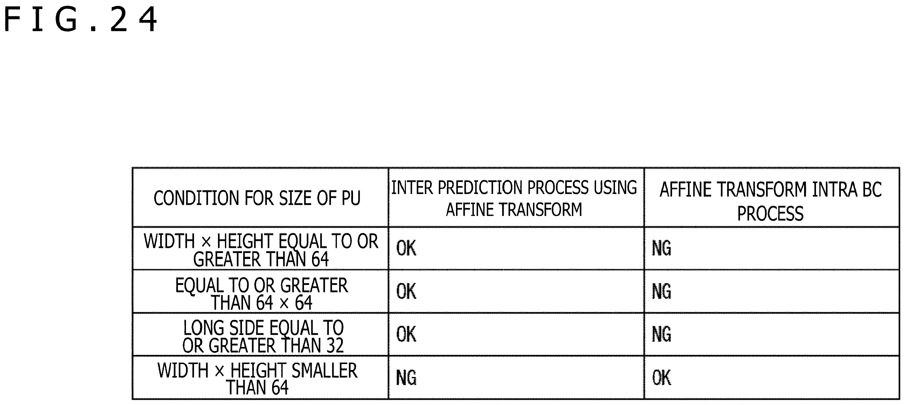

FIG. 24 is a view depicting an example of a relationship between the size of a PU (CU) in the case where the affine transform intra BC prediction process is changed over between valid and invalid depending upon the size of the PU and changeover between valid and invalid of the affine transform intra BC prediction process.

Since the possibility that large blocks having a high similarly therebetween may exist in the same screen image is low, in the case where the size of a PU is comparatively large, the possibility that an effect by the affine transform intra BC prediction process may not be obtained is high. Accordingly, only in the case where, for example, the size of a PU is smaller than a predetermined size, the affine transform intra BC prediction process is validated.

In the example of FIG. 24, in the case where the width (length in the transverse direction) × height (length in the vertical direction) of the PU is equal to or greater than 64 pixels, in the case where the size of the PU is equal to or greater than 64 × 64 pixels or in the case where the long side of the PU is equal to or greater than 32 pixels, the affine transform intra BC prediction process is invalidated (NG). Otherwise, in the case where the width × height of the PU is smaller than 64 pixels, the affine transform intra BC prediction process is validated (OK).

In contrast, between screen images at different points of time, since zoom-in or zoom-out is performed, the possibility that blocks having a high similarity therebetween may exist is high. Accordingly, in the case where the size of the PU is comparatively great, the possibility that an advantageous effect by the inter prediction process in which affine transform is used as disclosed in NPL 2 may be obtained is high.

Therefore, the inter prediction process in which affine transform disclosed in NPL 2 is used is validated only in the case where the width × height of the PU is equal to or greater than 64 pixels as depicted in FIG. 24. As a result, in the case where the size of the PU is equal to or greater than 64 × 64 pixels or in the case where the long side of the PU is equal to or greater than 32 pixels, the inter prediction process in which affine transform is used is validated. Further, in the case where the width × height of the PU is smaller than 64 pixels, the inter prediction process in which affine transform is used is invalidated.

In the case where the affine transform intra BC prediction process is changed over between valid and invalid depending upon the size of the PU, the condition of the PU for changeover to valid is a condition whose possibility that an effect by the affine transform intra BC prediction process may be obtained is high as described above. Accordingly, the necessity to perform the affine transform intra BC prediction process wastefully for a PU in regard to which an effect by the affine transform intra BC prediction process cannot be expected is eliminated, and the overhead can be reduced. Since the affine transform intra BC prediction process is performed on the basis of a plurality of motion vectors, the overhead is great and the reduction effect of the overhead is great.

Further, since the necessity to include PU.IntraBCWithAffineflag of a PU in regard to which an effect by the affine transform intra BC prediction process cannot be expected, namely, of a PU in regard to which it is self-evident that PU.IntraBCWithAffineflag is 0, into an encoded stream is eliminated, the encoding efficiency can be improved.

It is to be noted that the condition of FIG. 24 is one example, and the condition is not limited to this.

Further, the size of a current division block may be changed on the basis of a motion vector. In this case, the height $h_{sub\text{-}block}$ and the width $w_{sub\text{-}block}$ of the current division block are determined, for example, by the following expressions (1) .

[Math. 1]

$$h_{sub-block} = \frac{h_{block}}{\max(|MV0.y - MV1.y|, |MV0.y - MV2.y|)}$$

$$w_{sub-block} = \frac{w_{block}}{\max(|MV0.x - MV1.x|, |MV0.x - MV2.x|)} \quad \cdots (1)$$

It is to be noted that, in the expressions (1), MV0.x and MV0.y are the length in an x direction (transverse direction) and the length in a y direction (vertical direction) of a motion vector of a left upper vertex of the PU of the encoding target, respectively. Further, MV1.x and MV1.y are the length in the x direction and the length in the y direction of a motion vector of a right upper vertex of the PU of the encoding target, respectively. Furthermore, MV2.x and MV2.y are the length in the x direction and the length in the y direction of a motion vector of a left lower vertex of the PU of the encoding target, respectively. Further, $h_{block}$ and $w_{block}$ are the height and the width of the PU of the encoding target, respectively. Furthermore, max(A,B) of the expression (1) is a function that adopts a greater one of A and B.

According to the expression (1), the size of the current division block decreases as the absolute value of the difference between the motion vector of the left upper vertex and the motion vector of the right upper vertex of the PU of the encoding target or as the absolute value of the difference between the motion vector of the left upper vertex and the motion vector of the left lower vertex increases. Accordingly, as the difference between the motion vectors of current division blocks neighboring with each other increases, namely, as the discontinuity of the boundary between the current division blocks increases, the size of the current division blocks decreases.

Further, according to the expression (1), as the size of the PU of the encoding target increases, the size of the current division block increases. Accordingly, as the difference between motion vectors of current division blocks neighboring with each other decreases, the size of the current division blocks increases.

As the size of the current division block decreases, although the accuracy of affine transform increases, the processing amount increases. Accordingly, by changing the size of the current division block on the basis of the motion vector in such a manner as described, both suppression of deterioration of the accuracy of affine transform and reduction of the processing amount can be achieved.

Further, while, in the first and second embodiments, parallel displacement is used to perform an inter prediction process, the inter prediction process may be performed otherwise using affine transform. Further, the number of motion vectors to be used for affine transform is not limited to 3 if it is a plural number. For example, the number may be 2 or 4.

Furthermore, while, in the first and second embodiments, the intra BC prediction process is a prediction process different from the intra prediction process, a mode in which the intra BC prediction process is performed may be provided as one of intra prediction modes such that the intra BC prediction process is performed as the intra prediction process of the intra prediction mode. For example, in the case where the intra prediction mode in which the intra prediction process is performed is one of the 0th to 34th modes defined by HEVC, the intra prediction process of the 35th mode can be made the parallel displacement intra BC prediction process while the intra prediction process of the 36th mode is the affine transform intra BC prediction process. In this case, a motion vector is included in the prediction information Pinfo only when the intra prediction mode is the 35th or 36th mode.

Further, while, in the foregoing description, the intra BC prediction process is included in the process of the intra prediction processing type, it may be included in the process of the inter prediction processing type. In this case, it is indicated by a single piece of mode information pred_mode_flag that the prediction process of a PU is the intra BC prediction process or the inter prediction process.

<Third Embodiment>

(Description of Computer to Which Present Disclosure Is Applied)

While the series of processes described above can be executed by hardware, it may otherwise be executed by software. In the case where the series of processes is executed by software, a program that constructs the software is installed into a computer. Here, the computer includes a computer incorporated in hardware for exclusive use, for example, a personal computer for universal use that can execute various functions by installing various programs, and so forth.

FIG. 25 is a block diagram depicting a configuration example of hardware of a computer that executes the series of processes described hereinabove in accordance with a program.

In the computer 800, a CPU (Central Processing Unit) 801, a ROM (Read Only Memory) 802 and a RAM (Random Access Memory) 803 are connected to each other by a bus 804.

To the bus 804, an input/output interface 810 is connected further. To the input/output interface 810, an inputting section 811, an outputting section 812, a storage section 813, a communication section 814 and a drive 815 are connected.

The inputting section 811 includes a keyboard, a mouse, a microphone and so forth. The outputting section 812 includes a display, a speaker and so forth. The storage section 813 includes a hard disk, a nonvolatile memory and so forth. The communication section 814 includes a network interface or the like. The drive 815 drives a removable medium 821 such as a magnetic disk, an optical disk, a magneto-optical disk, a semiconductor memory or the like.

In the computer 800 configured in such a manner as described above, the CPU 801 loads a program stored, for example, in the storage section 813 into the RAM 803 through the input/output interface 810 and the bus 804 to perform the series of processes described above.

The program that is executed by the computer 800 (CPU 801) can be recorded into and provided as the removable medium 821, for example, as a package medium or the like. Further, the program can be provided through a wired or wireless transmission medium such as a local area network, the Internet, a digital satellite broadcast or the like.

In the computer 800, a program can be installed into the storage section 813 through the input/output interface 810 by mounting a removable medium 821 on the drive 815. Further, the program can be received by the communication section 814 through a wired or wireless transmission medium and installed into the storage section 813. Further, the program can be installed in advance into the ROM 802 or the storage section 813.

It is to be noted that the program executed by the computer 800 may be a program in which processes are performed in time series in accordance with the order described herein or may be a program in which processes are executed in parallel or at a necessary timing such as, for example, when the program is called or the like.

<Fourth Embodiment>

FIG. 26 depicts an example of a schematic configuration of a television apparatus to which the embodiment described hereinabove is applied. The television apparatus 900 includes an antenna 901, a tuner 902, a demultiplexer 903, a decoder 904, a video signal processing section 905, a display section 906, an audio signal processing section 907, a speaker 908, an external interface (I/F) section 909, a control section 910, a user interface (I/F) section 911 and a bus 912.

The tuner 902 extracts a signal of a desired channel from broadcasting signals received through the antenna 901 and demodulates the extracted signal. Then, the tuner 902 outputs an encoded bit stream obtained by the decoding to the demultiplexer 903. In other words, the tuner 902 has a role as a transmission section in the television apparatus 900, which receives an encoded stream in which images are encoded.

The demultiplexer 903 demultiplexes a video stream and an audio stream of a broadcasting program of a viewing target from an encoded bit stream and outputs demultiplexed streams to the decoder 904. Further, the demultiplexer 903 extracts auxiliary data such as an EPG (Electronic Program Guide) from the encoded bit stream and supplies the extracted data to the control section 910. It is to be noted that, in the case where the encoded bit stream is in a scrambled state, the demultiplexer 903 may perform descrambling.

The decoder 904 decodes a video stream and an audio stream inputted from the demultiplexer 903. Then, the decoder 904 outputs video data generated by the decoding process to the video signal processing section 905. Further, the decoder 904 outputs audio data generated by the decoding process to the audio signal processing section 907.

The video signal processing section 905 reproduces video data inputted from the decoder 904 and causes the display section 906 to display a video. Further, the video signal processing section 905 causes the display section 906 to display an application screen image supplied thereto through a network. Further, the video signal processing section 905 may perform an additional process such as, for example, noise removal from video data in response to settings. Furthermore, the video signal processing section 905 may generate an image of a GUI (Graphical User Interface) such as, for example, a menu, a button or a cursor and superpose the generated image on an output image.

The display section 906 is driven by a driving signal supplied from the video signal processing section 905 and displays a video or an image on a video face of a display device (for example, a liquid crystal display, a plasma display or an OELD (Organic ElectroLuminescence Display) (organic EL display) or the like).

The audio signal processing section 907 performs a reproduction process such as D/A conversion and amplification for audio data inputted from the decoder 904 and causes the speaker 908 to output sound. Further, the audio signal processing section 907 may perform an additional process such as noise reduction for the audio data.

The external interface section 909 is an interface for connecting the television apparatus 900 and an external apparatus or a network to each other. For example, a video stream or an audio stream received through the external interface section 909 may be decoded by the decoder 904. In particular, also the external interface section 909 has a role as a transmission section in the television apparatus 900, which receives an encoded stream in which an image is encoded.

The control section 910 includes a processor such as a CPU, and a memory such as a RAM and a ROM. The memory stores therein a program to be executed by the CPU, program data, EPG data, data acquired through a network and so forth. The program stored in the memory is read by the CPU and executed, for example, upon activation of the television apparatus 900. The CPU executes the program to control operation of the television apparatus 900, for example, in response to an operation signal inputted from the user interface section 911.

The user interface section 911 is connected to the control section 910. The user interface section 911 includes, for example, buttons and switches for allowing a user to operate the television apparatus 900, a reception section for a remote controlling signal and so forth. The user interface section 911 detects an operation by a user through the components mentioned to generate an operation signal and outputs the generated operation signal to the control section 910.

The bus 912 connects the tuner 902, demultiplexer 903, decoder 904, video signal processing section 905, audio signal processing section 907, external interface section 909 and control section 910 to each other.

In the television apparatus 900 configured in such a manner as described above, the decoder 904 may have the functions of the image decoding apparatus 200 described hereinabove. In short, the decoder 904 may decode encoded data by the methods described in the foregoing description of the embodiments. This makes it possible for the television apparatus 900 to achieve advantageous effects similar to those of the embodiments described hereinabove with reference to FIGS. 1 to 24.

Further, the television apparatus 900 configured in such a manner as described above may be configured such that the video signal processing section 905 can encode image data supplied, for example, from the decoder 904 and output resulting encoded data to the outside of the television apparatus 900 through the external interface section 909. Further, the video signal processing section 905 may have the functions of the image encoding apparatus 100 described hereinabove. In short, the video signal processing section 905 may encode image data supplied from the decoder 904 by the methods described hereinabove in connection with the embodiments. This makes it possible for the television apparatus 900 to achieve advantageous effects similar to those of the embodiments described hereinabove with reference to FIGS. 1 to 24.

<Fifth Embodiment>

FIG. 27 depicts an example of a schematic configuration of a portable telephone set to which the embodiment described hereinabove is applied. The portable telephone set 920 includes an antenna 921, a communication section 922, an audio codec 923, a speaker 924, a microphone 925, a camera section 926, an image processing section 927, a demultiplexing section 928, a recording/reproduction section 929, a display section 930, a control section 931, an operation section 932 and a bus 933.

The antenna 921 is connected to the communication section 922. The speaker 924 and the microphone 925 are connected to the audio codec 923. The operation section 932 is connected to the control section 931. The bus 933 connects the communication section 922, audio codec 923, camera section 926, image processing section 927, demultiplexing section 928, recording/reproduction section 929, display section 930 and control section 931 to each other.

The portable telephone set 920 performs various operations such as transmission and reception of a voice signal, transmission and reception of an electronic mail or image data, imaging of an image, recording of data and so forth in various operation modes including a speech mode, a data communication mode, an imaging mode and a videophone mode.

In the speech mode, an analog voice signal generated by the microphone 925 is supplied to the audio codec 923. The audio codec 923 converts the analog voice signal into voice data and A/D converts and compresses the voice data after the conversion. Then, the audio codec 923 outputs the compressed voice data to the communication section 922. The communication section 922 encodes and modulates the voice data to generate a transmission signal. Then, the communication section 922 transmits the generated transmission signal to a base station (not depicted) through the antenna 921. Further, the communication section 922 amplifies and frequency converts a wireless signal received through the antenna 921 to acquire a reception signal. Then, the communication section 922 demodulates and decodes the reception signal to generate voice data and outputs the generated voice data to the audio codec 923. The audio codec 923 decompresses and D/A converts the voice data to generate an analog voice signal. Then, the audio codec 923 supplies the generated voice signal to the speaker 924 such that voice is outputted.

Meanwhile, in the data communication mode, for example, the control section 931 generates character data that configure an electronic mail in response to an operation by a user through the operation section 932. Further, the control section 931 controls the display section 930 to display characters thereon. Further, the control section 931 generates electronic mail data in response to a transmission instruction from the user through the operation section 932 and outputs the generated electronic mail data to the communication section 922. The communication section 922 encodes and modulates the electronic mail data to generate a transmission signal. Then, the communication section 922 transmits the generated transmission signal to a base station (not depicted) through the antenna 921. Further, the communication section 922 amplifies and frequency converts a wireless signal received through the antenna 921 to acquire a reception signal. Then, the communication section 922 demodulates and decodes the reception signal to restore electronic mail data and outputs the restored electronic mail data to the control section 931. The control section 931 controls the display section 930 to display the substance of the electronic mail and supplies the electronic mail data to the recording/reproduction section 929 such that the electronic mail data is written into a storage medium of the recording/reproduction section 929.

The recording/reproduction section 929 has an arbitrary readable/writable storage medium. For example, the storage medium may be a built-in type storage medium such as a RAM or a flash memory or may be an externally mounted storage medium such as a hard disk, a magnetic disk, a magneto-optical disk, an optical disk, a USB (Universal Serial Bus) memory or a memory card.

Further, in the imaging mode, for example, the camera section 926 images an imaging object to generate image data and outputs the generated image data to the image processing section 927. The image processing section 927 encodes the image data inputted from the camera section 926 and supplies an encoded stream to the recording/reproduction section 929 such that it is written into a storage medium of the recording/reproduction section 929.

Furthermore, in the image display mode, the recording/reproduction section 929 reads out an encoded stream recorded in a storage medium and outputs the encoded stream to the image processing section 927. The image processing section 927 decodes the encoded stream inputted from the recording/reproduction section 929 and supplies image data to the display section 930 such that an image of the image data is displayed.

Further, in the videophone mode, for example, the demultiplexing section 928 multiplexes a video stream encoded by the image processing section 927 and an audio stream inputted from the audio codec 923 and outputs the multiplexed stream to the communication section 922. The communication section 922 encodes and modulates the stream to generate a transmission signal. Then, the communication section 922 transmits the generated transmission signal to a base station (not depicted) through the antenna 921. Meanwhile, the communication section 922 amplifies and frequency converts a wireless signal received through the antenna 921 to acquire a reception signal. The transmission signal and the reception signal can include an encoded bit stream. Then, the communication section 922 demodulates and decodes the reception signal to restore a stream and outputs the restored stream to the demultiplexing section 928. The demultiplexing section 928 demultiplexes a video stream and an audio stream from the inputted stream and outputs the video stream to the image processing section 927 while it outputs the audio stream to the audio codec 923. The image processing section 927 decodes the video stream to generate video data. The video data is supplied to the display section 930, by which a series of images are displayed. The audio codec 923 decompresses and D/A converts the audio stream to generate an analog voice signal. Then, the audio codec 923 supplies the generated voice signal to the speaker 924 such that voice is outputted from the speaker 924.

In the portable telephone set 920 configured in such a manner as described above, for example, the image processing section 927 may have the functions of the image encoding apparatus 100 described hereinabove. In short, the image processing section 927 may encode image data by any of the methods described hereinabove in connection with the embodiments. This makes it possible for the portable telephone set 920 to achieve advantageous effects similar to those of the embodiments described hereinabove with reference to FIGS. 1 to 24.

Further, in the portable telephone set 920 configured in such a manner as described above, for example, the image processing section 927 may have the functions of the image decoding apparatus 200 described hereinabove. In short, the image processing section 927 may decode encoded data by any of the methods described hereinabove in connection with the embodiments. This makes it possible for the portable telephone set 920 to achieve advantageous effects similar to those of the embodiments described hereinabove with reference to FIGS. 1 to 24.

<Sixth Embodiment>

FIG. 28 depicts an example of a schematic configuration of a recording and reproduction apparatus to which the embodiment described hereinabove is applied. The recording and reproduction apparatus 940 encodes and records, for example, audio data and video data of a received broadcasting program into a recording medium. Further, the recording and reproduction apparatus 940 may encode and record audio data and video data acquired, for example, from a different apparatus into a recording medium. Further, the recording and reproduction apparatus 940 reproduces data recorded in the recording medium on a monitor and a speaker, for example, in response to an instruction of a user. At this time, the recording and reproduction apparatus 940 decodes audio data and video data.

The recording and reproduction apparatus 940 includes a tuner 941, an external interface (I/F) section 942, an encoder 943, an HDD (Hard Disk Drive) section 944, a disk drive 945, a selector 946, a decoder 947, an OSD (On-Screen Display) section 948, a control section 949, and a user interface (I/F) section 950.

The tuner 941 extracts a signal of a desired channel from broadcasting signals received through an antenna (not depicted) and demodulates the extracted signal. Then, the tuner 941 outputs an encoded bit stream obtained by the demodulation to the selector 946. In other words, the tuner 941 has a role as a transmission section in the recording and reproduction apparatus 940.

The external interface section 942 is an interface for connecting the recording and reproduction apparatus 940 and an external apparatus or a network to each other. The external interface section 942 may be, for example, an IEEE (Institute of Electrical and Electronic Engineers) 1394 interface, a network interface, a USB interface, a flash memory interface or the like. For example, video data and audio data received through the external interface section 942 are inputted to the encoder 943. In other words, the external interface section 942 has a role as a transmission section in the recording and reproduction apparatus 940.

The encoder 943 encodes video data and audio data inputted form the external interface section 942 in the case where the video data and the audio data are not in an encoded form. Then, the encoder 943 outputs an encoded bit stream to the selector 946.

The HDD section 944 records an encoded bit stream, in which content data of videos and audios are compressed, various programs and other data on an internal hard disk thereof. Further, upon reproduction of videos and audios, the HDD section 944 reads out such data from the hard disk.

The disk drive 945 performs recording and reading out of data on and from a recording medium loaded therein. The recording medium to be loaded into the disk drive 945 may be, for example, a DVD (Digital Versatile Disc) disk (DVD-Video, DVD-RAM (DVD - Random Access Memory), DVD-R (DVD - Readable), DVD-RW (DVD - Rewritable), DVD+R (DVD + Recordable), DVD+RW (DVD + Rewritable) and so forth) or a Blu-ray (registered trademark) disk or the like.

Upon recording of videos and audios, the selector 946 selects an encoded bit stream inputted from the tuner 941 or the encoder 943 and outputs the selected encoded bit stream to the HDD 944 or the disk drive 945. On the other hand, upon reproduction of videos and audios, the selector 946 outputs an encoded bit stream inputted from the HDD 944 or the disk drive 945 to the decoder 947.

The decoder 947 decodes an encoded bit stream to generate video data and audio data. Then, the decoder 947 outputs the generated video data to the OSD section 948. Meanwhile, the decoder 947 outputs the generated audio data to an external speaker.

The OSD section 948 reproduces video data inputted from the decoder 947 to display a video. Further, the OSD section 948 may superimpose an image of a GUI such as, for example, a menu, a button or a cursor on the video to be displayed.

The control section 949 includes a processor such as a CPU and a memory such as a RAM and a ROM. The memory stores therein a program to be executed by the CPU, program data and so forth. The program recorded in the memory is read into and executed by the CPU, for example, upon activation of the recording and reproduction apparatus 940. The CPU executes the program to control operation of the recording and reproduction apparatus 940 in response to an operation signal inputted, for example, from the user interface section 950.

The user interface section 950 is connected to the control section 949. The user interface section 950 has buttons and switches for allowing, for example, a user to operate the recording and reproduction apparatus 940 and a reception section for a remote controlling signal and so forth. The user interface section 950 detects an operation by the user through the components mentioned to generate an operation signal and outputs the generated operation signal to the control section 949.

In the recording and reproduction apparatus 940 configured in this manner, for example, the encoder 943 may have the functions of the image encoding apparatus 100 described hereinabove. In short, the encoder 943 may encode image data by a method described in connection with the embodiments. This makes it possible for the recording and reproduction apparatus 940 to achieve advantageous effects similar to those of the embodiment described hereinabove with reference to FIGS. 1 to 24.

Further, in the recording and reproduction apparatus 940 configured in this manner, for example, the decoder 947 may have the functions of the image decoding apparatus 200 described hereinabove. In short, the decoder 947 may decode encoded data by any method described in the foregoing description of the embodiments. This makes it possible for the recording and reproduction apparatus 940 to achieve advantageous effects similar to those of the embodiments described hereinabove with reference to FIGS. 1 to 24.

<Seventh Embodiment>

FIG. 29 depicts an example of a schematic configuration of an imaging apparatus to which the embodiment described above is applied. The imaging apparatus 960 images an imaging object to generate an image and encodes and records image data into a recording medium.

The imaging apparatus 960 includes an optical block 961, an imaging section 962, a signal processing section 963, an image processing section 964, a display section 965, an external interface (I/F) section 966, a memory section 967, a media drive 968, an OSD section 969, a control section 970, a user interface (I/F) section 971 and a bus 972.

The optical block 961 is connected to the imaging section 962. The imaging section 962 is connected to the signal processing section 963. The display section 965 is connected to the image processing section 964. The user interface section 971 is connected to the control section 970. The bus 972 couples the image processing section 964, external interface section 966, memory section 967, media drive 968, OSD section 969 and control section 970 to each other.

The optical block 961 has a focus lens, a diaphragm mechanism and so forth. The optical block 961 forms an optical image of an imaging object on an imaging face of the imaging section 962. The imaging section 962 includes an image sensor such as a CCD (Charge Coupled Device) image sensor or a CMOS (Complementary Metal Oxide Semiconductor) image sensor and converts the optical image formed on the imaging face into an image signal as an electric signal by photoelectric conversion. Then, the imaging section 962 outputs the image signal to the signal processing section 963.

The signal processing section 963 performs various camera signal processes such as knee correction, gamma correction and color correction for the image signal inputted from the imaging section 962. The signal processing section 963 outputs image data after the camera signal processes to the image processing section 964.

The image processing section 964 encodes the image data inputted from the signal processing section 963 to generate encoded data. Then, the image processing section 964 outputs the generated encoded data to the external interface section 966 or the media drive 968. Further, the image processing section 964 decodes encoded data inputted from the external interface section 966 or the media drive 968 to generate image data. Then, the image processing section 964 outputs the generated image data to the display section 965. Further, the image processing section 964 may output the image data inputted from the signal processing section 963 to the display section 965 such that an image is displayed on the display section 965. Further, the image processing section 964 may superimpose displaying data acquired from the OSD section 969 with the image to be outputted to the display section 965.

The OSD section 969 generates an image of a GUI such as, for example, a menu, a button or a cursor and outputs the generated image to the image processing section 964.

The external interface section 966 is configured, for example, as USB input/output terminals. The external interface section 966 connects the imaging apparatus 960 and a printer to each other, for example, upon printing of the image. Further, a drive is connected to the external interface section 966 as occasion demands. A removable medium such as, for example, a magnetic disk or an optical disk is mounted on the drive, and a program read out from the removable medium can be installed into the imaging apparatus 960. Further, the external interface section 966 may be configured as a network interface that is connected to a network such as a LAN or the Internet. In particular, the external interface section 966 has a role as a transmission section in the imaging apparatus 960.

The recording medium to be mounted on the media drive 968 may be an arbitrary rewritable removable medium such as, for example, a magnetic disk, a magneto-optical disk, an optical disk or a semiconductor memory. Further, the recording medium may be fixedly mounted on the media drive 968 such that a non-portable storage section like, for example, a built-in hard disk drive or an SSD (Solid State Drive) is configured.

The control section 970 includes a processor such as a CPU and a memory such as a RAM and a RAM. The memory has a program to be executed by the CPU, program data and so forth stored therein. The program stored in the memory is read into and executed by the CPU upon activation of the imaging apparatus 960. The CPU executes the program to control operation of the imaging apparatus 960 in accordance with, for example, an operation signal inputted from the user interface section 971.

The user interface section 971 is connected to the control section 970. The user interface section 971 has, for example, buttons, switches and so forth for operation of the imaging apparatus 960 by the user. The user interface section 971 detects an operation by the user through the components described above to generate an operation signal and outputs the generated operation signal to the control section 970.

In the imaging apparatus 960 configured in such a manner as described above, for example, the image processing section 964 may include the functions of the image encoding apparatus 100 described above. In particular, the image processing section 964 may encode image data by any method described in connection with the embodiments described above. This makes it possible to for the imaging apparatus 960 to achieve advantageous effects similar to those of the embodiments described herein above with reference to FIGS. 1 to 24.

Further, in the imaging apparatus 960 configured in such a manner as described above, for example, the image processing section 964 may include the functions of the image decoding apparatus 200 described hereinabove. In particular, the image processing section 964 may decode encoded data by any method described in connection with the embodiments described above. This makes it possible for the imaging apparatus 960 to achieve effects similar to those of the embodiments described hereinabove with reference to FIGS. 1 to 24.

<Eighth Embodiment>

Further, the present technology can be carried out as any configuration to be incorporated in an arbitrary apparatus or an apparatus configuring a system such as, for example, a processor as a system LSI (Large Scale Integration) or the like, a module in which a plurality of processors or the like are used, a unit in which a plurality of modules are used, a set in which a different function is further added to the unit (namely, part of the configuration of the apparatus). FIG. 30 depicts an example of a schematic configuration of a video set to which the present technology is applied.

In recent years, multifunctionalization of electronic equipment has been and is being advanced, and, in the case where some component is carried out as selling, provision or the like in development or fabrication of the electronic equipment, not only a case in which the component is carried out as a component having one function but also a case in which a plurality of components having functions relating to each other are combined and carried out as one set having a plurality of functions are seen frequently.

A video set 1300 depicted in FIG. 30 has such a multifunctionalized configuration as described above and is an apparatus in which a device having functions relating to encoding and decoding of an image (one of or both encoding and decoding may be applied) and another device having other functions relating to the functions are combined.

As depicted in FIG. 30, the video set 1300 includes a module group including a video module 1311, an external memory 1312, a power management module 1313 and a frontend module 1314 and a device having relating functions such as a connectivity 1321, a camera 1322, a sensor 1323 and so forth.

A module is a part in which several part functions relating to each other are combined so as to have coherent functions. Although a particular physical configuration is arbitrary, a physical configuration is conceivable in which, for example, a plurality of processors individually having functions, electronic circuit devices such as resisters and capacitors, other devices and so forth are disposed and integrated. Also it is conceivable to combine a different module, a processor or the like with a module to produce a new module.

In the case of the example of FIG. 30, the video module 1311 is a combination of components having functions relating to image processing and includes an application processor, a video processor, a broadband modem 1333 and an RF module 1334.

The processor is an integration of a component having a predetermined function with a semiconductor chip by SoC (System On a Chip), and also a processor referred to, for example, as system LSI (Large Scale Integration) or the like is available. The component that has a predetermined function may be a logic circuit (hardware configuration) or may be a CPU, a ROM, a RAM and so forth and a program (software configuration) executed using them or else may be a combination of both of them. For example, the processor may include a logic circuit, a CPU, a ROM, a RAM and so forth such that part of functions are implemented by the logic circuit (hardware configuration) and the remaining part of the functions are implemented by the program to be executed by the CPU (software configuration).

The application processor 1331 of FIG. 30 is a processor that executes an application relating to an image process. In order to implement a predetermined function, the application to be executed by the application processor 1331 not only can perform an arithmetic operation process but also can control, as occasion demands, the components of the inside and the outside of the video module 1311 such as, for example, the video processor 1332.

The video processor 1332 is a processor having functions relating to (one of or both) encoding and decoding of an image.

The broadband modem 1333 converts data (digital signal) to be transmitted by wire or wireless (or both) broadband communication performed through a broadband line such as the Internet or a public telephone network into an analog signal by digital modulation of the data or the like or converts an analog signal received by the broadband communication into data (digital signal) by demodulation of the analog signal. The broadband modem 1333 processes arbitrary information such as, for example, image data to be processed by the video processor 1332, a stream in which image data is encoded, an application program or setting data.

The RF module 1334 is a module that performs frequency conversion, modulation and demodulation, amplification, filter process and so forth for an RF (Radio Frequency) signal sent and received through an antenna. For example, the RF module 1334 performs frequency conversion and so forth for a baseband signal generated by the broadband modem 1333 to generate an RF signal. Further, for example, the RF module 1334 performs frequency conversion and so forth for an RF signal received through the frontend module 1314 to generate a baseband signal.

It is to be noted that, as depicted by a broken line 1341 in FIG. 30, the application processor 1331 and the video processor 1332 may be integrated so as to be configured as one processor.

The external memory 1312 is a module that is provided on the outside of the video module 1311 and has a storage device to be utilized by the video module 1311. While the storage device of the external memory 1312 may be implemented by any physical component, since generally the storage device is frequently utilized for storage of a great amount of data like image data of a frame unit, it is desirable to implement the storage device by a comparatively-low-price and great-capacity semiconductor memory such as, for example, a DRAM (Dynamic Random Access Memory).

The power management module 1313 manages and controls power supply to the video module 1311 (components in the video module 1311).

The frontend module 1314 is a module that provides a frontend function (circuit at a transmission or reception end on the antenna side) to the RF module 1334. As depicted in FIG. 30, for example, the frontend module 1314 includes an antenna section 1351, a filter 1352 and an amplification section 1353.

The antenna section 1351 includes an antenna for transmitting and receiving a wireless signal and peripheral components of the antenna. The antenna section 1351 transmits a signal supplied from the amplification section 1353 as a wireless signal and supplies a received wireless signal as an electric signal (RF signal) to the filter 1352. The filter 1352 performs a filter process and so forth for the RF signal received through the antenna section 1351 and supplies the RF signal after the process to the RF module 1334. The amplification section 1353 amplifies and supplies an RF signal supplied from the RF module 1334 to the antenna section 1351.

The connectivity 1321 is a module having a function relating to connection to the outside. The physical configuration of the connectivity 1321 is arbitrary. For example, the connectivity 1321 has a component having a communication function of a communication standard different from that with which the broadband modem 1333 is compatible, external input/output terminals and so forth.

For example, the connectivity 1321 may include a module having a communication function that complies with a wireless communication standard such as Bluetooth (registered trademark), IEEE 802.11 (for example, Wi-Fi (Wireless Fidelity, registered trademark)), NFC (Near Field Communication) or IrDA (InfraRed Data Association), an antenna for transmitting and receiving a signal that complies with the standard and so forth. Further, for example, the connectivity 1321 may include a module having a communication function that complies with a wire communication standard such as USB (Universal Serial Bus), HDMI (registered trademark) (High-Definition Multimedia Interface) or the like and a terminal that complies with the standard. Furthermore, for example, the connectivity 1321 may include a different data (signal) transmission function or the like such as analog input/output terminals or the like.

It is to be noted that the connectivity 1321 may include a device for a transmission destination of data (signal). For example, the connectivity 1321 may include a drive that performs reading out and writing of data from and into a recording medium such as a magnetic disk, an optical disk, a magneto-optical disk or a semiconductor memory (include not only a drive for a removable medium but also a drive for a hard disk, an SSD (Solid State Drive), an NAS (Network Attached Storage)) or the like. Further, the connectivity 1321 may include an outputting device for an image or sound (a monitor, a speaker or the like).

The camera 1322 is a module having a function for imaging an imaging object to obtain image data of the imaging object. The image data obtained by imaging of the camera 1322 is supplied to and encoded by, for example, the video processor 1332.

The sensor 1323 is a module having an arbitrary sensor function of, for example, a sound sensor, an ultrasonic sensor, an optical sensor, an illumination sensor, an infrared sensor, an image sensor, a rotation sensor, an angle sensor, an angular velocity sensor, a velocity sensor, an acceleration sensor, an inclination sensor, a magnetic identification sensor, a shock sensor, a temperature sensor or the like. Data detected by the sensor 1323 is supplied, for example, to the application processor 1331 and is utilized by an application or the like.

The components described as the modules in the foregoing description may be implemented as a processor, or the component described as a processor may be implemented as a module.

In the video set 1300 having such a configuration as described above, the present technology can be applied to the video processor 1332 as hereinafter described. Accordingly, the video set 1300 can be carried out as a set to which the present technology is applied.

(Configuration Example of Video Processor)

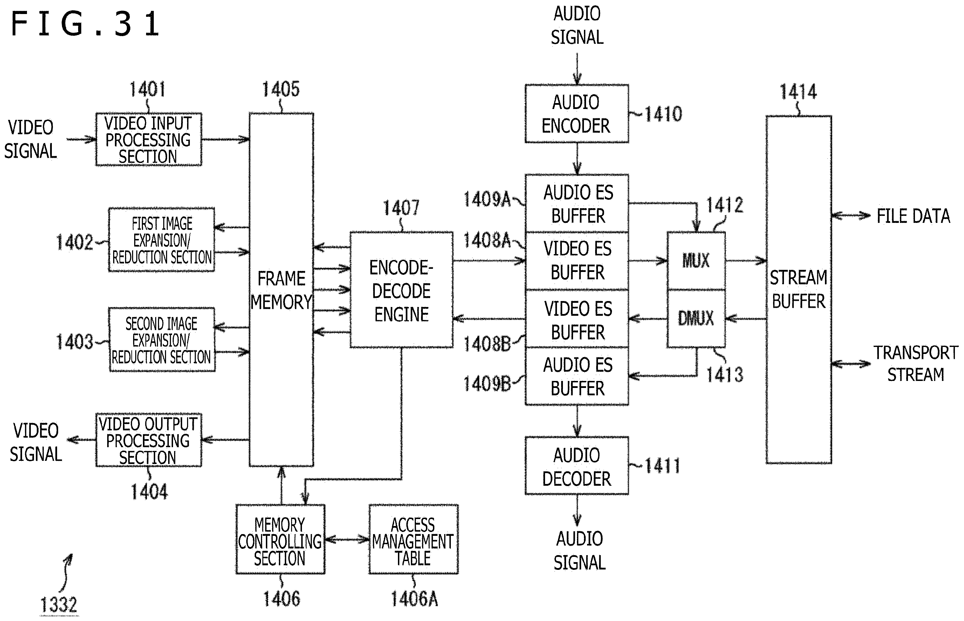

FIG. 31 depicts an example of a schematic configuration of the video processor 1332 (FIG. 30) to which the present technology is applied.

In the case of the example of FIG. 31, the video processor 1332 has a function for receiving an input of a video signal and an audio signal and encoding the signals by a predetermined method and another function for decoding video data and audio data in an encoded form and reproducing and outputting a video signal and an audio signal.

As depicted in FIG. 31, the video processor 1332 includes a video input processing section 1401, a first image expansion/reduction section 1402, a second image expansion/reduction section 1403, a video output processing section 1404, a frame memory 1405 and a memory controlling section 1406. The video processor 1332 further includes an encode/decode engine 1407, video ES (Elementary Stream) buffers 1408A and 1408B, and audio ES buffers 1409A and 1409B. The video processor 1332 further includes an audio encoder 1410, an audio decoder 1411, a multiplexing section (MUX (Multiplexer)) 1412, a demultiplexing section (DMUX (Demultiplexer)) 1413, and a stream buffer 1414.

The video inputting processing section 1401 acquires a video signal inputted, for example, from the connectivity 1321 (FIG. 30) or the like and converts the acquired video signal into digital image data. The first image expansion/reduction section 1402 performs format conversion, an expansion/reduction process of an image and so forth for the image data. The second image expansion/reduction section 1403 performs an expansion/reduction process of an image in accordance with a format at a destination of outputting through the video output processing section 1404, and performs format conversion, an expansion/reduction process of an image or the like similar to that of the first image expansion/reduction section 1402 for the image data. The video output processing section 1404 performs format conversion, conversion into an analog signal and so forth for the image data and outputs resulting data as a reproduced video signal, for example, to the connectivity 1321 and so forth.

The frame memory 1405 is a memory for image data shared by the video inputting processing section 1401, first image expansion/reduction section 1402, second image expansion/reduction section 1403, video output processing section 1404 and encode/decode engine 1407. The frame memory 1405 is implemented as a semiconductor memory such as, for example, a DRAM.

The memory controlling section 1406 receives a synchronizing signal from the encode/decode engine 1407 and controls accessing for writing and reading out to the frame memory 1405 in accordance with an access schedule to the frame memory 1405 written in an access management table 1406A. The access management table 1406A is updated by the memory controlling section 1406 in response to a process executed by the encode/decode engine 1407, first image expansion/reduction section 1402, second image expansion/reduction section 1403 or the like.

The encode/decode engine 1407 performs an encoding process of image data and a decoding process of a video stream that is data encoded from image data. For example, the encode/decode engine 1407 encodes image data read out from the frame memory 1405 and successively writes the encoded image data as a video stream into the video ES buffer 1408A. Further, the encode/decode engine 1407 successively reads out a video stream is, for example, from the video ES buffer 1408B and decodes the video stream, and successively writes the decoded video stream as image data into the frame memory 1405. The encode/decode engine 1407 uses the frame memory 1405 as a working area in the encoding and decoding. Further, the encode/decode engine 1407 outputs a synchronizing signal to the memory controlling section 1406, for example, at a timing at which processing for each macro block is to be started.

The video ES buffer 1408A buffers a video stream generated by the encode/decode engine 1407 and supplies the resulting video stream to the multiplexing section (MUX) 1412. The video ES buffer 1408B buffers a video stream supplied from the demultiplexing section (DMUX) 1413 and supplies the resulting video stream to the encode/decode engine 1407.

The audio ES buffer 1409A buffers an audio stream generated by the audio encoder 1410 and supplies the resulting audio stream to the multiplexing section (MUX) 1412. The audio ES buffer 1409B buffers an audio stream supplied from the demultiplexing section (DMUX) 1413 and supplies the resulting audio stream to the audio decoder 1411.

The audio encoder 1410 performs, for example, digital conversion for an audio signal inputted, for example, from the connectivity 1321 or the like and encodes the resulting audio signal by a predetermined method such as, for example, an MPEG audio method or an AC3 (AudioCode number 3). The audio encoder 1410 successively writes the audio stream that is data encoded from the audio signal into the audio ES buffer 1409A. The audio decoder 1411 decodes an audio stream supplied from the audio ES buffer 1409B and performs, for example, conversion into an analog signal or the like and then supplies the resulting analog signal as a reproduced audio signal, for example, to the connectivity 1321 and so forth.

The multiplexing section (MUX) 1412 multiplexes a video stream and an audio stream. The method of the multiplexing (namely, format of a bit stream generated by multiplexing) is arbitrary. Further, upon such multiplexing, the multiplexing section (MUX) 1412 can also add predetermined header information and so forth to the bit stream. In short, the multiplexing section (MUX) 1412 can convert the format of a stream by multiplexing. For example, the multiplexing section (MUX) 1412 multiplexes a video stream and an audio stream to convert them into a transport stream that is a bit stream of a transfer format. Further, for example, the multiplexing section (MUX) 1412 multiplexes the video stream and the audio stream to convert them into data of a recording file format (file data).

The demultiplexing section (DMUX) 1413 demultiplexes a bit stream, in which a video stream and an audio stream are multiplexed, by a method corresponding to the multiplexing by the multiplexing section (MUX) 1412. In particular, the demultiplexing section (DMUX) 1413 extracts the video stream and the audio stream from the bit stream read out from the stream buffer 1414 (separates the video stream and the audio stream from each other). In short, the demultiplexing section (DMUX) 1413 can convert the format of the stream by the demultiplexing (inverse conversion of the conversion by the multiplexing section (MUX) 1412). For example, the demultiplexing section (DMUX) 1413 can acquire a transport stream supplied, for example, from the connectivity 1321, broadband modem 1333 or the like through the stream buffer 1414 and demultiplex the acquired stream so as to convert it into a video stream and an audio stream. Further, for example, the demultiplexing section (DMUX) 1413 can acquire file data read out from various recording media, for example, by the connectivity 1321 through the stream buffer 1414 and can demultiplex the read out file data so as to convert it into a video stream and an audio stream.

The stream buffer 1414 buffers a bit stream. For example, the stream buffer 1414 buffers a transport stream supplied from the multiplexing section (MUX) 1412 and supplies the buffered transport stream, for example, to the connectivity 1321, broadband modem 1333 or the like at a predetermined timing or on the basis of a request from the outside or the like.

Further, for example, the stream buffer 1414 buffers file data supplied from the multiplexing section (MUX) 1412 and supplies the buffered file data, for example, to the connectivity 1321 or the like so as to be recorded on various recording media at a predetermined timing or on the basis of a request from the outside or the like.

Furthermore, the stream buffer 1414 buffers a transport stream acquired, for example, through the connectivity 1321, broadband modem 1333 or the like and supplies the buffered transport stream to the demultiplexing section (DMUX) 1413 at a predetermined timing or on the basis of a request from the outside or the like.

Further, the stream buffer 1414 buffers file data read out from various recording media, for example, by the connectivity 1321 or the like and supplies the buffered file data to the demultiplexing section (DMUX) 1413 at a predetermined timing or on the basis of a request from the outside or the like.

Now, an example of operation of the video processor 1332 having such a configuration as described above is described. For example, a video signal inputted from the connectivity 1321 or the like to the video processor 1332 is converted into digital image data of a predetermined method such as a 4:2:2Y/Cb/Cr method by the video inputting processing section 1401 and successively written into the frame memory 1405. The digital image data is read out by the first image expansion/reduction section 1402 or the second image expansion/reduction section 1403, subjected to format conversion into that of a predetermined method such as a 4:2:0Y/Cb/Cr method and an expansion/reduction process, and written back into the frame memory 1405. This image data is encoded by the encode/decode engine 1407 and written as a video stream into the video ES buffer 1408A.

Further, an audio signal inputted from the connectivity 1321 or the like to the video processor 1332 is encoded by the audio encoder 1410 and written as an audio stream into the audio ES buffer 1409A.

The video stream of the video ES buffer 1408A and the audio stream of the audio ES buffer 1409A are read out to and multiplexed by the multiplexing section (MUX) 1412, by which they are converted into a transport stream, file data or the like. The transport stream generated by the multiplexing section (MUX) 1412 is buffered by the stream buffer 1414 and then outputted to the external network, for example, through the connectivity 1321, broadband modem 1333 and so forth. Further, the file data generated by the multiplexing section (MUX) 1412 is buffered by the stream buffer 1414, whereafter it is outputted, for example, to the connectivity 1321 or the like and recorded on various recording media.

Further, a transport stream inputted from the external network to the video processor 1332, for example, through the connectivity 1321, broadband modem 1333 or the like is buffered by the stream buffer 1414 and then demultiplexed by the demultiplexing section (DMUX) 1413. Further, file data read out from various recording media, for example, by the connectivity 1321 or the like and inputted to the video processor 1332 is buffered by the stream buffer 1414 and then demultiplexed by the demultiplexing section (DMUX) 1413. In sort, a transport stream or file data inputted to the video processor 1332 is separated into a video stream and an audio stream by the demultiplexing section (DMUX) 1413.

The audio stream is supplied through the audio ES buffer 1409B to and decoded by the audio decoder 1411 such that an audio signal is reproduced. Meanwhile, the video stream is written into the video ES buffer 1408B, and then is successively read out and decoded by the encode/decode engine 1407 and written into the frame memory 1405. The decoded image data is subjected to an expansion/reduction process by the second image expansion/reduction section 1403 and written into the frame memory 1405. Then, the decoded image data is read out by the video output processing section 1404 and subjected to format conversion to a format of a predetermined method such as a 4:2:2Y/Cb/Cr method, whereafter it is converted further into an analog signal such that a video signal is reproduced and outputted.

In the case where the present technology is applied to the video processor 1332 configured as in this manner, it is sufficient if the present technology according to the embodiments described above is applied to the encode/decode engine 1407. In particular, for example, the encode/decode engine 1407 may include the functions of the image encoding apparatus 100 or the functions of the image decoding apparatus 200 described above or both of them. This makes it possible for the video processor 1332 to achieve advantageous effects similar to those of the embodiments described above with reference to FIGS. 1 to 24.

It is to be noted that, in the encode/decode engine 1407, the present technology (namely, the functions of the image encoding apparatus 100 or the functions of the image decoding apparatus 200 or both of them) may be implemented by hardware such as a logic circuit or may be implemented by software such as an embedded program, or may be implemented by both of them.

(Different Configuration Example of Video Processor)

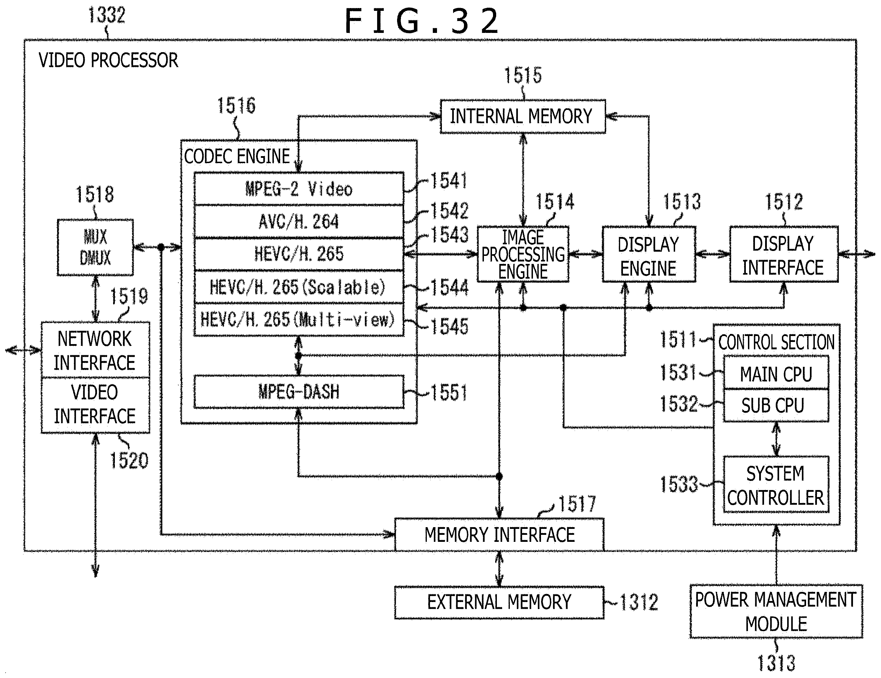

FIG. 32 depicts another example of a schematic configuration of the video processor 1332 to which the present technology is applied. In the case of the example of FIG. 32, a video processor 1332 has a function for encoding and decoding video data by a predetermined method.

More particularly, as depicted in FIG. 32, the video processor 1332 includes a control section 1511, a display interface 1512, a display engine 1513, an image processing engine 1514 and an internal memory 1515. The video processor 1332 further includes a codec engine 1516, a memory interface 1517, a multiplexing and demultiplexing section (MUX DMUX) 1518, a network interface 1519 and a video interface 1520.

The control section 1511 controls operation of processing sections in the video processor 1332 such as the display interface 1512, display engine 1513, image processing engine 1514 and codec engine 1516.

As depicted in FIG. 32, the control section 1511 includes, for example, a main CPU 1531, a sub CPU 1532 and a system controller 1533. The main CPU 1531 executes a program for controlling operation of the processing sections in the video processor 1332 and so forth. The main CPU 1531 generates a control signal in accordance with the program and so forth and supplies the control signal to the processing sections (namely, controls operation of the processing sections). The sub CPU 1532 plays an auxiliary role for the main CPU 1531. For example, the sub CPU 1532 executes a child process, a sub routine and so forth of the program and so forth to be executed by the main CPU 1531. The system controller 1533 controls operation of the main CPU 1531 and the sub CPU 1532 such as designation of a program to be executed by the main CPU 1531 and the sub CPU 1532 or the like.

The display interface 1512 outputs image data, for example, to the connectivity 1321 or the like under the control of the control section 1511. For example, the display interface 1512 converts image data of digital data into an analog signal and outputs the analog signal as a reproduced video signal or outputs the image data of digital data as it is to a monitor apparatus or the like of the connectivity 1321.

The display engine 1513 performs various conversion processes such as format conversion, size conversion and color gamut conversion for image data under the control of the control section 1511 so as to match with hardware specifications for a monitor apparatus for displaying an image.

The image processing engine 1514 performs a predetermined image process such as, for example, a filter process for picture quality improvement for the image data under the control of the control section 1511.

The internal memory 1515 is a memory provided in the inside of the video processor 1332 and shared by the display engine 1513, image processing engine 1514 and codec engine 1516. The internal memory 1515 is utilized, for example, for sending and reception of data performed between the display engine 1513, image processing engine 1514 and codec engine 1516. For example, the internal memory 1515 stores data supplied from the display engine 1513, image processing engine 1514 or codec engine 1516 and supplies the data to the display engine 1513, image processing engine 1514 or codec engine 1516 as occasion demands (for example, in response to a request). While the internal memory 1515 may be implemented by any storage device, since generally the internal memory 1515 is frequently utilized for storage of a small amount of data such as image data in a block unit or a parameter, it is desirable to implement the internal memory 1515 from a semiconductor memory having a high response speed although it has a comparatively small capacity (for example, in comparison with that of the external memory 1312) such as, for example, an SRAM (Static Random Access Memory).

The codec engine 1516 performs a process relating to encoding and decoding of image data. The method of encoding and decoding with which the codec engine 1516 is compatible is arbitrary, and the number of such methods may be one or a plural number. For example, the codec engine 1516 may include a plurality of codec functions for encoding and decoding method such that encoding of image data or decoding of encoded data is performed by selected one of the methods.

In the example depicted in FIG. 32, as functional blocks of a process relating to the codec, the codec engine 1516 includes, for example, an MPEG-2 Video 1541, an AVC/H.264 1542, an HEVC/H.265 1543, an HEVC/H.265 (Scalable) 1544, an HEVC/H.265 (Multi-view) 1545 and an MPEG-DASH 1551.

The MPEG-2 Video 1541 is a functional block that encodes and decodes image data by the MPEG-2 method. The AVC/H.264 1542 is a functional block that encodes and decodes image data by the AVC method. The HEVC/H.265 1543 is a functional block that encodes and decodes image data by the HEVC method. The HEVC/H.265 (Scalable) 1544 is a functional block that performs scalable encoding or scalable encoding for image data by the HEVC method. The HEVC/H.265 (Multi-view) 1545 is a functional block that performs multi-view encoding or multi-view decoding for image data by the HEVC method.

The MPEG-DASH 1551 is a functional block that transmits and receives image data by the MPEG-DASH (MPEG-Dynamic Adaptive Streaming over HTTP) method. The MPEG-DASH is a technology by which streaming of a video is performed using the HTTP (HyperText Transfer Protocol), and it is one of characteristics that suitable encoded data from among a plurality of encoded data prepared in advance and having resolutions or the like different from each other is selected and transmitted in a segment unit. The MPEG-DASH 1551 performs generation of a stream in compliance with the standard, transmission control of the stream and so forth, and utilizes the MPEG-2 Video 1541 to HEVC/H.265 (Multi-view) 1545 described above in encoding and decoding of image data.

The memory interface 1517 is an interface for the external memory 1312. Data supplied from the image processing engine 1514 or the codec engine 1516 is supplied to the external memory 1312 through the memory interface 1517. Further, data read out from the external memory 1312 is supplied to the video processor 1332 (image processing engine 1514 or the codec engine 1516) through the memory interface 1517.

The multiplexing and demultiplexing section (MUX DMUX) 1518 performs multiplexing and demultiplexing of various data relating to an image such as a bit stream of encoded data, image data, a video signal and so forth. The method for the multiplexing and demultiplexing is arbitrary. For example, upon multiplexing, the multiplexing and demultiplexing section (MUX DMUX) 1518 not only can unite a plurality of data into one data but also can add predetermined header information or the like to the data. Further, upon demultiplexing, the multiplexing and demultiplexing section (MUX DMUX) 1518 not only can divide one data into a plurality of data but also can add predetermined header information or the like to each piece of the divisional data. In short, the multiplexing and demultiplexing section (MUX DMUX) 1518 can convert the format of data by multiplexing or demultiplexing. For example, the multiplexing and demultiplexing section (MUX DMUX) 1518 can convert a bit stream into a transport stream that is a bit stream of a format for transfer or data of a file format for recoding (file data) by multiplexing the bit stream. Naturally, inverse conversion to the conversion is possible by demultiplexing.

The network interface 1519 is an interface, for example, for the broadband modem 1333, connectivity 1321 and so forth. The video interface 1520 is an interface, for example, for the connectivity 1321, camera 1322 and so forth.

Now, an example of operation such a video processor 1332 as described above is described. For example, if a transport stream is received from an external network through the connectivity 1321, broadband modem 1333 or the like, then the transport stream is supplied through the network interface 1519 to and demultiplexed by the multiplexing and demultiplexing section (MUX DMUX) 1518 and is decoded by the codec engine 1516. Image data obtained by the decoding of the codec engine 1516 is subjected to a predetermined image process, for example, by the image processing engine 1514, subjected to predetermined conversion by the display engine 1513 and supplied, for example, to the connectivity 1321 or the like through the display interface 1512 such that an image thereof is displayed on a monitor. Further, for example, the image data obtained by the decoding of the codec engine 1516 is re-encoded by the codec engine 1516, multiplexed by the multiplexing and demultiplexing section (MUX DMUX) 1518 so as to be converted into file data, outputted, for example, to the connectivity 1321 or the lie through the video interface 1520 and then recorded on various recording media.

Furthermore, for example, file data of encoded data encoded from image data after read out from a recording medium not depicted by the connectivity 1321 or the like is supplied through the video interface 1520 to and demultiplexed by the multiplexing and demultiplexing section (MUX DMUX) 1518 and decoded by the codec engine 1516. Image data obtained by the decoding of the codec engine 1516 is subjected to a predetermined image process by the image processing engine 1514, subjected to predetermined conversion by the display engine 1513, and supplied, for example, to the connectivity 1321 or the like through the display interface 1512 such that an image is displayed on the monitor. Further, for example, the image data obtained by the decoding of the codec engine 1516 is re-encoded by the codec engine 1516, multiplexed by the multiplexing and demultiplexing section (MUX DMUX) 1518 so as to be converted into a transport stream, supplied, for example, to the connectivity 1321, broadband modem 1333 or the like through the network interface 1519 and then transmitted to a different apparatus not depicted.

It is to be noted that sending and reception of image data or other data between the processing sections in the video processor 1332 are performed, for example, utilizing the internal memory 1515 or the external memory 1312. Further, the power management module 1313 controls power supply, for example, to the control section 1511.

In the case where the present technology is applied to the video processor 1332 configured in this manner, it is sufficient if the present technology according to any embodiment described hereinabove is applied to the codec engine 1516. In short, it is sufficient, for example, if the codec engine 1516 has the functions of the image encoding apparatus 100 or the functions of the image decoding apparatus 200 described hereinabove or both of them. This makes it possible for the video processor 1332 to achieve advantageous effects similar to the embodiments described hereinabove with reference to FIGS. 1 to 24.

It is to be noted that, in the codec engine 1516, the present technology (namely, the functions of the image encoding apparatus 100) may be implemented by hardware such as logic circuits or may be implemented by software such as an embedded program or else may be implemented by both of them.

While two examples of the configuration of the video processor 1332 are exemplified above, the configuration of the video processor 1332 is arbitrary and may be any other than the two examples described above. Further, although the video processor 1332 may be configured as one semiconductor chip, it may otherwise be configured as a plurality of semiconductor chips. For example, the video processor 1332 may be formed as a three-dimensional stacked LSI in which a plurality of semiconductors are stacked. Alternatively, the video processor 1332 may be implemented by a plurality of LSIs.

(Application Example to Apparatus)

The video set 1300 can be incorporated into various apparatus by which image data is processed. For example, the video set 1300 can be incorporated into the television apparatus 900 (FIG. 26), portable telephone set 920 (FIG. 27), recording and reproduction apparatus 940 (FIG. 28), imaging apparatus 960 (FIG. 29) and so forth. By incorporating the video set 1300, the apparatus can achieve advantageous effects similar to those of the embodiments described hereinabove with reference to FIGS. 1 to 24.

It is to be noted that, if even part of the components of the video set 1300 described above includes the video processor 1332, it can be carried out as a configuration to which the present technology is applied. For example, it is possible to carry out only the video processor 1332 as a video processor to which the present technology is applied. Further, it is possible to carry out the processor, video module 1311 and so forth indicated by a broken line 1341 as a processor, a module or the like to which the present technology is applied as described hereinabove. Furthermore, for example, the video module 1311, external memory 1312, power management module 1313 and front end module 1314 are combined so as to be carried out as the video unit 1361 to which the present technology is applied. With any of the configurations, advantageous effects similar to those of the embodiments described hereinabove with reference to FIGS. 1 to 24.

In short, if the video processor 1332 is included, then any configuration can be incorporated into various apparatus that process image data similarly as in the case of the video set 1300. For example, the video processor 1332, processor indicated by the broken line 1341, video module 1311 or video unit 1361 can be incorporated into the television apparatus 900 (FIG. 26), portable telephone set 920 (FIG. 27), recording and reproduction apparatus 940 (FIG. 28), imaging apparatus 960 (FIG. 29) and so forth. Then, by incorporating some of the components to which the present technology is applied into an apparatus, the apparatus can achieve advantageous effects similar to those by the embodiments described hereinabove with reference to FIGS. 1 to 24 similarly as in the case of video set 1300.

<Ninth Embodiment>

Also it is possible to apply the present technology to a network system including a plurality of apparatus. FIG. 33 depicts an example of a schematic configuration of a network system to which the present technology is applied.
The network system 1600 depicted in FIG. 33 is a system in which different apparatus send and receive information relating to an image (video) through a network. A cloud service 1601 of the network system 1600 is a system that provides a service relating to an image (video) to terminals connected for communication thereto such as a computer 1611, an AV (Audio Visual) apparatus 1612, a portable information processing terminal 1613, an IoT (Internet of Things) device 1614 and so forth. For example, the cloud service 1601 provides a supplying service of a content of an image (video) like so-called video distribution (on-demand or live distribution) to the terminals. Further, for example, the cloud service 1601 provides a backup service of receiving and saving a content of an image (video) from the terminals. Further, for example, the cloud service 1601 provides a service of mediating the transfer of a content of an image (video) between the terminals.
The physical configuration of the cloud service 1601 is arbitrary. For example, the cloud service 1601 may include various servers such as a server that stores and manages videos, a server that distributes a video to the terminals, a server that acquires a video from the terminals, and a server that manages users (terminals) and accounting, or an arbitrary network such as the Internet or a LAN.
The computer 1611 includes an information processing apparatus such as, for example, a personal computer, a server or a work station. The AV apparatus 1612 includes an image processing apparatus such as, for example, a television receiver, a hard disk recorder, a game machine or a camera. The portable information processing terminal 1613 includes a portable information processing apparatus such as, for example, a notebook type personal computer, a tablet terminal, a portable telephone set or a smartphone. The IoT device 1614 includes an arbitrary object that performs processing relating to an image such as, for example, a machine, consumer electronics, furniture, some other article, an IC tag or a card type device. All of the terminals mentioned have a communication function and can connect to (establish a session with) the cloud service 1601 to perform sending and reception of information to and from (namely, to perform communication with) the cloud service 1601. Further, each terminal can perform communication also with the other terminals. Communication between the terminals may be performed through the cloud service 1601 or may be performed without the intervention of the cloud service 1601.
The present technology may be applied to such a network system 1600 as described above such that, when data of an image (video) is to be transferred between the terminals or between the terminals and the cloud service 1601, the image data is encoded or decoded in such a manner as described hereinabove in connection the embodiments. In short, the terminals (computer 1611 to IoT device 1614) and the cloud service 1601 may individually have the functions of the image encoding apparatus 100 or the image decoding apparatus 200 described hereinabove. This makes it possible for the terminals (computer 1611 to IoT device 1614) that send and receive image data and the cloud service 1601 to achieve advantageous effects similar to those by the embodiments described hereinabove with reference to FIGS. 1 to 24.
It is to be noted that various kinds of information relating to encoded data (bit stream) may be multiplexed into and transmitted or recorded together with the encoded data or may be transmitted or recorded as separate data associated with the encoded data without being multiplexed with the encoded data. Here, the terminal "associate" signifies to make it possible, for example, when one data is to be processed, to utilize (link with) the other data. In short, data associated with each other may be united into one data or may be individual data. For example, information associated with encoded data (image) may be transmitted on a transmission line separate from that for the encoded data (image). Further, for example, information associated with encoded data (image) may be recorded on a recording medium different from that for the encoded data (image) (or into a recording area of the same recording medium). It is to be noted that this "association" may be not of entire data but of part of data. For example, an image and information corresponding to the image may be associated with each other in an arbitrary unit such as a plurality of frames, one frame or part in a frame.

Further, as described hereinabove, such terms in the present specification as "synthesize," "multiplex," "add," "unite," "include," "store," "put in," "plug in" and "insert" signify to combine multiple thins to one such as, for example, to combine encoded data and metadata into one data and each signifies one method of the "association" described above.

It is to be noted that the advantageous effects described herein are exemplary to the last and are not restrictive, and other advantages may be available.

Further, the embodiment of the present disclosure is not limited to the embodiments described hereinabove, and various alterations are possible without departing from the subject matter of the present disclosure.

For example, division of a CU, a PU and a TU may be only 4 division.

Further, the present disclosure can assume a configuration for cloud computing in which one function is shared by a plurality of apparatus through a network and processed in collaboration.

Further, the steps described hereinabove in connection with the flow charts can be executed by a single apparatus or can be executed by sharing by a plurality of apparatus.

Furthermore, where one step includes a plurality of processes, the plurality of processes included in the one step can be executed by a single apparatus and also can be executed by sharing by a plurality of apparatus.

It is to be noted that the present disclosure can assume such a configuration as described below.

(1) An image processing apparatus, including:
an intra BC prediction section configured to affine transform a block decoded already in an image based on motion vectors in a screen image of a plurality of vertices of a current block of the image to perform an affine transform intra BC prediction process for generating a prediction image of the current block.

(2) The image processing apparatus according to (1) above, in which
the affine transform is performed by parallelly displacing, based on a motion vector for each of current division blocks that have a size smaller than $4 \times 4$ pixels configuring the current block generated using the motion vectors of the plurality of vertices in the screen image, for each of the current division blocks, the decoded block in the image.

(3) The image processing apparatus according to (2) above, in which
the intra BC prediction section determines a size of the current division blocks so as to decrease as the motion vectors of the plurality of vertices in the screen image increases.

(4) The image processing apparatus according to any one of (1) to (3) above, further including:
a motion vector detection section configured to detect the motion vectors of the plurality of vertices in the screen image.

(5) The image processing apparatus according to (4) above, further including:
a setting section configured to set affine transform intra BC prediction process information indicating that the affine transform intra BC prediction process is to be performed.

(6) The image processing apparatus according to (4) above, further including:

an interpolation processing section configured to perform an interpolation process for the decoded image to generate pixel values of fractional pixels of the decoded image, in which
the motion vector detection section detects the motion vectors of the plurality of vertices in the screen image in fractional pixel accuracy based on the pixel values of the fractional pixels of the decoded image generated by the interpolation processing section, and
the decoded block is a block of the pixel values of the fractional pixels of the decoded image generated by the interpolation processing section.

(7) The image processing apparatus according to (6) above, further including:
a setting section configured to set fractional pixel accuracy information indicating that the accuracy of the motion vectors of the plurality of vertices is fractional pixel accuracy.

(8) The image processing apparatus according to (6) or (7) above, further including:

an inter prediction section configured to perform, based on the motion vectors of fractional accuracy of the current block between screen images, an inter prediction process of generating a block of a decoded preceding image that is an image decoded preceding to the image as a prediction image of the current block, in which
the interpolation processing section generates pixel values of fractional pixels of the decoded preceding image by performing an interpolation process for the decoded preceding image, and
the motion vector detection section detects the motion vectors of fractional accuracy of the current block between screen images based on the pixel values of the fractional pixels of the decoded preceding image generated by the interpolation processing section.

(9) The image processing apparatus according to any one of (1) to (3) above, in which
the intra BC prediction section performs the affine transform intra BC prediction process based on affine transform intra BC prediction process information indicating that the affine transform intra BC prediction process is to be performed.

(10) The image processing apparatus according to (9) above, further including:

an interpolation processing section configured to generate pixel values of fractional pixels of the decoded image by performing an interpolation process for the decoded image, in which
the accuracy of the motion vectors of the plurality of vertices in the screen image is fractional pixel accuracy, and
the decoded block is a block of the pixel values of the fractional pixels of the decoded image generated by the interpolation processing section.

(11) The image processing apparatus according to (10) above, in which
the interpolation processing section performs the interpolation process based on fractional pixel accuracy information indicating that the accuracy of the motion vectors of the plurality of vertices is fractional pixel accuracy.

(12) The image processing apparatus according to (1) to (11) above, in which
the intra BC prediction section performs the affine transform intra BC prediction process in the case where an intra BC prediction process in which a motion vector of fractional pixel accuracy is used is be validated.

(13) The image processing apparatus according to any one of (1) to (12) above, in which
the intra BC prediction section performs the affine transform intra BC prediction process in a case where the size of the current block is smaller than a given size.

(14) An image processing method executed by an image processing apparatus, including:
an intra BC prediction step of affine transforming a block decoded already in an image based on motion vectors in a screen image of a plurality of vertices of a current block of the image to perform an affine transform intra BC prediction process for generating a prediction image of the current block.

[Reference Signs List]

101 Control section, 133 Interpolation processing section, 136 Inter prediction section, 233 Interpolation processing section, 304 Motion vector detection section, 305 Intra BC prediction section, 320 Block, 321 to 323 Motion vector, 341 Motion vector, 342 Block, 405 Intra BC prediction section

**Claims**

1. An image processing apparatus, comprising:
an intra BC prediction section configured to affine transform a block decoded already in an image based on motion vectors in a screen image of a plurality of vertices of a current block of the image to perform an affine transform intra BC prediction process for generating a prediction image of the current block.

2. The image processing apparatus according to claim 1, wherein
the affine transform is performed by parallelly displacing, based on a motion vector for each of current division blocks that have a size smaller than 4 × 4 pixels configuring the current block generated using the motion vectors of the plurality of vertices in the screen image, for each of the current division blocks, the decoded block in the image.

3. The image processing apparatus according to claim 2, wherein
the intra BC prediction section determines a size of the current division blocks so as to decrease as the motion vectors of the plurality of vertices in the screen image increases.

4. The image processing apparatus according to claim 1, further comprising:
a motion vector detection section configured to detect the motion vectors of the plurality of vertices in the screen image.

5. The image processing apparatus according to claim 4, further comprising:
a setting section configured to set affine transform intra BC prediction process information indicating that the affine transform intra BC prediction process is to be performed.

6. The image processing apparatus according to claim 4, further comprising:

an interpolation processing section configured to perform an interpolation process for the decoded image to generate pixel values of fractional pixels of the decoded image, wherein

the motion vector detection section detects the motion vectors of the plurality of vertices in the screen image in fractional pixel accuracy based on the pixel values of the fractional pixels of the decoded image generated by the interpolation processing section, and
the decoded block is a block of the pixel values of the fractional pixels of the decoded image generated by the interpolation processing section.

7. The image processing apparatus according to claim 6, further comprising:
a setting section configured to set fractional pixel accuracy information indicating that accuracy of the motion vectors of the plurality of vertices is fractional pixel accuracy.

8. The image processing apparatus according to claim 6, further comprising:

an inter prediction section configured to perform, based on the motion vectors of fractional accuracy of the current block between screen images, an inter prediction process of generating a block of a decoded preceding image that is an image decoded preceding to the image as a prediction image of the current block, wherein
the interpolation processing section generates pixel values of fractional pixels of the decoded preceding image by performing an interpolation process for the decoded preceding image, and
the motion vector detection section detects the motion vectors of fractional accuracy of the current block between screen images based on the pixel values of the fractional pixels of the decoded preceding image generated by the interpolation processing section.

9. The image processing apparatus according to claim 1, wherein
the intra BC prediction section performs the affine transform intra BC prediction process based on affine transform intra BC prediction process information indicating that the affine transform intra BC prediction process is to be performed.

10. The image processing apparatus according to claim 9, further comprising:

an interpolation processing section configured to generate pixel values of fractional pixels of the decoded image by performing an interpolation process for the decoded image, wherein
accuracy of the motion vectors of the plurality of vertices in the screen image is fractional pixel accuracy, and
the decoded block is a block of the pixel values of the fractional pixels of the decoded image generated by the interpolation processing section.

11. The image processing apparatus according to claim 10, wherein
the interpolation processing section performs the interpolation process based on fractional pixel accuracy information indicating that the accuracy of the motion vectors of the plurality of vertices is fractional pixel accuracy.

12. The image processing apparatus according to claim 1, wherein
the intra BC prediction section performs the affine transform intra BC prediction process in a case where an intra BC prediction process in which a motion vector of fractional pixel accuracy is used is be validated.

13. The image processing apparatus according to claim 1, wherein
the intra BC prediction section performs the affine transform intra BC prediction process in a case where a size of the current block is smaller than a given size.

14. An image processing method executed by an image processing apparatus, comprising:
an intra BC prediction step of affine transforming a block decoded already in an image based on motion vectors in a screen image of a plurality of vertices of a current block of the image to perform an affine transform intra BC prediction process for generating a prediction image of the current block.

FIG.1

| QT | Quad-Tree |

| BT | Binary-Tree |

EP 3 522 537 A1

F I G . 2

# F I G . 3

EP 3 522 537 A1

F I G . 4

# FIG.5

START OF IMAGE ENCODING PROCESS

SET ENCODING PARAMETERS — S101

PREDICTION PROCESS — S102

ARITHMETICALLY OPERATE DIFFERENCE BETWEEN IMAGE AND PREDICTION IMAGE — S103

PERFORM TRANSFORM PROCESS — S104

QUANTIZE — S105

DEQUANTIZE — S106

PERFORM INVERSE TRANSFORM PROCESS — S107

ADD TO PREDICTION IMAGE — S108

STORE — S109

ENCODE — S110

END

# F I G . 6

START OF SETTING PROCESS OF
SPS.IntraBCWithSubPelflag

S121

IS INTRA BC PREDICTION PROCESS THAT
USES MOTION VECTORS OF FRACTIONAL
PIXEL ACCURACY TO BE VALIDATED?

NO

YES

SPS.IntraBCWithSubPel
flag=1    S122

SPS.IntraBCWithSubPel
flag=0    S123

END

# FIG.7

```
                    ( START OF PREDICTION PROCESS )
                                  │
                                  ▼
              ┌───────────────────────────────────┐ S140
              │  DETERMINE split flag FOR LCU TO 0 │
              └───────────────────────────────────┘
                                  │
                                  ▼
                                              S141
              ╱─────────────────────────────╲
             ╱    IS SLICE INCLUDING PU       ╲
            ╱      OF ENCODING TARGET          ╲ ──── NO ─────┐
            ╲      AT PRESENT I SLICE?         ╱              │
             ╲─────────────────────────────╱                 ▼
                          │                     ┌──────────────────────────┐ S142
                         YES                    │   PERFORM INTERPOLATION   │
                          │                     │ PROCESS FOR REFERENCE IMAGE│
                          │                     └──────────────────────────┘
                          │                                   │
                          │                                   ▼
                          │                     ┌──────────────────────────────┐ S143
                          │                     │ DETECT MOTION VECTOR OF FRACTIONAL│
                          │                     │ PIXEL ACCURACY BETWEEN SCREEN IMAGES│
                          │                     └──────────────────────────────┘
                          │                                   │
                          │                                   ▼
                          │                     ┌──────────────────────────────┐ S144
                          │                     │ PERFORM INTER PREDICTION PROCESS│
                          │                     └──────────────────────────────┘
                          │                                   │
                          │                                   ▼
                          │                     ┌──────────────────────────┐ S145
                          │                     │  CALCULATE RD COST J_Inter │
                          │                     └──────────────────────────┘
                          │                                   │
                          ▼◄──────────────────────────────────┘
              ┌─────────────────────────────────────┐ S146
              │  PERFORM INTRA PREDICTION PROCESS    │
              └─────────────────────────────────────┘
                                  │
                                  ▼
              ┌─────────────────────────────────────┐ S147
              │    CALCULATE RD COST J_Ang           │
              └─────────────────────────────────────┘
                                  │
                                  ▼                S148
              ╱─────────────────────────────╲
             ╱     IS SPS.IntraBCflag 1?      ╲ ──── NO ──────────┐
             ╲─────────────────────────────╱                     │
                          │                                       │
                         YES                                      │
                          ▼                                       │
        ┌──────────────────────────────────────────┐ S149        │
        │ INTRA BC PREDICTION COST CALCULATION PROCESS│           │
        └──────────────────────────────────────────┘             │
                          │◄──────────────────────────────────────┘
                          ▼
        ┌──────────────────────────────────────────┐ S150
        │ OPTIMUM INTRA PREDICTION DETERMINATION PROCESS│
        └──────────────────────────────────────────┘
                          │
                          ▼
              ┌─────────────────────────────────────┐ S151
              │    DETERMINE OPTIMUM VALUE           │
              └─────────────────────────────────────┘
                          │
                          ▼                S152
              ╱─────────────────────────────╲
             ╱   IS RD COST AT PRESENT LOWER  ╲ ──── NO ──────────┐
             ╲   THAN RETAINED RD COST?       ╱                   │
              ╲─────────────────────────────╱                     │
                          │                                       │
                         YES                                      │
                          ▼                                       │
        ┌──────────────────────────────────────────┐ S153        │
        │ RETAIN RD COST AT PRESENT AND OPTIMUM VALUE│           │
        └──────────────────────────────────────────┘             │
                          │◄──────────────────────────────────────┘
                          ▼                S154
              ╱─────────────────────────────╲
             ╱    HAS LCU BEEN DIVIDED        ╲ ──── NO ──────┐
             ╲    TO THE LAST?                ╱               │
              ╲─────────────────────────────╱                ▼
                          │              ┌──────────────────────────────┐ S155
                         YES             │  DETERMINE split flag FOR PU  │
                          ▼              │  AT PRESENT TO 1              │
                  ( RETURN )             └──────────────────────────────┘
                                                        │
                                                        └──────────────┘
```

# FIG.8

START OF INTRA BC PREDICTION COST
CALCULATION PROCESS

DETECT MOTION VECTOR OF INTEGRAL
PIXEL ACCURACY IN SCREEN IMAGE | S171

PERFORM INTRA BC PREDICTION PROCESS BASED ON MOTION
VECTORS OF INTEGRAL PIXEL ACCURACY IN SCREEN IMAGE | S172

CALCULATE RD COST $J_{IntIBC}$ | S173

SPS.
IntraBCWithSubPel
flag=1 ? | S174

NO

YES

PERFORM INTERPOLATION PROCESS FOR IMAGE | S175

DETECT MOTION VECTORS OF FRACTIONAL
PIXEL ACCURACY IN SCREEN IMAGE | S176

PERFORM INTRA BC PREDICTION PROCESS BASED ON MOTION
VECTORS OF FRACTIONAL PIXEL ACCURACY IN SCREEN IMAGE | S177

CALCULATE RD COST $J_{SubIBC}$ | S178

RETURN

# FIG.9

```
        ┌─────────────────────────────────┐
        │ START OF OPTIMUM INTRA PREDICTION │
        │      DETERMINATION PROCESS        │
        └─────────────────────────────────┘
                      │
                      ▼              S191
              ◇ IS J_Ang LOWEST? ◇ ──NO──────────────────┐
                      │                                    │
                     YES                                   ▼
                      │                            ┌──────────────────┐ S194
                      ▼                            │ PU.IntraBCflag=1 │
        ┌──────────────────────────┐ S192         └──────────────────┘
        │ DETERMINE OPTIMUM VALUE OF│                      │
        │INFORMATION INDICATING INTRA│                     ▼            S195
        │     PREDICTION MODE        │             ◇ IS J_IntIBC LOWEST? ◇ ──NO──┐
        └──────────────────────────┘                      │                      │
                      │                                   YES                     │
                      ▼                                    │                      │
        ┌──────────────────┐ S193                         ▼  S196                 ▼  S197
        │ PU.IntraBCflag=0 │        ┌──────────────────────────────┐  ┌──────────────────────────────┐
        └──────────────────┘        │PU.IntraBCWithSubPelflag=0     │  │PU.IntraBCWithSubPelflag=1     │
                      │              └──────────────────────────────┘  └──────────────────────────────┘
                      │                              │                              │
                      │◄─────────────────────────────┴──────────────────────────────┘
                      ▼
                ┌──────────┐
                │  RETURN  │
                └──────────┘
```

IS $J_{Ang}$ LOWEST?

IS $J_{IntIBC}$ LOWEST?

EP 3 522 537 A1

# FIG.10

FIG.11

# FIG.12

```
( START OF IMAGE DECODING PROCESS )
            │
            ▼
┌─────────────────────────────┐ S200
│           DECODE            │
└─────────────────────────────┘
            │
            ▼
┌─────────────────────────────┐ S201
│           SET CU            │
└─────────────────────────────┘
            │
            ▼
┌─────────────────────────────┐ S202
│         DEQUANTIZE          │
└─────────────────────────────┘
            │
            ▼
┌─────────────────────────────┐ S203
│ PERFORM INVERSE TRANSFORM PROCESS │
└─────────────────────────────┘
            │
            ▼
          S204
      ╱─────────╲
     ╱ IS SLICE   ╲
    ╱  INCLUDING PU OF ╲  YES ──────────────┐
    ╲ DECODING TARGET I SLICE? ╱            │
     ╲                       ╱              │
      ╲─────────╱                           │
            │ NO                            │
            ▼                               │
┌─────────────────────────────┐ S205        │
│     EXTRACT pred_mode_flag   │            │
└─────────────────────────────┘            │
            │                               │
            ▼                               │
          S206                              │
      ╱─────────╲                           │
     ╱ DOES pred_mode_flag ╲                │
    ╱  INDICATE INTER       ╲  NO ──────────┤
    ╲ PREDICTION PROCESS?   ╱               │
     ╲                    ╱                 │
      ╲─────────╱                           │
            │ YES                           │
            ▼                               │
┌─────────────────────────────┐ S207        │
│ PERFORM INTERPOLATION PROCESS │           │
│     FOR REFERENCE IMAGE      │            │
└─────────────────────────────┘            │
            │                               │
            ▼                               ▼
┌─────────────────────────────┐ S208   ┌──────────────────┐ S209
│ PERFORM INTER PREDICTION PROCESS │    │ INTRA PREDICTION IMAGE │
│   BASED ON MOTION VECTORS OF     │    │  GENERATION PROCESS   │
│ FRACTIONAL PIXEL ACCURACY BETWEEN │   └──────────────────┘
│        SCREEN IMAGES             │            │
└─────────────────────────────┘            │
            │◄──────────────────────────────┘
            ▼
┌─────────────────────────────┐ S210
│    ADD TO PREDICTION IMAGE   │
└─────────────────────────────┘
            │
            ▼
┌─────────────────────────────┐ S211
│           STORE             │
└─────────────────────────────┘
            │
            ▼
         ( END )
```

# F I G . 1 3

START OF INTRA PREDICTION IMAGE
GENERATION PROCESS

S231
SPS.
IntraBCflag
=1 ?

NO

YES

EXTRACT PU.IntraBCflag  S232

S233
PU.
IntraBCflag
=1 ?

NO

YES

S234
SPS.
IntraBCWithSubPel
flag=1 ?

NO

YES

EXTRACT
PU.IntraBCWithSubPelflag  S235

S236
PU.
IntraBCWithSubPel
flag=1 ?

NO

YES

S240
PERFORM INTRA
PREDICTION PROCESS

PERFORM INTERPOLATION
PROCESS FOR REFERENCE IMAGE  S237

PERFORM INTRA BC PREDICTION PROCESS
BASED ON MOTION VECTORS OF FRACTIONAL
PIXEL ACCURACY IN SCREEN IMAGE  S238

S239
PERFORM INTRA BC PREDICTION PROCESS
BASED ON MOTION VECTORS OF INTEGRAL
PIXEL ACCURACY IN SCREEN IMAGE

RETURN

# F I G . 1 4

F I G . 1 5

EP 3 522 537 A1

# FIG.16

EP 3 522 537 A1

FIG.17

EP 3 522 537 A1

# FIG.18

START OF SETTING PROCESS OF
SPS.IntraBCWithAffineflag

S301
IS AFFINE TRANSFORM INTRA
BC PREDICTION PROCESS TO BE
VALIDATED?

NO

YES

SPS.IntraBCWithAffine
flag=1
S302

S303
SPS.IntraBCWithAffine
flag=0

END

EP 3 522 537 A1

# FIG.19

START OF INTRA BC PREDICTION COST CALCULATION PROCESS

DETECT MOTION VECTOR OF INTEGRAL PIXEL ACCURACY OF ONE POINT IN SCREEN IMAGE — S321

PERFORM PARALLEL DISPLACEMENT INTRA BC PREDICTION PROCESS BASED ON MOTION VECTOR OF INTEGRAL PIXEL ACCURACY OF ONE POINT IN SCREEN IMAGE — S322

CALCULATE RD COST $L_{IntIBC}$ — S323

SPS. IntraBCWithSubPelflag=1 ? — S324 — NO

YES

PERFORM INTERPOLATION PROCESS FOR IMAGE — S325

DETECT MOTION VECTOR OF FRACTIONAL PIXEL ACCURACY OF ONE POINT IN SCREEN IMAGE — S326

PERFORM PARALLEL DISPLACEMENT INTRA BC PREDICTION PROCESS BASED ON MOTION VECTOR OF FRACTIONAL PIXEL ACCURACY OF ONE POINT IN SCREEN IMAGE — S327

CALCULATE RD COST $J_{SubIBC}$ — S328

SPS. IntraBCWithAffineflag=1 ? — S329 — NO

YES

DETECT MOTION VECTORS OF INTEGRAL PIXEL ACCURACY OF THREE VERTICES IN SCREEN IMAGE — S330

GENERATE MOTION VECTOR OF INTEGRAL PIXEL ACCURACY OF EACH CURRENT DIVISION BLOCK — S331

PERFORM AFFINE TRANSFORM INTRA BC PREDICTION PROCESS BASED ON MOTION VECTORS OF INTEGRAL PIXEL ACCURACY OF CURRENT DIVISION BLOCKS — S332

CALCULATE RD COST $J_{IntAffineIBC}$ — S333

SPS. IntraBCWithSubPelflag=1 ? — S334 — NO

YES

PERFORM INTERPOLATION PROCESS FOR IMAGE — S335

DETECT MOTION VECTORS OF FRACTIONAL PIXEL ACCURACY OF THREE VERTICES IN SCREEN IMAGE — S336

GENERATE MOTION VECTOR OF FRACTIONAL PIXEL ACCURACY OF EACH CURRENT DIVISION BLOCK — S337

PERFORM AFFINE TRANSFORM INTRA BC PREDICTION PROCESS BASED ON MOTION VECTORS OF FRACTIONAL PIXEL ACCURACY OF CURRENT DIVISION BLOCKS — S338

CALCULATE RD COST $J_{SubAffineIBC}$ — S339

RETURN

59

# F I G . 2 0

START OF OPTIMUM INTRA
PREDICTION DETERMINATION PROCESS

S351 IS $J_{Ang}$ LOWEST?

NO

YES

S352 DETERMINE OPTIMUM VALUE OF INFORMATION INDICATING INTRA PREDICTION MODE

S354 PU.IntraBCflag=1

S353 PU.IntraBCflag=0

S355 IS $J_{IntIBC}$ LOWEST?

NO

YES

S357 IS $J_{SubIBC}$ LOWEST?

NO

YES

S356 PU.IntraBCWithSubPelflag=0
PU.IntraBCWithAffineflag=0

S359 IS $J_{IntAffineIBC}$ LOWEST?

NO

YES

S358 PU.IntraBCWithSubPelflag=1
PU.IntraBCWithAffineflag=0

S360 PU.IntraBCWithSubPelflag=0
PU.IntraBCWithAffineflag=1

S361 PU.IntraBCWithSubPelflag=1
PU.IntraBCWithAffineflag=1

RETURN

EP 3 522 537 A1

# F I G . 2 1

EP 3 522 537 A1

# FIG.22

```
        ┌──────────────────────────┐
        │  START OF INTRA PREDICTION │
        │  IMAGE GENERATION PROCESS  │
        └──────────────────────────┘
                     │
                     ▼           S401
    NO   ◇─────────────────────────◇
    ◄────│    SPS.IntraBCflag       │
         │         =1 ?             │
         ◇─────────────────────────◇
                     │ YES
                     ▼
         ┌──────────────────────────┐ S402
         │   EXTRACT PU.IntraBC flag │
         └──────────────────────────┘
                     │           S403
    NO   ◇─────────────────────────◇
    ◄────│    PU.IntraBCflag        │
         │         =1 ?             │
         ◇─────────────────────────◇
                     │ YES
                     ▼              S404
         ◇──────────────────────────◇
         │   SPS.IntraBCWithSubPel    │ NO
         │        flag=1 ?            │────►
         ◇──────────────────────────◇
                     │ YES
                     ▼
         ┌────────────────────────────────┐ S405
         │ EXTRACT PU.IntraBCWithSubPelflag│
         └────────────────────────────────┘
                     │              S406
         ◇──────────────────────────◇
         │    PU.IntraBCWIthSubPel    │ NO
         │        flag=1 ?            │────►
         ◇──────────────────────────◇
                     │ YES
                     ▼
         ┌──────────────────────────────────────────┐ S407
         │ PERFORM INTERPOLATION PROCESS FOR REFERENCE IMAGE │
         └──────────────────────────────────────────┘
                     │              S408
         ◇──────────────────────────◇
         │   SPS.IntraBCWithAffine    │ NO
         │        flag=1 ?            │────►
         ◇──────────────────────────◇
                     │ YES
                     ▼
         ┌────────────────────────────────┐ S409
         │ EXTRACT PU.IntraBCWithAffineflag│
         └────────────────────────────────┘
                     │              S410
         ◇──────────────────────────◇
         │    PU.IntraBCWIthAffine    │ NO
         │        flag=1 ?            │────►
         ◇──────────────────────────◇
                     │ YES
```

S416

```
┌──────────────────────┐
│   PERFORM INTRA        │
│ PREDICTION PROCESS     │
└──────────────────────┘
```

```
┌──────────────────────────────────┐ S411
│ EXTRACT MOTION VECTORS OF THREE VERTICES│
└──────────────────────────────────┘
                │
                ▼
┌──────────────────────────┐ S412
│  GENERATE MOTION VECTORS OF│
│   CURRENT DIVISION BLOCKS  │
└──────────────────────────┘
                │
                ▼
┌──────────────────────────────────────────┐ S413
│ PERFORM AFFINE TRANSFORM INTRA PREDICTION PROCESS│
└──────────────────────────────────────────┘
```

S414
```
┌──────────────────┐
│     EXTRACT       │
│  MOTION VECTOR    │
│  OF ONE POINT     │
└──────────────────┘
        │
        ▼           S415
┌──────────────────┐
│ PERFORM PARALLEL  │
│ DISPLACEMENT INTRA │
│ PREDICTION PROCESS │
└──────────────────┘
```

```
        ┌──────────┐
        │   END     │
        └──────────┘
```

# F I G . 2 3

START OF SETTING PROCESS OF
SPS.IntraBCWithSubPelflag AND
SPS.IntraBCWithAffineflag

S431
IS INTRA BC PREDICTION PROCESS
THAT USES MOTION VECTORS OF
FRACTIONAL PIXEL ACCURACY TO BE
VALIDATED?

NO

YES

SPS. IntraBCWithSubPel
flag=1  S432

S436
SPS. IntraBCWithSubPel
flag=0

S433
IS AFFINE TRANSFORM INTRA
BC PREDICTION PROCESS TO BE
VALIDATED?

NO

YES

S434
SPS. IntraBCWithaffine
flag=1

S435
SPS. IntraBCWithaffine
flag=0

END

# FIG.24

| CONDITION FOR SIZE OF PU | INTER PREDICTION PROCESS USING AFFINE TRANSFORM | AFFINE TRANSFORM INTRA BC PROCESS |
|---|---|---|
| WIDTH × HEIGHT EQUAL TO OR GREATER THAN 64 | OK | NG |
| EQUAL TO OR GREATER THAN 64 × 64 | OK | NG |
| LONG SIDE EQUAL TO OR GREATER THAN 32 | OK | NG |
| WIDTH × HEIGHT SMALLER THAN 64 | NG | OK |

EP 3 522 537 A1

# FIG.25

801  802  803

CPU  ROM  RAM

804

810

INPUT/OUTPUT INTERFACE

| INPUTTING SECTION | OUTPUTTING SECTION | STORAGE SECTION | COMMUNICATION SECTION | DRIVE |

811  812  813  814  815

REMOVABLE MEDIUM  821

800

EP 3 522 537 A1

FIG.26

FIG.27

# FIG.28

# FIG.29

EP 3 522 537 A1

# FIG.30

# FIG.31

VIDEO
SIGNAL

1401
VIDEO INPUT
PROCESSING
SECTION

1405

1402
FIRST IMAGE
EXPANSION/
REDUCTION SECTION

1403
SECOND IMAGE
EXPANSION/
REDUCTION SECTION

FRAME
MEMORY

1407
ENCODE-
DECODE
ENGINE

VIDEO
SIGNAL

1404
VIDEO OUTPUT
PROCESSING
SECTION

1406
MEMORY
CONTROLLING
SECTION

1406A
ACCESS
MANAGEMENT
TABLE

1332

AUDIO
SIGNAL

AUDIO
ENCODER
1410

1409A
AUDIO ES
BUFFER

1408A
VIDEO ES
BUFFER

1408B
VIDEO ES
BUFFER

1409B
AUDIO ES
BUFFER

AUDIO
DECODER
1411

AUDIO
SIGNAL

1412
MUX

DMUX

1413

1414
STREAM
BUFFER

FILE DATA

TRANSPORT
STREAM

EP 3 522 537 A1

# F I G . 3 2

# FIG.33

EP 3 522 537 A1

## INTERNATIONAL SEARCH REPORT

| International application No. |
|---|
| PCT/JP2017/030859 |

**A. CLASSIFICATION OF SUBJECT MATTER**
H04N19/593(2014.01)i, H04N19/119(2014.01)i, H04N19/139(2014.01)i, H04N19/176(2014.01)i

According to International Patent Classification (IPC) or to both national classification and IPC

**B. FIELDS SEARCHED**

Minimum documentation searched (classification system followed by classification symbols)
H04N19/593, H04N19/119, H04N19/139, H04N19/176

Documentation searched other than minimum documentation to the extent that such documents are included in the fields searched

| | |
|---|---|
| Japanese Published Examined Utility Model Applications | 1922-1996 |
| Japanese Published Unexamined Utility Model Applications | 1971-2017 |
| Japanese Examined Utility Model Registrations | 1996-2017 |
| Japanese Registered Utility Model Specifications | 1994-2017 |

Electronic data base consulted during the international search (name of data base and, where practicable, search terms used)
IEEE Xplore

**C. DOCUMENTS CONSIDERED TO BE RELEVANT**

| Category* | Citation of document, with indication, where appropriate, of the relevant passages | Relevant to claim No. |
|---|---|---|
| A | ZOU, F. et al., Improved affine motion prediction, Joint Video Exploration Team (JVET) of ITU-T SG 16 WP 3 and ISO/IEC JTC 1/SC 29/WG11 3rd Meeting: Geneva, CH, 26 May to 01 June 2016, 17 May 2016, JVET-C0062, pp. 1-5 | 1-14 |
| A | ZHANG, Z., SZE, V., Rotate intra block copy for still image coding, Image Processing (ICIP), 2015 IEEE International Conference on 10 December 2015, pp. 4102-4106, INSPEC Accession Number: 15654121 | 1-14 |

☒ Further documents are listed in the continuation of Box C.  ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 22 November 2017 | 05 December 2017 |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

## INTERNATIONAL SEARCH REPORT

International application No.
PCT/JP2017/030859

C (Continuation).    DOCUMENTS CONSIDERED TO BE RELEVANT

| Category* | Citation of document, with indication, where appropriate, of the relevant passages | Relevant to claim No. |
|---|---|---|
| A | ZHANG, K. et al., Symmetric intra block copy, Joint Collaborative Team on Video Coding (JCT-VC) of ITU-T SG16 WP3 and ISO/IEC JTC1/SC29/WG11 17th Meeting: Valencia, ES, 27 March to 04 April 2014, 17 March 2014, JCTVC-Q0082, pp. 1-8 | 1-14 |
| A | RAPAKA, K. et al., On intra block copy merge vector handling, Joint Collaborative Team on Video Coding (JCT-VC) of ITU-T SG16 WP3 and ISO/IEC JTC1/SC29/WG11 22nd Meeting: Geneva, CH, 15-21 Oct. 2015, 06 October 2015, JCTVC-V0049, pp. 1, 2 | 1-14 |

Form PCT/ISA/210 (continuation of second sheet) (January 2015)

**REFERENCES CITED IN THE DESCRIPTION**

**Non-patent literature cited in the description**

- **Z. ZHANG ; V. SZE.** Rotate Intra Block Copy for Still Image Coding. *IEEE International Conference on Image Processing (ICIP),* September 2015

- **FENG ZOU.** Improved affine motion prediction (JVET-C0062). *JVET of ITU-T SG16 WP3 and ISO/IEC JTC1/SC29/WG11,* 26 May 2016